# EUROPEAN PATENT SPECIFICATION

(11) **EP 4 366 351 B1**
(45) Date of publication and mention of the grant of the patent: **28.10.2026**
(21) Application number: 22851604.3
(22) Date of filing: 11.04.2022
(51) Int. Cl.: H04W 12/03, H04W 12/0431, H04W 40/02, H04L 45/00, H04L 9/40

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 03.08.2021 CN 202110885575
(43) Date of publication of application: 08.05.2024
(73) Proprietor: Huawei Technologies Co., Ltd., Longgang Shenzhen, Guangdong 518129 (CN)
(72) Inventor: WANG, Haiguang, Shenzhen, Guangdong 518129 (CN); KANG, Xin, Shenzhen, Guangdong 518129 (CN); LI, Tieyan, Shenzhen, Guangdong 518129 (CN); CHU, Cheng Kang, Shenzhen, Guangdong 518129 (CN); LEI, Zhongding, Shenzhen, Guangdong 518129 (CN)
(74) Representative: Goddar, Heinz J.
(86) International application number: PCT/CN2022/086123
(87) International publication number: WO 2023/010880

(56) References cited:
- CN-A- 102 365 640
- CN-A- 105 184 653
- CN-A- 106 254 069
- CN-A- 112 236 987
- CN-B- 101 888 328
- US-A1- 2009 252 161
- US-A1- 2015 033 347
- BOUKERCHE A ET AL: "An efficient secure distributed anonymous routing protocol for mobile and wireless ad hoc networks", COMPUTER COMMUNICATIONS, ELSEVIER SCIENCE PUBLISHERS BV, AMSTERDAM, NL, vol. 28, no. 10, 16 June 2005 (2005-06-16), pages 1193 - 1203, XP004938679, ISSN: 0140-3664, DOI: 10.1016/J.COMCOM.2004.07.019
- XUAN LIU ET AL: "SeRViTR: A framework for trust and policy management for a secure Internet and its proof-of-concept implementation", 2012 IEEE NETWORK OPERATIONS AND MANAGEMENT SYMPOSIUM (NOMS 2012) : MAUI, HAWAII, USA, 16 - 20 APRIL 2012, IEEE, PISCATAWAY, NJ, 16 April 2012 (2012-04-16), pages 1159 - 1166, XP032448794, ISBN: 978-1-4673-0267-8, DOI: 10.1109/NOMS.2012.6212043
- GUANFENG LIU ; YAN WANG ; MEHMET A. ORGUN ; EE-PENG LIM: "Finding the Optimal Social Trust Path for the Selection of Trustworthy Service Providers in Complex Social Networks", IEEE TRANSACTIONS ON SERVICES COMPUTING, IEEE, USA, vol. 6, no. 2, 1 April 2013 (2013-04-01), USA , pages 152 - 167, XP011512962, ISSN: 1939-1374, DOI: 10.1109/TSC.2011.58

## Description

### TECHNICAL FIELD

The present invention relates to the field of network communication technologies, and in particular, to a data transmission method and a related device.

### BACKGROUND

With continuous development of the internet and rapid popularization of online services, the internet carries huge social and economic values. At the same time, a large quantity of attacks on the internet are triggered. An attacker can exploit vulnerabilities in security and trustworthiness of the internet to launch attacks on high-value information data, resulting in large-scale data leakage and an inestimable economic loss. For example, hijacking of a router causes the YouTube (a social media outlet) website to crash, a nuclear power plant in Iran is attacked by a virus, a network security management software product (SolarWinds) is attacked by a hacker, and the like.

Data leakage, uncertainty of data use, a cyberspace crime, network listening, and another threat are affecting a user's trust in the network. How to ensure user's privacy and property security in the digital revolution is an important challenge for an internet policy maker. After years of efforts, standards organizations such as the IETF (Internet Engineering Task Force, an internet engineering standards organization), the 3GPP (3rd Generation Partnership Project, a cellular network communications protocol standards organization) design many security standards and protocols for network devices such as a router and a base station, which enables the network device to have a preliminary security protection capability. However, due to various limitations, the current network faces a new challenge, that is, how to construct a trusted data forwarding path or transmission route based on a network that is not fully trusted.

In a current solution, a sending end sends path establishment information to a target host, a receiving end sends a trusted path reservation message to the sending end after receiving the path information, and an intermediate router inserts trust level information of the router into the message after receiving the message. After receiving the trusted path reservation message, the sending end matches the trust level information of the router with preconfigured information in a database, to determine whether the path is acceptable, and if the path is acceptable, data transmission is performed based on the path. However, because a current internet router exchange messages by using a BGP (Border Gateway Protocol, a domain name resolution server), a large amount of route request signaling at the sending end may easily cause signaling congestion, thereby forming a DDoS (Distributed denial of service, distributed denial of service) attack on the router. It can be learned that how to provide a trusted data forwarding solution and improve network trustworthiness is still a problem to be urgently resolved in the data transmission.

US 2009/252161 A1 describes methods for routing a data packet based on geospatial information. A data packet is received at a receiving network node, wherein the data packet was transmitted by a source host for transmitting to a destination host. A level of trust for a portion of a network path from the source host to the destination host is determined. The portion of the network path has a geospatial region. The level of trust is based on trust information associated with the geospatial region. Routing information is determined based on the level of trust. A network interface of the receiving network node for transmitting the data packet via a destination network path is identified based on the routing information. The data packet is routed via the identified network interface.
In "An efficient secure distributed anonymous routing protocol for mobile and wireless ad hoc networks" by A. Boukerche et al., ELSEVIER Computer Communications, no. 28 (2005), pp. 1193-1203, a distributed path construction protocol for anonymous communication and wireless ad hoc networks is described. The source node initiates a path establishment process by broadcasting a path discovery message with certain trust requirements to all of neighboring nodes. Intermediate nodes satisfying these trust requirements insert their identification (IDs) and a session key into the path discovery message and forward copies of this message to their selected neighbors until the message gets to its destination. The intermediate nodes encrypt this information before adding it to the message, and only the selected neighbor nodes are able to decrypt it. Once the receiver node receives the message, it retrieves from the message the information about all intermediate nodes, encapsulates this information in a multi-layered message, and sends it along a reverse path in the dissemination tree back to the source node. Each intermediate node along the reverse path removes one encrypted layer from the message, and forwards the message to its ancestor node until the message reaches the source node. When the protocol terminates, the source node ends-up with information about all the trusted intermediate nodes on the discovered route as well as the session keys to encrypt the data transmitted through each of these nodes.

### SUMMARY

Embodiments of this application provide a data transmission method and a related device. Quality of trust (Quality of Trust, QoT) of a business service and a network device is quantized, so that a trusted network route can be constructed for data transmission.

The invention is defined by the independent claims. Advantageous embodiments of the invention are given by the dependent claims. According to a first aspect, an embodiment of this application provides a data transmission method, applied to a first network device, and the method includes:
receiving a first data packet from a terminal device, where the first data packet includes a first QoT level of a service corresponding to the first data packet and a forwarding policy of the first data packet;
obtaining a second QoT level of a second network device; and
sending the first data packet to the second network device based on the first QoT level and the second QoT level and according to the forwarding policy.

It should be noted that "from" may mean direct sending of the terminal device to the first network device, or may mean to send to another network device by the terminal device, and then forwarding of the another network device to the first network device. The first network device may be any network device in a network, and the first data packet may be a complete data packet of a service on a terminal side, or may be a sub-data packet obtained by fragmenting the complete data packet by the terminal device. The first QoT is a QoT of the service corresponding to the first data packet, and the second network device may be any network device other than the first network device in the network.

In this embodiment of this application, trustworthiness attributes of the terminal device, the service on the terminal device side, a core network node, and the network device (such as a base station, a router, and a gateway) in the network are quantized, QoT levels are configured for the terminal device, the service on the terminal device side, the core network node, and the network device, and the data forwarding policy is configured for the service on the terminal device side. When the first network device needs to forward the first data packet from the terminal device, the first network device may determine, based on the first QoT level of the service, the second QoT level of the second network device, and the forwarding policy of the first data packet, whether to send the first data packet to the second network device. For example, if the forwarding policy of the first data packet indicates that the first data packet can be forwarded only to a network device whose QoT level is higher than or equal to the first QoT level, when the second QoT level is higher than or equal to the first QoT level, the first network device sends the first data packet to the second network device. Certainly, there may be a plurality of forwarding policies. This is not limited in this application. It should be understood that, based on the first QoT level and the second QoT level and according to the forwarding policy, the first data packet is sent to the second network device only when the second QoT level satisfies the first QoT level and the forwarding policy, so that network devices selected for routing each time are trusted, thereby facilitating construction of a trusted network route for data transmission.

Before the receiving a first data packet from a terminal device, the method further includes:
sending a first message to the terminal device, where the first message includes a third QoT level of the first network device, and the first data packet is sent by the terminal device based on the first QoT level and the third QoT level and according to the forwarding policy.

The first network device sends the third QoT level of the first network device to the terminal device by using the first message, so that when the terminal device needs to send the first data packet, the terminal device determines, based on the first QoT level and the third QoT level and according to the forwarding policy of the first data packet, whether to send the first data packet to the first network device, thereby facilitating construction of a trusted network route from a sending end to a receiving end for data transmission.

Before the sending a first message to the terminal device, the method further includes: sending first configuration information and a first signature of the first configuration information to a first core network node, so that the first core network node determines the third QoT level based on the first signature and the first configuration information and according to a configuration policy of an operator; and receiving first QoT configuration information from the first core network node, where the first QoT configuration information includes the third QoT level. It should be noted that the first configuration information is software and hardware configuration information of the first network device. For example, the first configuration information includes an identifier, a model, a manufacturer, a factory certificate, a version of used software, and the like of the first network device. The first core network node may be a management node configured for QoT configuration management.

The first network device sends the first configuration information and the first signature of the first configuration information to the first core network node, so that the first core network node verifies the first signature, and when the verification succeeds, configures a QoT level (that is, the third QoT level) for the first network device based on the first configuration information and according to the configuration policy of an operator, and sends the third QoT level to the first network device by using the first QoT configuration information. In this way, the first network device may send the third QoT level to the terminal device and another network device in the network, and the terminal device or the another network device may determine, based on the third QoT level, whether to send data to the first network device.

In some possible implementations, the first message includes any one of a master information block MIB (Master Information Block), a system information block SIB (System Information Block), a beacon (Beacon), and control plane signaling from the first core network node.

In this embodiment of this application, if the first network device is an/a LTE (Long Term Evolution, Long Term Evolution)/5G (5th Generation Mobile Communication Technology, 5th Generation Mobile Communication Technology) network device, the first network device may send the third QoT level to the terminal device and another network device by using broadcast signaling such as the master information block MIB and the system information block SIB. If the first network device is a Wi-Fi AP (Wi-Fi Access Point, wireless network access point), the first network device may send the third QoT level to the terminal device and another network device by using the beacon (Beacon). If an operator worries that sending the third QoT level by using the broadcast signaling such as the master information block MIB, the system information block SIB, and the beacon (Beacon) causes a risk of exposing the third QoT level, the third QoT level may be sent to the terminal device by using the control plane signaling of the first core network node. This helps avoid the risk that sensitive information such as the QoT level of the network device is exposed, and further helps improve security and trustworthiness of the network device.

In some possible implementations, after the sending first configuration information to a first core network node, the method further includes: forwarding a second message from the terminal device to the first core network node, where the second message includes location information of the terminal device, an identifier of a reference network device, and a fourth QoT level of the terminal device, the second message is used to request the first core network node to determine, from the reference network device based on the fourth QoT level, the location information, and a QoT level of the reference network device, a target network device accessible to the terminal device, the reference network device includes a network device in a range determined based on the location information, and the identifier of the reference network device indicates the reference network device.

In this embodiment of this application, if the terminal device needs to obtain the third QoT level of the first network device by using the control plane signaling of the first core network node, the terminal device sends, to the first core network node by using the first network device and the second message, the location information of the terminal device, the identifier of the reference network device (for example, all network devices in the range) in the range determined based on the location information, and the fourth QoT level of the terminal device, so that the first core network node determines, from the reference network device based on the information, the target network device accessible to the terminal device, and sends related information of the target network device to the terminal device by using the control plane signaling, thereby helping avoid an exposure risk caused when the target network device (for example, the first network device) sends sensitive information such as the QoT level of the target network device by using the broadcast signaling.

In some possible implementations, the first message includes the control plane signaling from the first core network node, and the sending a first message to the terminal device includes:
forwarding the control plane signaling from the first core network node to the terminal device, where the control plane signaling from the first core network node includes an identifier and a QoT level of the target network device, and the target network device includes the first network device.

In this embodiment of this application, the first network device sends the control plane signaling from the first core network node to the terminal device, and sends the identifier and the QoT level of the target network device accessible to the terminal device to the terminal device, for example, the first network device, so that when the terminal device needs to send the first data packet, the terminal device can initiate a connection request to the target network device based on information such as the identifier and the QoT level of the target network device, the first QoT level, and the forwarding policy, to perform data transmission. On the one hand, this helps the terminal device select a trusted network device to perform the data transmission. On the other hand, a risk of exposing sensitive information such as the QoT level of the target network device is avoided.

In some possible implementations, the forwarding policy includes at least one of the following:

When the first QoT level is lower than or equal to the second QoT level, sending the first data packet to the second network device;
when the first QoT level is higher than the second QoT level and the service accepts degraded transmission, sending the first data packet to the second network device;
when the first QoT level is higher than the second QoT level, skipping sending the first data packet to the second network device;
when the first QoT level is higher than the second QoT level, fragmenting the first data packet, and sending, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop; and
when the first QoT level is higher than the second QoT level and the second QoT level is higher than or equal to a lowest available QoT level of the first data packet, sending the first data packet to the second network device.

In this embodiment of this application, the forwarding policy may be sending the first data packet to the second network device whose second QoT level is higher than or equal to the first QoT level. Alternatively, the forwarding policy may be degradable transmission. To be specific, if the first QoT level is higher than the second QoT level, but the terminal device configures for the service to accept the degraded transmission, the first network device may send the first data packet to the second network device whose second QoT level is lower than the first QoT level. Alternatively, the forwarding policy may be the fragmentation. In other words, if the first QoT level is higher than the second QoT level, the first network device may fragment the first data packet, and then send the sub-data packets obtained through fragmentation to different network devices, where the different network devices include the second network device, for example, a network device 1 and a network device 2. The network device 1 and the network device 2 separately send, to the core network node whose QoT level is higher than or equal to the first QoT level, the sub-data packets obtained through fragmentation. In this way, the sub-data packets can be sent, through the different paths, to the core network node whose QoT level is higher than or equal to the first QoT level, thereby improving QoT levels of the network device 1 and the network device 2. In addition, because both the network device 1 and the network device 2 receive the sub-data packets, which helps reduce a risk of first data packet leakage, the core network node may combine and restore the received sub-data packets to the first data packet, and forward the first data packet to the next hop. Alternatively, the forwarding policy may specify the lowest available QoT level of the first data packet under the degradable condition, that is, when the second QoT level is lower than the first QoT level and the second QoT level is higher than or equal to the lowest available QoT level, the first data packet may be sent to the second network device. Certainly, the foregoing merely describes examples of the forwarding policy. This application may further include more forwarding policies or a combination of forwarding policies. The first network device may flexibly select, according to the forwarding policy of the first data packet, the second network device to perform data transmission. Therefore, when a trusted network route is constructed, flexibility of the data transmission is further improved.

In some possible implementations, the first QoT level is higher than the third QoT level, and the first data packet is a sub-data packet obtained by fragmenting a data packet of the service by the terminal device; and
the sending the first data packet to the second network device based on the first QoT level and the second QoT level and according to the forwarding policy includes:
sending the first data packet to a second core network node, so that the second core network node obtains the data packet of the service based on the first data packet and a second data packet, and sending the data packet of the service to the second network device based on the first QoT level and the second QoT level and according to the forwarding policy, where
a QoT level of the second core network node is higher than or equal to the first QoT level, the second data packet is a sub-data packet other than the first data packet that is obtained by fragmenting the data packet of the service by the terminal device, the second data packet is sent by a third network device to the second core network node, the first QoT level is higher than a fifth QoT level of the third network device, and the data packet of the service includes the forwarding policy. It should be noted that "the data packet of the service includes the forwarding policy" means that a forwarding policy of the data packet of the service is the same as the forwarding policy of the first data packet.

In this embodiment of this application, when the first QoT level is higher than the third QoT level, the terminal device needs to fragment the data packet of the service according to a fragmentable forwarding policy, and the first data packet is the sub-data packet from the terminal device. The first network device needs to send the first data packet to the second core network node whose QoT level is higher than or equal to the first QoT level, and the third network device sends the second data packet to the second core network node. The second core network node combines and restores all received sub-data packets (the first data packet and the second data packet) to the data packet of the service, and then sends the data packet of the service to the second network device based on the first QoT level and the second QoT level and according to the forwarding policy. In this way, when the first network device and the third network device do not satisfy a forwarding requirement of the data packet of the service, the data packet of the service may be fragmented, the first network device and the third network device separately send the received sub-data packets to the second core network node, and the second core network node sends the data packet of the service to the second network device. Therefore, the QoT level of the first network device and the QoT level of the third network device are improved, and a risk of data packet leakage of the service is reduced.

According to a second aspect, an embodiment of this application provides a data transmission method, applied to a first network device, and the method includes:
receiving a first data packet from a terminal device, where the first data packet is obtained by the terminal device by performing layer-by-layer encryption on to-be-transmitted data by using at least one symmetric key, the at least one symmetric key includes a symmetric key corresponding to a network device on a transmission path of the to-be-transmitted data, the transmission path is determined based on location information of the terminal device, a first QoT level of a service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes the first network device;
decrypting the first data packet by using a target symmetric key to obtain a third data packet, where the target symmetric key is a symmetric key corresponding to the first network device; and
sending the third data packet to a second network device, where the second network device is a next hop of the first network device on the transmission path.

It should be noted that "from" may mean direct sending of the terminal device to the first network device, or may mean to send to another network device by the terminal device, and then forwarding of the another network device to the first network device.

In this embodiment of this application, trustworthiness attributes of the terminal device, the service on a terminal device side, a core network node, and the network device (such as a base station, a router, and a gateway) in a network are quantized, QoT levels are configured for the terminal device, the service on the terminal device side, the core network node, and the network device, and the data forwarding policy is configured for the service on the terminal device side. A first core network node may determine an end-to-end transmission path for the to-be-transmitted data based on the location information of the terminal device, the first QoT level of the service corresponding to the to-be-transmitted data, the QoT level of the network device in the network, the forwarding policy of the to-be-transmitted data, and the receiving end IP address of the to-be-transmitted data, thereby facilitating construction of a trusted network route for data transmission. Because the transmission path is selected by the first core network node, the first network device no longer needs to send a QoT level of the first network device to the terminal device, thereby helping avoid a risk of exposing the QoT level of the first network device. In addition, the terminal device may perform the layer-by-layer encryption on the to-be-transmitted data by using the symmetric key corresponding to the network device on the transmission path. The first network device on the transmission path decrypts the first data packet by using the target symmetric key, to obtain an encrypted third data packet. After decrypting the third data packet, the second network device obtains an encrypted data packet. Because the network device on the transmission path does not know the receiving end IP address of the to-be-transmitted data, the network device can only perform partial decryption and send the data to a next hop, and the next hop can only perform partial decryption, and cannot obtain unencrypted to-be-transmitted data. This helps improve data security. It should be understood that the first core network node may be a management node configured for QoT configuration management.

In some possible implementations, before the receiving a first data packet from a terminal device, the method further includes:
forwarding a route request from the terminal device to a third core network node, where the route request includes the location information, the first QoT level, the forwarding policy, and the receiving end IP address, and the route request is used to request the third core network node to determine the transmission path; and
forwarding a third message from the third core network node to the terminal device, where the third message includes the network device on the transmission path, a certificate of the network device on the transmission path, and a temporary certificate issued by the third core network node to the terminal device.

In this embodiment of this application, the first network device forwards the route request of the terminal device, so that the third core network node selects the transmission path for the to-be-transmitted data based on information in the route request, and sends the network device on the transmission path, the certificate of the network device, and the temporary certificate of the terminal device to the terminal device by using the first network device, which helps the terminal device perform key agreement with a corresponding network device on the transmission path by using the certificate and the temporary certificate, and further helps subsequently perform layer-by-layer encryption on to-be-transmitted data. It should be understood that the third core network node may be a negotiation node configured for QoT route negotiation.

In some possible implementations, the target symmetric key is obtained by the terminal device by performing key agreement with the first network device or a subordinate node of the first network device by using a certificate of the first network device and the temporary certificate; and
the first data packet is obtained by the terminal device by encrypting a first service flow identifier and the third data packet by using the target symmetric key, and the first service flow identifier is obtained by the terminal device by performing the key agreement with the first network device or the subordinate node of the first network device by using the certificate of the first network device and the temporary certificate; and
the method further includes:
   decrypting the first data packet by using the target symmetric key to further obtain the first service flow identifier; and
   the sending the third data packet to a second network device includes:
      when the first service flow identifier is the same as a second service flow identifier stored by the first network device, sending the third data packet to the second network device.

It should be noted that the "subordinate node" refers to a slave node of the first network device. For example, in a master-slave architecture, the first network device is a master node, and the slave node of the first network device is the subordinate node.

In this embodiment of this application, based on a secure link established by the terminal device to the first network device by using the certificate of the first network device and the temporary certificate of the terminal device, the first network device or the subordinate node of the first network device may perform the key agreement with the terminal device. Therefore, the first network device obtains the target symmetric key and the service flow identifier (stored as the second service flow identifier) of the first network device, and the terminal device obtains the target symmetric key and the service flow identifier (stored as the first service flow identifier) of the first network device. This helps the terminal device encrypt the third data packet and the first service flow identifier by using the target symmetric key, thereby improving security of the to-be-transmitted data. In addition, based on the decrypted first service flow identifier, the first network device matches the decrypted first service flow identifier with the stored second service flow identifier. If the decrypted first service flow identifier is the same as the stored second service flow identifier, it indicates that the service flow is a service flow that needs to be processed by the first network device, and the first network device performs an operation of sending the third data packet to the second network device. Otherwise, if the decrypted first service flow identifier is different from the stored second service flow identifier, it indicates that the service flow is not a service flow processed by the first network device, and the first network device may not send the third data packet to the second network device. This helps avoid incorrect data forwarding.

In some possible implementations, the method further includes:
storing first context, where the first context is context in which the terminal device performs the key agreement with the first network device, and the first context includes the second service flow identifier and the target symmetric key; or
receiving and storing second context sent by the subordinate node, where the second context is context in which the terminal device performs the key agreement with the subordinate node, and the second context includes the second service flow identifier and the target symmetric key.

In this embodiment of this application, if the first network device performs the key agreement with the terminal device, the first network device needs to store the first context, or if the subordinate node of the first network device performs the key agreement with the terminal device, the subordinate node needs to store the second context, and sends the second context to the first network device for storage. Therefore, when subsequently receiving the first data packet, the first network device may perform decryption by using the target symmetric key, and forward the third data packet to the next hop when the second service flow identifier is the same as the first service flow identifier, thereby facilitating secure forwarding of the to-be-transmitted data on the transmission path.

In some possible implementations, before the forwarding a route request from the terminal device to a third core network node, the method further includes:
sending first configuration information and a first signature of the first configuration information to a first core network node, so that the first core network node determines a third QoT level based on the first signature and the first configuration information and according to a configuration policy of an operator, and obtaining the transmission path based on the third QoT level. It should be noted that the first configuration information is software and hardware configuration information of the first network device. For example, the first configuration information includes an identifier, a model, a manufacturer, a factory certificate, a version of used software, and the like of the first network device. The first core network node may be a management node configured for QoT configuration management.

In this embodiment of this application, the first network device may send the first configuration information and the first signature of the first configuration information to the first core network node, so that the first core network node verifies the first signature, and when the verification succeeds, configures a QoT level (that is, the third QoT level) for the first network device based on the first configuration information and according to the configuration policy of an operator, to select the transmission path for the to-be-transmitted data based on the third QoT level. Therefore, the first network device only needs to forward the third data packet based on the transmission path after decrypting the third data packet, and does not need to perform a path selection operation, which helps reduce overheads of the first network device.

In some possible implementations, the forwarding policy includes at least one of the following:

When the first QoT level is lower than or equal to a second QoT level, sending the first data packet to the second network device;
when the first QoT level is higher than the second QoT level and the service accepts degraded transmission, sending the first data packet to the second network device;
when the first QoT level is higher than the second QoT level, skipping sending the first data packet to the second network device;
when the first QoT level is higher than the second QoT level, fragmenting the first data packet, and sending, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop; and
when the first QoT level is higher than the second QoT level and the second QoT level is higher than or equal to a lowest available QoT level of the first data packet, sending the first data packet to the second network device.

In this embodiment of this application, the forwarding policy may be sending the first data packet to the second network device whose second QoT level is higher than or equal to the first QoT level. Alternatively, the forwarding policy may be degradable transmission. To be specific, if the first QoT level is higher than the second QoT level, but the terminal device configures for the service to accept the degraded transmission, the first network device may send the first data packet to the second network device whose second QoT level is lower than the first QoT level. Alternatively, the forwarding policy may be the fragmentation. In other words, if the first QoT level is higher than the second QoT level, the first network device may fragment the first data packet, and then send the sub-data packets obtained through fragmentation to different network devices, where the different network devices include the second network device, for example, a network device 1 and a network device 2. The network device 1 and the network device 2 separately send, to the core network node whose QoT level is higher than or equal to the first QoT level, the sub-data packets obtained through fragmentation. In this way, the sub-data packets can be sent, through the different paths, to the core network node whose QoT level is higher than or equal to the first QoT level, thereby improving QoT levels of the network device 1 and the network device 2. In addition, because both the network device 1 and the network device 2 receive the sub-data packets, which helps reduce a risk of first data packet leakage, the core network node may combine and restore the received sub-data packets to the first data packet, and forward the first data packet to the next hop. Alternatively, the forwarding policy may specify the lowest available QoT level of the first data packet under the degradable condition, that is, when the second QoT level is lower than the first QoT level and the second QoT level is higher than or equal to the lowest available QoT level, the first data packet may be sent to the second network device. Certainly, the foregoing merely describes examples of the forwarding policy. This application may further include more forwarding policies or a combination of forwarding policies. The first network device may flexibly select, according to the forwarding policy of the first data packet, the second network device to perform data transmission. Therefore, when a trusted network route is constructed, flexibility of the data transmission is further improved.

According to a third aspect, an embodiment of this application provides a data transmission method, applied to a terminal device, and the method includes:
obtaining a first QoT level of a current service and a forwarding policy of a first data packet of the service;
obtaining a third QoT level of a first network device; and
sending the first data packet to the first network device based on the first QoT level, according to the forwarding policy, and based on the third QoT level.

It should be noted that the first network device may be any network device in a network, and the first data packet may be a complete data packet of a service on a terminal side, or may be a sub-data packet obtained by fragmenting the complete data packet by the terminal device.

In this embodiment of this application, trustworthiness attributes of the terminal device, the service on the terminal device side, a core network node, and the network device (such as a base station, a router, and a gateway) in the network are quantized, QoT levels are configured for the terminal device, the service on the terminal device side, the core network node, and the network device, and the data forwarding policy is configured for the service on the terminal device side. The current service is a service that is being executed on the terminal device side, for example, a call service. When the terminal device needs to send the first data packet generated in the current service, the terminal device may determine, based on the first QoT level of the service and the third QoT level of the first network device and according to the forwarding policy of the first data packet, whether to send the first data packet to the first network device. It should be understood that, based on the first QoT level and the third QoT level and according to the forwarding policy, the first data packet is sent to the first network device only when the third QoT level satisfies the first QoT level and the forwarding policy, so that all selected first network devices are trusted, thereby facilitating construction of a trusted network route for data transmission.

Before the obtaining a first QoT level of a current service and a forwarding policy of a first data packet of the service, the method further includes:
receiving a first message sent by the first network device, where the first message includes the third QoT level; and
storing the third QoT level, where
the third QoT level is determined by a first core network node based on first configuration information of the first network device and a first signature of the first configuration information and according to a configuration policy of an operator.

The terminal device obtains the third QoT level of the first network device by using the first message sent by the first network device, so that when the terminal device needs to send the first data packet, the terminal device may determine, based on the first QoT level and the third QoT level and according to the forwarding policy of the first data packet, whether to send the first data packet to the first network device, thereby facilitating construction of a trusted network route from a sending end to a receiving end for data transmission. It should be understood that the first core network node may be a management node configured for QoT configuration management.

In some possible implementations, after the storing the third QoT level, the method further includes:
accessing a network and sending registration signaling to a control plane node on a network side by using the first network device, where the registration signaling includes a QoT service policy of the terminal device and a lowest QoT level required by the terminal device, the QoT service policy is used to determine a data forwarding policy for an application on the terminal device, and the application includes a target application corresponding to the service; and
receiving a fourth message that is from the control plane node and that is forwarded by the first network device, where the fourth message includes a highest QoT level provided by the network, the fourth message is sent when the control plane node determines to accept registration of the terminal device according to the QoT service policy and based on the lowest QoT level, or based on subscription information of the terminal device on the network side, and the highest QoT is used to determine that the target application is available.

In this embodiment of this application, the terminal device sends the registration signaling to the control plane node by using the first network device, and sends the preconfigured QoT service policy and the required lowest QoT level to the control plane node. The control plane node determines to accept the registration of the terminal device according to the QoT service policy and based on the lowest QoT level, or based on the subscription information of the terminal device on the network side, and sends, to the terminal device by using the first network device and the fourth message, the highest QoT level that can be provided by the network, so that the terminal device determines, based on the highest QoT level, which applications are available on the terminal device, and performs permission setting and modification, for example, enabling or disabling, for the application on the terminal device.

In some possible implementations, the first message includes any one of a master information block MIB, a system information block SIB, a beacon (Beacon), and control plane signaling from the first core network node.

In this embodiment of this application, if the first network device is an/a LTE/5G network device, the first network device may send the third QoT level to the terminal device and another network device by using broadcast signaling such as the master information block MIB and the system information block SIB. If the first network device is a Wi-Fi AP, the first network device may send the third QoT level to the terminal device and another network device by using the beacon (Beacon). If the operator worries that sending the third QoT level by using the broadcast signaling such as the master information block MIB, the system information block SIB, and the beacon (Beacon) brings about a risk of exposing the third QoT level, the third QoT level may be sent to the terminal device by using the control plane signaling of the first core network node. This helps avoid the risk that sensitive information such as the QoT level of the network device is exposed, and further helps improve security and trustworthiness of the network device.

In some possible implementations, after the receiving a fourth message that is from the control plane node and that is forwarded by the first network device, the method further includes:
sending a second message to the first core network node by using the first network device, where the second message includes location information of the terminal device, an identifier of a reference network device, and a fourth QoT level of the terminal device, the second message is used to request the first core network node to determine, from the reference network device based on the fourth QoT level, the location information, and a QoT level of the reference network device, a target network device accessible to the terminal device, the reference network device includes a network device in a range determined based on the location information, and the identifier of the reference network device indicates the reference network device.

In this embodiment of this application, if the terminal device needs to obtain the third QoT level of the first network device by using the control plane signaling of the first core network node, the terminal device sends, to the first core network node by using the first network device and the second message, the location information of the terminal device, the identifier of the reference network device (for example, one or more network devices in the range) in the range determined based on the location information, and the fourth QoT level of the terminal device, so that the first core network node determines, from the reference network device based on the information, the target network device accessible to the terminal device, and sends related information of the target network device to the terminal device by using the control plane signaling, thereby helping avoid an exposure risk caused when the target network device sends sensitive information such as the QoT level of the target network device by using the broadcast signaling.

In some possible implementations, the first message includes the control plane signaling from the first core network node, and the receiving a first message sent by the first network device includes:
receiving the control plane signaling that is from the first core network node and that is forwarded by the first network device, where the control plane signaling from the first core network node includes an identifier and a QoT level of the target network device, and the target network device includes the first network device.

In this embodiment of this application, the terminal device can obtain the accessible target network device and the QoT level of the target network device by using the control plane signaling from the first core network node. When the terminal device needs to send the first data packet, the terminal device can initiate a connection request to the target network device based on information such as the identifier and the QoT level of the target network device, the first QoT level, and the forwarding policy, to perform data transmission. On the one hand, this helps the terminal device select a trusted network device (for example, the first network device) to perform the data transmission. On the other hand, a risk of exposing sensitive information such as the QoT level of the target network device is avoided.

In some possible implementations, the forwarding policy includes at least one of the following:

When the first QoT level is lower than or equal to the third QoT level, sending the first data packet to the first network device;
when the first QoT level is higher than the third QoT level and the service accepts degraded transmission, sending the first data packet to the first network device;
when the first QoT level is higher than the third QoT level, skipping sending the first data packet to the first network device;
when the first QoT level is higher than the third QoT level, fragmenting the first data packet, and sending, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop; and
when the first QoT level is higher than the third QoT level and the third QoT level is higher than or equal to a lowest available QoT level of the first data packet, sending the first data packet to the first network device.

In this embodiment of this application, the forwarding policy may be sending the first data packet to the first network device whose third QoT level is higher than or equal to the first QoT level. Alternatively, the forwarding policy may be degradable transmission. In other words, if the first QoT level is higher than the third QoT level, but the terminal device configures for the service to accept the degraded transmission, the terminal device may send the first data packet to the first network device whose third QoT level is lower than the first QoT level. Alternatively, the forwarding policy may be the fragmentation. In other words, if the first QoT level is higher than the third QoT level, the terminal device may fragment the first data packet, and then send the sub-data packets obtained through fragmentation to different network devices, where the different network devices include the first network device, for example, a network device a and a network device b. The network device a and the network device b separately send, to the core network node whose QoT level is higher than or equal to the first QoT level, the sub-data packets obtained through fragmentation. In this way, the sub-data packets can be sent, through the different paths, to the core network node whose QoT level is higher than or equal to the first QoT level, thereby improving QoT levels of the network device a and the network device b. In addition, because both the network device a and the network device b receive the sub-data packets, which helps reduce a risk of first data packet leakage, the core network node may combine and restore the received sub-data packets to the first data packet, and forward the first data packet to the next hop. Alternatively, the forwarding policy may specify the lowest available QoT level of the first data packet under a degradable condition, that is, when the third QoT level is lower than the first QoT level and the third QoT level is higher than or equal to the lowest available QoT level, the first data packet may be sent to the first network device. Certainly, the foregoing merely describes examples of the forwarding policy. This application may further include more forwarding policies or a combination of forwarding policies. The terminal device may flexibly select, according to the forwarding policy of the first data packet, the first network device to perform data transmission. Therefore, when a trusted network route is constructed, flexibility of the data transmission is further improved.

In some possible implementations, the first data packet is a sub-data packet obtained by fragmenting a data packet of the service by the terminal device; and
after the receiving a fourth message that is from the control plane node and that is forwarded by the first network device, the method further includes:
obtaining a fifth QoT level of a third network device, where the fifth QoT level is obtained based on a fifth message sent by the third network device; and
if the first QoT level is higher than the third QoT level and the fifth QoT level, fragmenting the data packet of the service, to obtain the first data packet and a second data packet, where the second data packet is a sub-data packet other than the first data packet that is obtained by fragmenting the data packet of the service by the terminal device, and the data packet of the service includes the forwarding policy; and
the method further includes:
   sending the second data packet to the third network device based on the first QoT level, according to the forwarding policy, and based on the fifth QoT level. It should be noted that "the data packet of the service includes the forwarding policy" means that a forwarding policy of the data packet of the service is the same as the forwarding policy of the first data packet.

In this embodiment of this application, when the first QoT level is higher than the third QoT level and the fifth QoT level, the terminal device needs to fragment the data packet of the service according to a fragmentable forwarding policy, to obtain the first data packet and the second data packet, and separately sends the first data packet and the second data packet to the first network device and the third network device. The first network device and the third network device separately send the first data packet and the second data packet to a second core network node whose QoT level is higher than or equal to the first QoT level. The second core network node combines and restores all received sub-data packets (the first data packet and the second data packet) to the data packet of the service. In this way, when the first network device and the third network device do not satisfy a forwarding requirement of the data packet of the service, the data packet of the service may be fragmented, the first network device and the third network device separately send the received sub-data packets to the second core network node, and the second core network node sends the data packet of the service to a next hop. Therefore, the QoT level of the first network device and the QoT level of the third network device are improved, and a risk of data packet leakage of the service is reduced.

In some possible implementations, before the receiving a first message sent by the first network device, the method further includes:
determining a QoT level of the application based on QoT grading in preset second QoT configuration information, where the second QoT configuration information includes the QoT service policy; and
determining the data forwarding policy of the application according to the QoT service policy and based on the QoT level of the application, where
the fourth QoT level of the terminal device is determined based on the QoT grading. It should be noted that "preset" means that the second QoT configuration information may be configured by the terminal device or may be configured by the first core network node for the terminal device. The "QoT grading" refers to grades of QoT.

In this embodiment of this application, the terminal device may configure a corresponding QoT level for the application based on the QoT grading and a QoT requirement of the application, and determine the data forwarding policy of the application according to the QoT service policy and based on the QoT level of the application. Therefore, when the application subsequently executes a service and generates data, the terminal device may select, based on the QoT level, according to the data forwarding policy, and based on the QoT level of the network device, a network device to which the data is sent, and determine how to send the data, thereby facilitating construction of a trusted network route for data transmission.

In some possible implementations, before the determining a QoT level of the application based on QoT grading in second QoT configuration information, the method further includes:
sending second configuration information and a second signature of the second configuration information to the first core network node by using the first network device; and
receiving the second QoT configuration information that is from the first core network node and that is forwarded by the first network device, where the second QoT configuration information is determined by the first core network node based on the second signature and the second configuration information and according to the configuration policy of an operator, and the second QoT configuration information includes the fourth QoT level. It should be noted that the second configuration information is software and hardware configuration information of the first network device. For example, the second configuration information includes an identifier, a model, a manufacturer, a factory certificate, a version of used software, and the like of the terminal device.

In this embodiment of this application, the terminal device may send the second configuration information and the second signature of the second configuration information to the first core network node by using the first network device, so that the first core network node verifies the second signature, and when the verification succeeds, configures QoT configuration information (that is, the second QoT configuration information) for the terminal device based on the second configuration information and according to the configuration policy of an operator, so that the terminal device can determine the QoT level and the data forwarding policy for the application on the terminal device based on the second QoT configuration information, thereby facilitating subsequent construction of the trusted network route. In addition, by using the fourth QoT level in the second QoT configuration information, the terminal device may further request, by using the first network device, the first core network node to determine the accessible target network device, thereby helping avoid the exposure risk caused when the target network device (for example, the first network device) sends the sensitive information such as the QoT level of the target network device by using the broadcast signaling.

According to a fourth aspect, an embodiment of this application provides a data transmission method, applied to a terminal device, and the method includes:
performing layer-by-layer encryption on to-be-transmitted data of a current service by using at least one symmetric key, to obtain a first data packet, where the at least one symmetric key is a symmetric key corresponding to a network device on a transmission path of the to-be-transmitted data, the transmission path is determined based on location information of the terminal device, a first QoT level of the service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes a first network device; and
sending the first data packet to the first network device.

In this embodiment of this application, trustworthiness attributes of the terminal device, the service on a terminal device side, a core network node, and the network device (such as a base station, a router, and a gateway) in a network are quantized, QoT levels are configured for the terminal device, the service on the terminal device side, the core network node, and the network device, and the data forwarding policy is configured for the service on the terminal device side. A first core network node may determine an end-to-end transmission path for the to-be-transmitted data based on the location information of the terminal device, the first QoT level of the service corresponding to the to-be-transmitted data, the QoT level of the network device in the network, the forwarding policy of the to-be-transmitted data, and the receiving end IP address of the to-be-transmitted data, thereby facilitating construction of a trusted network route for data transmission. Because the transmission path is selected by the first core network node, the first network device no longer needs to send a QoT level of the first network device to the terminal device, thereby helping avoid a risk of exposing the QoT level of the first network device. In addition, the current service is a service that is being executed on the terminal device side. When the to-be-transmitted data needs to be sent, the terminal device may perform the layer-by-layer encryption on the to-be-transmitted data by using the symmetric key corresponding to the network device on the transmission path, and the first network device can perform only partial decryption on the first data packet, which helps improve data security. It should be understood that the first core network node may be a management node configured for QoT configuration management.

In some possible implementations, before the performing layer-by-layer encryption on to-be-transmitted data of a current service by using at least one symmetric key, to obtain a first data packet, the method further includes:
sending a route request to a third core network node by using the first network device, where the route request includes the location information, the first QoT level, the forwarding policy, and the receiving end IP address, and the route request is used to request the third core network node to determine the transmission path; and
receiving a third message that is from the third core network node and that is forwarded by the first network device, where the third message includes the network device on the transmission path, a certificate of the network device on the transmission path, and a temporary certificate issued by the third core network node to the terminal device.

In this embodiment of this application, the terminal device sends the route request to the third core network code by using the first network device, so that the third core network node selects the transmission path for the to-be-transmitted data based on information in the route request, and sends the network device on the transmission path, the certificate of the network device, and the temporary certificate of the terminal device to the terminal device by using the first network device, which helps the terminal device perform key agreement with a corresponding network device on the transmission path by using the certificate and the temporary certificate, and further helps subsequently perform layer-by-layer encryption on to-be-transmitted data. It should be understood that the third core network node may be a negotiation node configured for QoT route negotiation.

In some possible implementations, after the receiving a third message that is from the third core network node and that is forwarded by the first network device, the method further includes:
performing key agreement with the first network device or a subordinate node of the first network device by using a certificate of the first network device and the temporary certificate, to obtain a first service flow identifier and a target symmetric key that correspond to the first network device, where
the first data packet is obtained by encrypting the first service flow identifier and a third data packet by using the target symmetric key, the third data packet is obtained by performing data encryption by using a symmetric key corresponding to a second network device, and the second network device is a next hop of the first network device on the transmission path.

In this embodiment of this application, the terminal device may perform the key agreement with the first network device or the subordinate node of the first network device over a secure link established to the first network device by using the certificate of the first network device and the temporary certificate of the terminal device, to obtain the target symmetric key and the service flow identifier (stored as the first service flow identifier) of the first network device. This helps the terminal device encrypt the third data packet and the first service flow identifier by using the target symmetric key, thereby improving security of the to-be-transmitted data.

In some possible implementations, before the sending a route request to a third core network node by using the first network device, the method further includes:
accessing a network and sending registration signaling to a control plane node on a network side by using the first network device, where the registration signaling includes a QoT service policy of the terminal device and a lowest QoT level required by the terminal device, the QoT service policy is used to determine a data forwarding policy for an application on the terminal device, and the application includes a target application corresponding to the service; and
receiving a fourth message that is sent by the control plane node and that is forwarded by the first network device, where the fourth message includes a highest QoT level provided by the network, and the fourth message is sent when the control plane node determines to accept registration of the terminal device according to the QoT service policy and based on the lowest QoT level, or based on subscription information of the terminal device on the network side; and
determining, based on the highest QoT level and the forwarding policy, that the target application is available.

In this embodiment of this application, the terminal device sends the registration signaling to the control plane node by using the first network device, and sends the preconfigured QoT service policy and the required lowest QoT level to the control plane node. The control plane node determines to accept the registration of the terminal device according to the QoT service policy and based on the lowest QoT level, or based on the subscription information of the terminal device on the network side, and sends, to the terminal device by using the first network device and the fourth message, the highest QoT level that can be provided by the network, so that the terminal device determines, based on the highest QoT level, which applications (for example, the target application) are available on the terminal device, and performs permission setting and modification, for example, enabling or disabling, for the application on the terminal device.

In some possible implementations, before the accessing a network and sending registration signaling to a control plane node on a network side, the method further includes:
determining a QoT level of the application based on QoT grading in preset second QoT configuration information, where the second QoT configuration information includes the QoT service policy; and
determining the data forwarding policy of the application according to the QoT service policy and based on the QoT level of the application, where
a fourth QoT level of the terminal device is determined based on the QoT grading. It should be noted that "preset" means that the second QoT configuration information may be configured by the terminal device or may be configured by the first core network node for the terminal device. The "QoT grading" refers to grades of QoT.

In this embodiment of this application, the terminal device may configure a corresponding QoT level for the application based on the QoT grading and a QoT requirement of the application, and determine the data forwarding policy of the application according to the QoT service policy and based on the QoT level of the application. Therefore, when the application subsequently executes a service and generates data, the terminal device may select, based on the QoT level, according to the data forwarding policy, and based on the QoT level of the network device, a network device to which the data is sent, and determine how to send the data, thereby facilitating construction of a trusted network route for data transmission.

In some possible implementations, before the determining a QoT level of the application based on QoT grading in second QoT configuration information, the method further includes:
sending second configuration information and a second signature of the second configuration information to a first core network node by using the first network device; and
receiving the second QoT configuration information that is from the first core network node and that is forwarded by the first network device, where the second QoT configuration information is determined by the first core network node based on the second signature and the second configuration information and according to a configuration policy of an operator, and the second QoT configuration information includes the fourth QoT level. It should be noted that the second configuration information is software and hardware configuration information of the first network device. For example, the second configuration information includes an identifier, a model, a manufacturer, a factory certificate, a version of used software, and the like of the terminal device.

In this embodiment of this application, the terminal device may send the second configuration information and the second signature of the second configuration information to the first core network node by using the first network device, so that the first core network node verifies the second signature, and when the verification succeeds, configures QoT configuration information (that is, the second QoT configuration information) for the terminal device based on the second configuration information and according to the configuration policy of an operator, so that the terminal device can determine the QoT level and the data forwarding policy for the application on the terminal device based on the second QoT configuration information, thereby facilitating subsequent construction of the trusted network route. In addition, by using the fourth QoT level in the second QoT configuration information, the terminal device may further request, by using the first network device, the first core network node to determine an accessible target network device, thereby helping avoid an exposure risk caused when the target network device (for example, the first network device) sends sensitive information such as a QoT level of the target network device by using broadcast signaling.

In some possible implementations, the forwarding policy includes at least one of the following:

When the first QoT level is lower than or equal to a third QoT level, sending the first data packet to the first network device;
when the first QoT level is higher than the third QoT level and the service accepts degraded transmission, sending the first data packet to the first network device;
when the first QoT level is higher than the third QoT level, skipping sending the first data packet to the first network device;
when the first QoT level is higher than the third QoT level, fragmenting the first data packet, and sending, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop; and
when the first QoT level is higher than the third QoT level and the third QoT level is higher than or equal to a lowest available QoT level of the first data packet, sending the first data packet to the first network device.

In this embodiment of this application, the forwarding policy may be sending the first data packet to the first network device whose third QoT level is higher than or equal to the first QoT level. Alternatively, the forwarding policy may be degradable transmission. In other words, if the first QoT level is higher than the third QoT level, but the terminal device configures for the service to accept the degraded transmission, the terminal device may send the first data packet to the first network device whose third QoT level is lower than the first QoT level. Alternatively, the forwarding policy may be the fragmentation. In other words, if the first QoT level is higher than the third QoT level, the terminal device may fragment the first data packet, and then send the sub-data packets obtained through fragmentation to different network devices, where the different network devices include the first network device, for example, a network device a and a network device b. The network device a and the network device b separately send, to the core network node whose QoT level is higher than or equal to the first QoT level, the sub-data packets obtained through fragmentation. In this way, the sub-data packets can be sent, through the different paths, to the core network node whose QoT level is higher than or equal to the first QoT level, thereby improving QoT levels of the network device a and the network device b. In addition, because both the network device a and the network device b receive the sub-data packets, which helps reduce a risk of first data packet leakage, the core network node may combine and restore the received sub-data packets to the first data packet, and forward the first data packet to the next hop. Alternatively, the forwarding policy may specify the lowest available QoT level of the first data packet under a degradable condition, that is, when the third QoT level is lower than the first QoT level and the third QoT level is higher than or equal to the lowest available QoT level, the first data packet may be sent to the first network device. Certainly, the foregoing merely describes examples of the forwarding policy. This application may further include more forwarding policies or a combination of forwarding policies. The terminal device may flexibly select, according to the forwarding policy of the first data packet, the first network device to perform data transmission. Therefore, when a trusted network route is constructed, flexibility of the data transmission is further improved.

According to a fifth aspect, an embodiment of this application provides a data transmission apparatus, applied to a first network device. For beneficial effect, refer to the description of the first aspect. Details are not described herein again. The data transmission apparatus has a function of implementing behavior in the method example in the first aspect. The function may be implemented by hardware, or may be implemented by executing corresponding software by hardware. The hardware or the software includes one or more modules corresponding to the function. In a possible design, the data transmission apparatus includes a first transceiver unit and a first processing unit. The first transceiver unit is configured to receive a first data packet from a terminal device, where the first data packet includes a first QoT level of a service corresponding to the first data packet and a forwarding policy of the first data packet. The first processing unit is configured to obtain a second QoT level of a second network device, and the first processing unit is further configured to send the first data packet to the second network device based on the first QoT level and the second QoT level and according to the forwarding policy.

According to a sixth aspect, an embodiment of this application provides a data transmission apparatus, applied to a first network device. For beneficial effect, refer to the description of the second aspect. Details are not described herein again. The data transmission apparatus has a function of implementing behavior in the method example in the second aspect. The function may be implemented by hardware, or may be implemented by executing corresponding software by hardware. The hardware or the software includes one or more modules corresponding to the function. In a possible design, the data transmission apparatus includes a second transceiver unit and a second processing unit. The second transceiver unit is configured to receive a first data packet from a terminal device, where the first data packet is obtained by the terminal device by performing layer-by-layer encryption on to-be-transmitted data by using at least one symmetric key, the at least one symmetric key includes a symmetric key corresponding to a network device on a transmission path of the to-be-transmitted data, the transmission path is determined based on location information of the terminal device, a first QoT level of a service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes the first network device. The second processing unit is configured to decrypt the first data packet by using a target symmetric key to obtain a third data packet, where the target symmetric key is a symmetric key corresponding to the first network device. The second transceiver unit is further configured to send the third data packet to a second network device, where the second network device is a next hop of the first network device on the transmission path.

According to a seventh aspect, an embodiment of this application provides a data transmission apparatus, applied to a terminal device. For beneficial effect, refer to the description of the third aspect. Details are not described herein again. The data transmission apparatus has a function of implementing behavior in the method example in the third aspect. The function may be implemented by hardware, or may be implemented by executing corresponding software by hardware. The hardware or the software includes one or more modules corresponding to the function. The data transmission apparatus includes an obtaining unit, a third transceiver unit, and a third processing unit. The obtaining unit is configured to obtain a first QoT level of a current service and a forwarding policy of a first data packet of the service, and the obtaining unit is further configured to obtain a third QoT level of a first network device. The processing unit is further configured to invoke the third transceiver unit to send the first data packet to the first network device based on the first QoT level, according to the forwarding policy, and based on the third QoT level.

According to an eighth aspect, an embodiment of this application provides a data transmission apparatus, applied to a terminal device. For beneficial effect, refer to the description of the fourth aspect. Details are not described herein again. The data transmission apparatus has a function of implementing behavior in the method example in the fourth aspect. The function may be implemented by hardware, or may be implemented by executing corresponding software by hardware. The hardware or the software includes one or more modules corresponding to the function. The data transmission apparatus includes a fourth transceiver unit and a fourth processing unit. The fourth processing unit is configured to perform layer-by-layer encryption on to-be-transmitted data of a current service by using at least one symmetric key, to obtain a first data packet, where the at least one symmetric key is a symmetric key corresponding to a network device on a transmission path of the to-be-transmitted data, the transmission path is determined based on location information of the terminal device, a first QoT level of the service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes a first network device. The fourth transceiver unit is configured to send the first data packet to the first network device.

According to a ninth aspect, an embodiment of this application provides a first network device, including a processor, a memory, a communication interface, and one or more programs. When being stored in the memory and configured to be executed by the processor, the one or more programs cooperate with the communication interface to implement the method according to any one of the first aspect or the second aspect.

According to a tenth aspect, an embodiment of this application provides a terminal device, including a processor, a memory, a communication interface, and one or more programs. When being stored in the memory and configured to be executed by the processor, the one or more programs cooperate with the communication interface to implement the method according to any one of the third aspect or the fourth aspect.

According to an eleventh aspect, an embodiment of this application provides a computer-readable storage medium. The computer-readable storage medium stores program code executed by a device, and the program code is configured to implement the method according to any one of the first aspect or the second aspect.

According to a twelfth aspect, an embodiment of this application provides a computer-readable storage medium. The computer-readable storage medium stores program code executed by a device, and the program code is configured to implement the method according to any one of the third aspect or the fourth aspect.

According to a thirteenth aspect, an embodiment of this application provides a computer program product. When the computer program product is run by a first network device, the first network device is enabled to perform the method according to any one of the first aspect or the second aspect.

According to a fourteenth aspect, an embodiment of this application provides a computer program product. When the computer program product is run on a terminal device, the terminal device is enabled to perform the method according to any one of the third aspect or the fourth aspect.

### BRIEF DESCRIPTION OF DRAWINGS

To describe technical solutions in embodiments of the present invention or in the background more clearly, the following describes accompanying drawings for describing embodiments of the present invention or the background.
FIG. 1 is a schematic diagram of a basic principle of onion routing according to an embodiment of this application;
FIG. 2 is a schematic diagram of quantizing a QoT level of an intermediate network device according to an embodiment of this application;
FIG. 3 is a schematic diagram of an architecture of a data transmission system according to an embodiment of this application;
FIG. 4 is a schematic flowchart of a data transmission method according to an embodiment of this application;
FIG. 5A and FIG. 5B are an overall schematic flowchart of a data transmission method according to an embodiment of this application;
FIG. 6A and FIG. 6B are a schematic flowchart of another data transmission method according to an embodiment of this application;
FIG. 7A and FIG. 7B are a schematic flowchart of another data transmission method according to an embodiment of this application;
FIG. 8 is a schematic flowchart of another data transmission method according to an embodiment of this application;
FIG. 9A and FIG. 9B are an overall schematic flowchart of another data transmission method according to an embodiment of this application;
FIG. 10 is a schematic diagram of a structure of a data transmission apparatus according to an embodiment of this application;
FIG. 11 is a schematic diagram of a structure of another data transmission apparatus according to an embodiment of this application;
FIG. 12 is a schematic diagram of a structure of another data transmission apparatus according to an embodiment of this application;
FIG. 13 is a schematic diagram of a structure of another data transmission apparatus according to an embodiment of this application;
FIG. 14 is a schematic diagram of a structure of a first network device according to an embodiment of this application; and
FIG. 15 is a schematic diagram of a structure of a terminal device according to an embodiment of this application.

### DESCRIPTION OF EMBODIMENTS

In the specification, the claims, and the accompanying drawings of this application, terms "first", "second", "third", "fourth", and the like are intended to distinguish between different objects but do not indicate a particular order. In addition, terms "include", "have" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

First, some terms in this application are explained, to facilitate understanding of a person skilled in the art.

Master information block MIB: is broadcast signaling sent by an/a LTE/5G base station and is used by a terminal device (for example, a smartphone, a tablet computer, or a wearable device) to obtain an access parameter of the base station.

System information block SIB: is broadcast signaling sent by an/a LTE/5G base station and is used by a terminal device to obtain an access parameter of the base station.

Beacon (Beacon): is broadcast signaling sent by a Wi-Fi base station in a wireless network and is used by a terminal device to obtain an access parameter.

Quality of Service (Quality of Service, QoS): indicates, in a quantization manner, a degree to which quality of a service can be achieved.

Quality of Trust (Quality of Trust, QoT): indicates, in a quantization manner, a level of trust that can be achieved.

Quality of Experience (Quality of Experience, QoE): reflects, in a quantization manner, perception of a user of a degree of good or bad service experience.

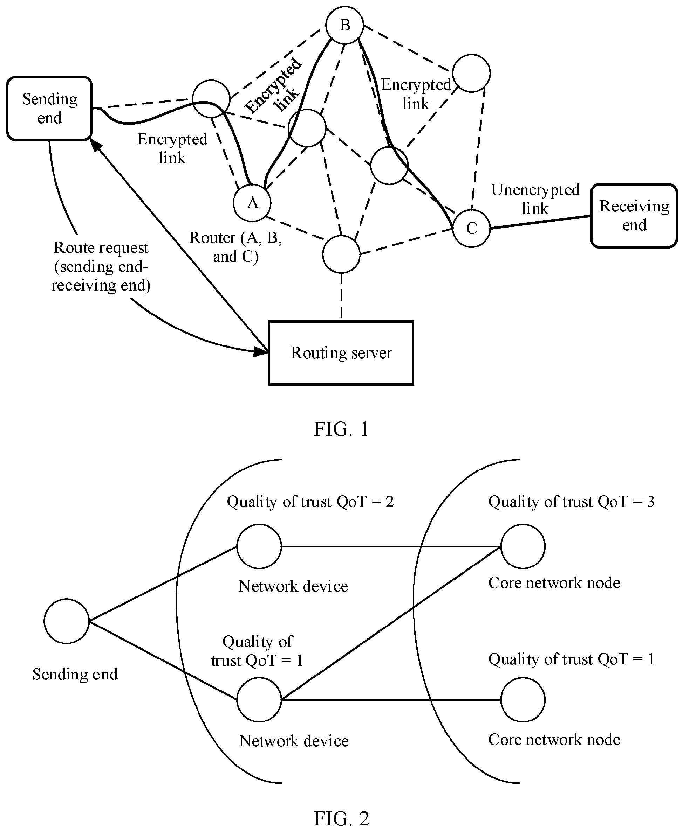

Second, a related technology is briefly analyzed. Onion routing (The Onion Routing, TOR) is a routing method that encrypts data hop by hop. A basic principle of the onion routing is to construct a new logical network on an existing network, to form a network in a network in which data is transmitted in an encrypted form. FIG. 1 is a basic principle diagram of onion routing, and a working mode of the onion routing is as follows:

Routing mechanism: Centralized and distributed routing control is used. As shown in FIG. 1, one or more routing servers exist in a network, and a function of the routing server is to provide a network routing service for a user based on addresses of a sending end and a receiving end of service data. Therefore, a main route of data forwarding is to construct a logical route in a centralized manner on the basis of distributed routing, and a path of data before entering the onion routing and after leaving the onion routing still uses a traditional routing manner.

Route selection: When sending data, the sending end first selects a routing service from a preconfigured router list, and then sends a route request from the sending end to the receiving end to the routing server. The routing server selects, based on the source address and the receiving end address provided by the sending end, three data forwarding routers (A, B, and C in FIG. 1) for the user side, and sends the selected router addresses to the data sending end.

Route establishment: After receiving the intermediate router addresses provided by the route server, the sending end establishes an end-to-router encrypted link with each intermediate router through onion signaling. After the route is established, the sending end has three data encryption keys, and each of which corresponds to an intermediate router.

Data sending: The sending end encrypts and encapsulates an IP (Internet Protocol Address, Internet Protocol) data packet layer by layer by using the key agreed with the intermediate router. After the data is encapsulated, the sending end puts the encapsulated data into a common IP data packet and sends the packet to an ingress router.

Data forwarding: After receiving the data packet from the sending end, the ingress router uses a symmetric key to decrypt the data packet, encapsulates the data based on header information of the decrypted data packet, and forwards the data to the intermediate router (or a next hop). The intermediate router continues to decrypt and forward the data packet to an egress router. The egress router performs final decryption on the data packet, and then sends the data packet to the data receiving end over an unencrypted link.

Although the onion routing provides a data forwarding solution with high trustworthiness and good privacy protection, the onion routing has the following disadvantages:
(1) Only data transmission at a network layer is considered, and an overall architecture of a communication network and the internet is not considered. Therefore, the onion routing can only be used in a small range and cannot be used in a network as a general standard.
(2) There is no quantitative evaluation standard for a trustworthiness attribute of the router, and trustworthiness evaluation of the router is based on a non-technical factor. Therefore, it is difficult to use the onion router in a future network.
(3) A proprietary protocol is used for the key agreement between the sending end and the router. If the mechanism is used in a heterogeneous network, the proprietary protocol needs to be replaced according to an existing security protocol standard.
(4) No method for grading business services is provided at the sending end.

With reference to the existing related technology and the disadvantages thereof, in this application, trustworthiness attributes of a terminal device, a service on the terminal device side, a core network node, and a network device in a network are quantized, QoT levels are configured for the terminal device, the service on the terminal device side, the core network node, and the network device, and a data forwarding policy is configured for the service on the terminal device side. This can implement trusted data transmission in a heterogeneous network, and the following technical problems are mainly resolved:

### 1. Differentiation of network trust requirements of business services

Different business services in the network have different requirements on network trustworthiness. However, the current network does not differentiate requirements of users on business service trustworthiness, but takes an equal attitude towards the requirements, and data on a terminal device side is forwarded through a same path. As a result, some business services that have high requirements on the network trust cannot be protected and governments have doubts about sensitive data transmission. In addition, some business services that have low requirements on the network trust are overprotected and face trouble of paying extra fees.

### 2. Quantization of network trust requirements of business services

International Telecommunication Union Telecommunication Standardization Sector (ITU-T for ITU Telecommunication Standardization Sector, ITU-T) defines indicators such as QoS and QoE, to quantize network requirements and experience of users. However, governments and users have strong requirements on trusted data transmission, but there is no indicator to quantize the network trust requirements. It can be learned that, quantization of the requirements of the users on the network trust has become a problem to be urgent resolved currently. The quantization of the network trust requirements enables the network to customize a data forwarding service based on requirements of the users. A differentiated service not only helps improve trust of the users in the network, but also reduce network service costs of some users and resolve a network infrastructure trust problem that plagues the governments and vendors.

With reference to the foregoing problems, this application provides the following technical solutions:
(1) A concept of QoT is introduced and QoT is quantized into different levels.

QoT is a new concept, and currently, there is no unified standard to define QoT. For example, in this application, QoT may be quantized into four levels with reference to a definition of a device by Norton (Norton).
Level 1: restricted
Level 2: public
Level 3: dedicated
Level 4: fully trusted

The level 4 is higher than the level 3, the level 3 is higher than the level 2, and the level 2 is higher than the level 1. For example, in this application, a QoT level may be further classified with reference to a definition of QoS in the industry. In Table 1, QoT is classified into six levels based on parameters such as security, integrity, reliability, and anonymity of a device, and levels 0 to 5 increase in ascending order, that is, the level 0 is a lowest level, and the level 5 is a highest level.

**Table 1**

| Parameter | QoT level | | | | | |
|---|---|---|---|---|---|---|
| | Level 0 | Level 1 | Level 2 | Level 3 | Level 4 | Level 5 |
| Security (CC certification) | U | 0.7 | 0.9 | 0.9 | 1.0 | 1.0 |
| Integrity (routing spoofing) | U | 0.9 | 0.95 | 0.99 | 0.999 | 1.0 |
| Reliability (hijacked) | U | 0.9 | 0.95 | 0.99 | 0.999 | 1.0 |
| Anonymity (end-to-end encryption) | U | U | U | U | 0.9 | 1.0 |

A CC (Common Criteria, a group of international standards and specifications) certification score (for example, 0.7 of the level 1) is mainly considered for the security, a routing spoofing score (for example, 0.95 of the level 2) is mainly considered for the integrity, a hijacked score (for example, 0.99 of the level 3) is mainly considered for the reliability, and an end-to-end encryption score (for example, 1.0 of the level 5) is mainly considered for the anonymity, where "U" indicates no score, and a maximum value of the score of each parameter is 1.0. Certainly, the definition of the QoT level herein is merely an example, and a standard organization may improve the definition of QoT based on an actual requirement.

(2) Based on importance of service content, a standard same as the QoT quantization is used to grade network trust requirements of services.

(3) Based on software and hardware configuration information of a network device, reliability of a manufacturer, historical forwarding performance, and the like, trustworthiness of the network device is graded by using the standard same as the QoT quantization. In FIG. 2, QoT levels of intermediate network devices and core network nodes are quantized as QoT = 1, QoT = 2, QoT = 3, or the like, where 1, 2, or 3 indicates a level 1, a level 2, or a level 3. It should be understood that FIG. 2 is only an example.

(4) A data sending end configures different data forwarding policies for services based on QoT levels of the services, for example, selects, based on the QoT level of the service and a QoT level of a network device, a network device that satisfies a condition, to perform data forwarding. Alternatively, data is forwarded based on the QoT level of the service and the QoT level of the network device in a manner of data packet splitting and multipath transmission, or a path is selected based on a QoT requirement of the service by using a software-defined network (Software-Defined Network, SDN) for data forwarding.

It should be understood that the technical solutions provided in this application are applicable to a heterogeneous network, and a trusted network route can be established based on a network device that is in the heterogeneous network and that is not fully trusted, and are also applicable to a future 6G (6th generation mobile network, 6th generation mobile communication technology) network, a wireless network, or a satellite network.

The following describes in detail the technical solutions provided in this application with reference to specific implementations.

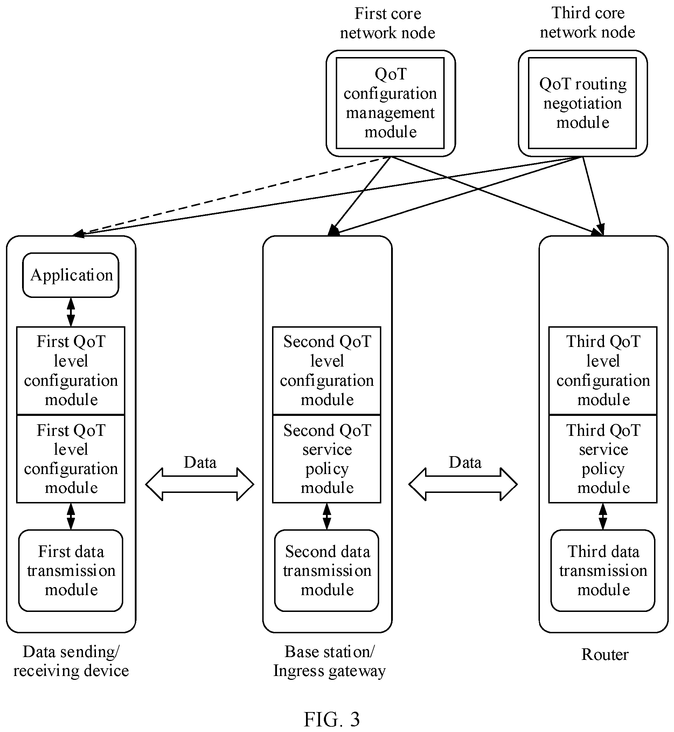

FIG. 3 is a schematic diagram of an architecture of a data transmission system according to an embodiment of this application. As shown in FIG. 3, the data transmission system includes a data sending/receiving device, a base station/ingress gateway, a router, a first core network node, and a third core network node.

The data sending/receiving device includes an application, a first QoT level configuration module, a first QoT service policy module, and a first data transmission module. The data sending/receiving device may be any terminal device.

The first QoT level configuration module is configured to: provide QoT level configuration information, and provide the application with a QoT level supported by the data sending/receiving device or a network and related information, for example, a highest QoT level that can be provided by the network and a charging method of this QoT level.

The first QoT service policy module is configured to provide a QoT-based data forwarding policy for the application, for example, based on a QoT level of a business service provided by the application, configures, for the data transmission module, a base station or a gateway to which data should be sent and how to send the data (for example, fragmentation), whether to stop sending the data, and the like.

The first data transmission module is configured to send the data to the selected base station or gateway according to the data forwarding policy formulated by the first QoT service policy module.

The application, that is, the application program installed on the data sending/receiving device, is configured to obtain the configuration information of the application device from the first QoT level configuration module, to determine a QoT level of the application, and may use the QoT level in subsequent data sending.

The base station/ingress gateway includes a second QoT level configuration module, a second QoT service policy module, and a second data transmission module.

The second QoT level configuration module is configured to provide QoT level configuration information, which may specifically provide the base station/ingress gateway with a highest QoT level supported by the second QoT level configuration module.

The second QoT service policy module is configured to provide a QoT-based data forwarding policy for the data received by the base station/ingress gateway, so that the second data transmission module forwards the data to a next hop.

The second data transmission module is configured to send the data to the selected next hop according to the data forwarding policy formulated by the second QoT service policy module.

The router includes a third QoT level configuration module, a third QoT service policy module, and a third data transmission module.

The third QoT level configuration module is configured to provide QoT level configuration information, which may specifically provide the router with a highest QoT level supported by the third QoT level configuration module.

The third QoT service policy module is configured to provide a QoT-based data forwarding policy for the data received by the router, so that the third data transmission module forwards the data to a next hop.

The third data transmission module is configured to send the data to the selected next hop according to the data forwarding policy formulated by the third QoT service policy module.

The first core network node includes a QoT configuration management module. The QoT configuration management module is configured to: perform QoT configuration for the devices based on software and hardware configuration information of the devices such as the data sending/receiving device, the base station/ingress gateway, and the router, and deliver QoT configuration information, for example, QoT levels that are of the devices and that are determined.

The third core network node includes a QoT routing negotiation module. The QoT routing negotiation module is configured to assist, based on a QoT requirement on a data sending device side, for example, a QoT requirement of the application on the data sending device, the data sending device and the network device such as the base station/ingress gateway and the router in performing key agreement, to establish a routing path that satisfies the QoT requirement.

It should be understood that the QoT level configuration modules and the QoT service policy modules of the devices such as the data sending/receiving device, the base station/ingress gateway, and the router may implement corresponding functions by using one module. For example, the first QoT level configuration module and the first QoT service policy module may be combined into one module to serve the application and the first data transmission module.

It should be understood that the first core network node and the third core network node may be one or two functional modules deployed in the network device such as the base station/ingress gateway and the router or may be separate entities such as a server.

It should be understood that delivery of the QoT configuration information of the data sending/receiving device is optional, that is, the data sending/receiving device may perform the QoT configuration by using the first core network node, or may perform the QoT configuration by the data sending/receiving device. For example, the data sending/receiving device may complete configuration of the QoT level of the application and determining of the data forwarding policy during initialization or complete configuration of the QoT level of the application and determining of the data forwarding policy based on a user operation.

It should be understood that, for ease of description, the devices such as the base station/ingress gateway and the router may be collectively referred to as the network device. The base station may be an/a LTE/5G base station or a Wi-Fi AP or may be a base station in a future 6G (6th generation mobile network, 6th generation mobile communication technology) network, a wireless network, or a satellite network.

It should be understood that FIG. 3 is merely an example architecture of the data transmission system. The data transmission system may further include more or fewer components, for example, a second core network node configured to combine and restore sub-data packets.

It can be learned that in this embodiment of this application, the first core network node in the system architecture may specifically be the QoT configuration management module of the first core network node that performs the QoT configuration (the data sending/receiving device can perform the configuration) for the data sending/receiving device, the base station/ingress gateway, the router, and the like, to quantize network trust requirements. Based on the QoT level and according to the data forwarding policy of the application on the data sending/receiving device, in subsequent data transmission, a trusted base station/ingress gateway and a router that satisfy a QoT requirement of a user may be selected for data forwarding, thereby implementing a differentiated service based on a network trust requirement, and helping to improve user trust in the network and resolve a network infrastructure trust problem that plagues governments and vendors. In addition, the third core network node, which may specifically be the QoT routing negotiation module of the third core network node, assists the data sending/receiving device, the base station/ingress gateway, the router, and the like in the network in establishing an encrypted channel, which hides a transmission path from the outside, helps protect data security, and further improves network trustworthiness.

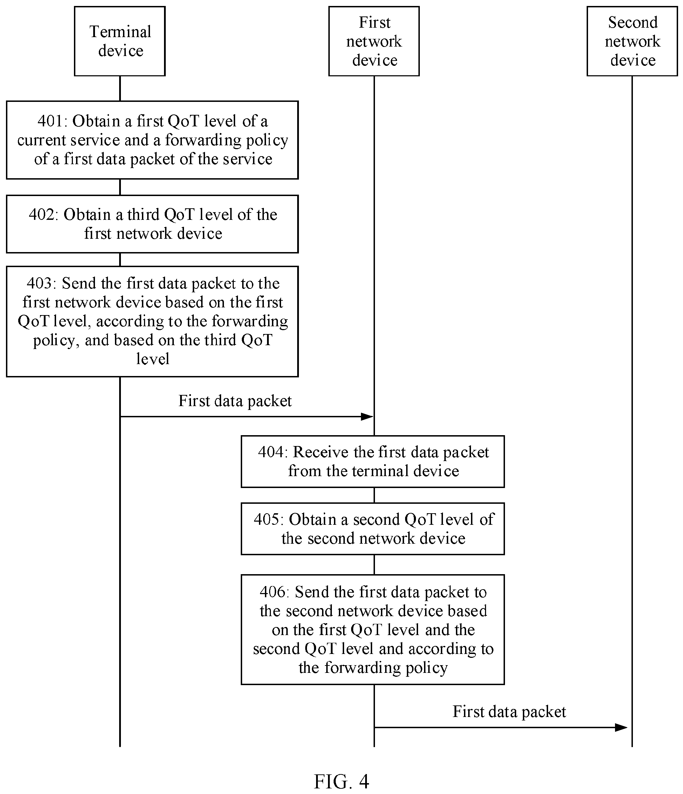

FIG. 4 is a schematic flowchart of a data transmission method according to an embodiment of this application. The method may be applied to the data transmission system shown in FIG. 3, and the method includes but is not limited the following steps.

401: A terminal device obtains a first QoT level of a current service and a forwarding policy of a first data packet of the service.

The current service is a service that is being executed on the terminal device side, for example, a call, a software update, or a file upload. The first QoT level of the service is also a QoT level of a target application corresponding to the service. The first data packet may be a complete data packet of the service or may be a sub-data packet obtained by fragmenting the complete data packet by the terminal device.

For example, the terminal device may determine, based on QoT grading in preset second QoT configuration information, the QoT level of the application on the terminal device, where the second QoT configuration information may be configured by the terminal device or may be configured by a first core network node for the terminal device. For the QoT grading, refer to the definition of QoT, for example, the four levels of fully trusted, dedicated, public, and restricted, or refer to the six levels in Table 1. The second QoT configuration information includes a QoT service policy. Some QoT-based data forwarding policies are formulated in the QoT service policy. The terminal device may determine the data forwarding policy of the application according to the QoT service policy and based on the QoT level of the application. For example, for the first data packet of the current service, a base station to which the first data packet is to be sent and how to send the first data packet may be determined based on the first QoT level of the current service or the first QoT level of the target application corresponding to the current service, and a QoT level of a base station in the network, and according to the data forwarding policy in the QoT service policy. Optionally, when determining the QoT level for the application on the terminal device, the terminal device may further differentiate a type of an application service. For example, a high QoT level may be configured for a payment application or a call application that has high requirements on security and confidentiality.

In this example, the terminal device may configure a corresponding QoT level for the application based on the QoT grading and a QoT requirement of the application, and determine the data forwarding policy of the application according to the QoT service policy and based on the QoT level of the application. Therefore, when the application subsequently executes a service and generates data, the terminal device may select, based on the QoT level, according to the data forwarding policy, and based on the QoT level of the network device, a network device to which the data is sent, and determine how to send the data, thereby facilitating construction of a trusted network route for data transmission.

For example, the terminal device may further determine a fourth QoT level of the terminal device with reference to the QoT grading in the second QoT configuration information and with reference to another factor. The another factor herein includes but is not limited to location information of the terminal device, a purchased service, and second configuration information of the terminal device. The second configuration information is software and hardware configuration information of a first network device. For example, the second configuration information includes an identifier, a model, a manufacturer, a factory certificate, a version of used software, and the like of the terminal device.

For example, the terminal device may send the second configuration information and a second signature of the second configuration information to the first core network node by using the first network device, where the second signature is obtained by signing the second configuration information by using a private key of the terminal device. The first core network node verifies the second signature, and when the verification succeeds, configures the second QoT configuration information for the terminal device based on the second configuration information and according to a configuration policy of an operator, and the terminal device receives the second QoT configuration information that is from the first core network node and that is forwarded by the first network device. The second QoT configuration information includes the fourth QoT level of the terminal device, that is, QoT configuration of the terminal device may be completed by the first core network node.

In this example, the terminal device may send the second configuration information and the second signature of the second configuration information to the first core network node by using the first network device, so that the first core network node verifies the second signature, and when the verification succeeds, configures QoT configuration information (that is, the second QoT configuration information) for the terminal device based on the second configuration information and according to the configuration policy of an operator, so that the terminal device can determine the QoT level and the data forwarding policy for the application on the terminal device based on the second QoT configuration information, thereby facilitating subsequent construction of the trusted network route. In addition, by using the fourth QoT level in the second QoT configuration information, the terminal device may further request, by using the first network device, the first core network node to determine an accessible target network device, thereby helping avoid an exposure risk caused when the target network device (for example, the first network device) sends sensitive information such as a QoT level of the target network device by using broadcast signaling.

402: The terminal device obtains a third QoT level of a first network device.

For example, before obtaining the first QoT level of the current service and the forwarding policy of the first data packet of the service, the method further includes: The terminal device receives a first message sent by the first network device, where the first message includes the third QoT level; and the terminal device stores the third QoT level, where the third QoT level is determined by the first core network node based on first configuration information of the first network device and a first signature of the first configuration information and according to the configuration policy of an operator. It should be understood that, the terminal device may obtain the third QoT level of the first network device by using the first message sent by the first network device, so that when the terminal device needs to send the first data packet, the terminal device may locally obtain the third QoT level and determine, based on the first QoT level and the third QoT level and according to the forwarding policy of the first data packet, whether to send the first data packet to the first network device, thereby facilitating construction of a trusted network route from a sending end to a receiving end for data transmission.

For example, the first message includes any one of a master information block MIB, a system information block SIB, a beacon (Beacon), and control plane signaling from the first core network node. If the first network device is an/a LTE/5G base station, the first message may be the master information block MIB or the system information block SIB. If the first network device is a Wi-Fi AP, the first message may be the beacon (Beacon). If the operator worries that sending the third QoT level by using the broadcast signaling such as the master information block MIB, the system information block SIB, and the beacon (Beacon) brings about a risk of exposing the third QoT level, the third QoT level may be sent to the terminal device by using the control plane signaling of the first core network node. This helps avoid the risk that the sensitive information such as the QoT level of the network device is exposed, and further helps improve security and trustworthiness of the network device.

For example, after storing the third QoT level, the method further includes:

The terminal device accesses a network and sends registration signaling to a control plane node on a network side by using the first network device, where the registration signaling includes a QoT option (for example, the QoT service policy) provided by the terminal device and a lowest QoT level required by the terminal device, and the QoT service policy is used to determine the data forwarding policy for the application on the terminal device.

The terminal device receives a fourth message that is from the control plane node and that is forwarded by the first network device, where the fourth message includes a highest QoT level provided by the network, the fourth message is sent when the control plane node determines to accept registration of the terminal device according to the QoT service policy and based on the lowest QoT level, or based on subscription information of the terminal device on the network side, and the highest QoT level provided by the network is used by the terminal device to determine which applications are available and which applications are not available.

In this example, the terminal device sends the registration signaling to the control plane node by using the first network device, and sends the preconfigured QoT service policy and the required lowest QoT level to the control plane node. The control plane node determines to accept the registration of the terminal device according to the QoT service policy and based on the lowest QoT level, or based on the subscription information of the terminal device on the network side, and sends, to the terminal device by using the first network device and the fourth message, the highest QoT level that can be provided by the network, so that the terminal device determines, based on the highest QoT level, which applications are available on the terminal device, and performs permission setting and modification, for example, enabling or disabling, for the application on the terminal device.

For example, after receiving the fourth message that is from the control plane node and that is forwarded by the first network device, the method further includes:

The terminal device sends a second message to the first core network node by using the first network device, where the second message includes the location information of the terminal device, an identifier of a reference network device, and the fourth QoT level of the terminal device, the second message is used to request the first core network node to determine, from the reference network device based on the fourth QoT level, the location information, and a QoT level of the reference network device, the target network device accessible to the terminal device, the reference network device includes a network device in a range determined based on the location information, for example, a network device whose distance from the location information of the terminal device is less than or equal to a specific threshold, and the identifier of the reference network device indicates the reference network device.

In this example, if the terminal device needs to obtain the third QoT level of the first network device by using the control plane signaling of the first core network node, the terminal device sends, to the first core network node by using the first network device and the second message, the location information of the terminal device, the identifier of the reference network device (for example, one or more network devices in the range) in the range determined based on the location information, and the fourth QoT level of the terminal device, so that the first core network node determines, from the reference network device based on the information, the target network device accessible to the terminal device, and sends related information of the target network device to the terminal device by using the control plane signaling, thereby helping avoid an exposure risk caused when the target network device sends the sensitive information such as the QoT level of the target network device by using the broadcast signaling.

The terminal device receives the control plane signaling that is from the first core network node and that is forwarded by the first network device.

The control plane signaling from the first core network node includes an identifier and a QoT level of the target network device, the target network device includes the first network device, and the first core network node usually sends the target network device to the terminal device in a form of a list. After receiving the target network device sent by the first core network node, the terminal device may select a corresponding target network device to initiate a connection request.

In this example, the terminal device can obtain the accessible target network device and the QoT level of the target network device by using the control plane signaling from the first core network node. When the terminal device needs to send the first data packet, the terminal device can initiate the connection request to the target network device based on information such as the identifier and the QoT level of the target network device, the first QoT level, and the forwarding policy, to perform data transmission. On the one hand, this helps the terminal device select the trusted network device (for example, the first network device) to perform the data transmission. On the other hand, the risk of exposing the sensitive information such as the QoT level of the target network device is avoided.

403: The terminal device sends the first data packet to the first network device based on the first QoT level, according to the forwarding policy, and based on the third QoT level.

For example, for the terminal device, the forwarding policy of the first data packet includes at least one of the following:

When the first QoT level is lower than or equal to the third QoT level, the terminal device sends the first data packet to the first network device;
when the first QoT level is higher than the third QoT level and the service accepts degraded transmission, the terminal device sends the first data packet to the first network device;
when the first QoT level is higher than the third QoT level, the terminal device does not send the first data packet to the first network device;
when the first QoT level is higher than the third QoT level, the terminal device fragments the first data packet, and sends, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop; and
when the first QoT level is higher than the third QoT level and the third QoT level is higher than or equal to a lowest available QoT level of the first data packet, the terminal device sends the first data packet to the first network device.

For example, the forwarding policy may be sending the first data packet to the first network device whose third QoT level is higher than or equal to the first QoT level. For example, the forwarding policy may alternatively be degradable transmission. In other words, if the first QoT level is higher than the third QoT level, but the terminal device configures for the service to accept the degraded transmission, the terminal device may send the first data packet to the first network device whose third QoT level is lower than the first QoT level. For example, the forwarding policy may alternatively be the fragmentation. In other words, if the first QoT level is higher than the third QoT level, the terminal device may fragment the first data packet, and then send the sub-data packets obtained through fragmentation to different network devices, where the different network devices include the first network device, for example, a network device a and a network device b. The network device a and the network device b separately send, to the core network node whose QoT level is higher than or equal to the first QoT level, the sub-data packets obtained through fragmentation. The core network node may combine and restore the received sub-data packets to the first data packet, and forward the first data packet to the next hop. For example, the forwarding policy may alternatively specify the lowest available QoT level of the first data packet under a degradable condition, that is, when the third QoT level is lower than the first QoT level and the third QoT level is higher than or equal to the lowest available QoT level, the first data packet may be sent to the first network device. Certainly, the foregoing merely describes examples of the forwarding policy. This application may further include more forwarding policies or a combination of forwarding policies. The terminal device may flexibly select, according to the forwarding policy of the first data packet, the first network device to perform the data transmission.

For example, if the third QoT level of the current first network device and a fifth QoT level of a third network device are lower than the first QoT level, the terminal device may fragment a data packet of the service according to a fragmentable forwarding policy.

For example, the first data packet is a sub-data packet obtained by fragmenting the data packet of the service by the terminal device, and after receiving the fourth message that is from the control plane node and that is forwarded by the first network device, the method further includes:

The terminal device obtains the fifth QoT level of the third network device, where the fifth QoT level is obtained based on a fifth message sent by the third network device, and the fifth message may also be any one of the master information block MIB, the system information block SIB, the beacon (Beacon), and the control plane signaling from the first core network node.

When the first QoT level is higher than the third QoT level and the fifth QoT level, the terminal device fragments the data packet of the service, to obtain the first data packet and a second data packet, where the second data packet is a sub-data packet other than the first data packet that is obtained by fragmenting the data packet of the service by the terminal device, and the data packet of the service includes the forwarding policy, that is, the forwarding policy of the second data packet is the same as that of the first data packet.

For example, the method further includes:
The terminal device sends the second data packet to the third network device based on the first QoT level, according to the forwarding policy, and based on the fifth QoT level.

Specifically, the terminal device separately sends the first data packet and the second data packet to the first network device and the third network device. The first network device and the third network device separately send the first data packet and the second data packet to a second core network node whose QoT level is higher than or equal to the first QoT level. The second core network node combines and restores all received sub-data packets (the first data packet and the second data packet) to the data packet of the service. In this way, when the first network device and the third network device do not satisfy a forwarding requirement of the data packet of the service, the data packet of the service may be fragmented, the first network device and the third network device separately send the received sub-data packets to the second core network node, and the second core network node sends the data packet of the service to a next hop. Therefore, the QoT level of the first network device and the QoT level of the third network device are improved, and a risk of data packet leakage of the service is reduced.

404: The network device receives the first message from the terminal device.

For example, before the terminal sends the first data packet to the first network device, the method further includes:
The first network device sends the first message to the terminal device, where the first message includes the third QoT level of the first network device, so that when the terminal device needs to send the first data packet, the terminal device may determine, based on the third QoT level, whether to send the first data packet to the first network device, thereby facilitating construction of a trusted network route from a sending end to a receiving end for data transmission.

For example, before sending the first message to the terminal device, the method further includes: The first network device sends the first configuration information and the first signature of the first configuration information to the first core network node, where the first signature is obtained by signing the first configuration information by using a private key of the first network device. The first core network node verifies the first signature, and when the verification succeeds, configures first QoT configuration information for the first network device based on the first configuration information and according to the configuration policy of an operator. The first network device receives the first QoT configuration information from the first core network node, where the first QoT configuration information includes the third QoT level.

The first configuration information is the software and hardware configuration information of the first network device. For example, the first configuration information includes an identifier, a model, a manufacturer, a factory certificate, a version of used software, and the like of the first network device.

In this example, the first network device may send the first configuration information and the first signature of the first configuration information to the first core network node, so that the first core network node verifies the first signature, and when the verification succeeds, configures a QoT level (that is, the third QoT level) for the first network device based on the first configuration information and according to the configuration policy of an operator, and sends the third QoT level the first network device by using the first QoT configuration information. In this way, the first network device may send the third QoT level to the terminal device and another network device in the network, and the terminal device or the another network device may determine, based on the third QoT level, whether to send data to the first network device.

For example, after sending the first configuration information to the first core network node, the method further includes: The first network device forwards the second message from the terminal device to the first core network node, and the first network device forwards the control plane signaling from the first core network node to the terminal device.

Specifically, the first network device sends the control plane signaling from the first core network node to the terminal device, and sends the identifier and the QoT level of the target network device accessible to the terminal device to the terminal device, for example, the first network device, so that when the terminal device needs to send the first data packet, the terminal device can initiate the connection request to the target network device based on the information such as the identifier and the QoT level of the target network device, the first QoT level, and the forwarding policy, to perform the data transmission. On the one hand, this helps the terminal device select the trusted network device to perform the data transmission. On the other hand, the risk of exposing the sensitive information such as the QoT level of the target network device is avoided.

405: The first network device obtains a second QoT level of a second network device.

It should be understood that the second network device may alternatively send configuration information of the second network device to the first core network node, and the first core network node determines the QoT level for the second network device based on the configuration information of the second network device. The second network device may send the QoT level of the second network device to another device in the network. After receiving the QoT level of the second network device, the first network device may store the QoT level for subsequent data forwarding.

406: The first network device sends the first data packet to the second network device based on the first QoT level and the second QoT level and according to the forwarding policy.

For example, for the first network device, the forwarding policy of the first data packet includes at least one of the following:
When the first QoT level is lower than or equal to the second QoT level, sending the first data packet to the second network device;
when the first QoT level is higher than the second QoT level and the service accepts the degraded transmission, sending the first data packet to the second network device;
when the first QoT level is higher than the second QoT level, skipping sending the first data packet to the second network device;
when the first QoT level is higher than the second QoT level, fragmenting the first data packet, and sending, through the different paths, the sub-data packets obtained through the fragmentation to the core network node whose QoT level is higher than or equal to the first QoT level, so that the core network node combines and restores the sub-data packets obtained through the fragmentation to the first data packet, and sends the first data packet to the next hop; and
when the first QoT level is higher than the second QoT level and the second QoT level is higher than or equal to the lowest available QoT level of the first data packet, sending the first data packet to the second network device.

For example, the forwarding policy may be sending the first data packet to the second network device whose second QoT level is higher than or equal to the first QoT level. For example, the forwarding policy may alternatively be the degradable transmission. In other words, if the first QoT level is higher than the second QoT level, but the terminal device configures for the service to accept the degraded transmission, the terminal device may send the first data packet to the second network device whose second QoT level is lower than the first QoT level. For example, the forwarding policy may alternatively be the fragmentation. In other words, if the first QoT level is higher than the second QoT level, the first network device may fragment the first data packet, and then send the sub-data packets obtained through the fragmentation to different network devices, where the different network devices include the second network device, for example, a network device 1 and a network device 2. The network device 1 and the network device 2 separately send, to the core network node whose QoT level is higher than or equal to the first QoT level, the sub-data packets obtained through the fragmentation. The core network node may combine and restore the received sub-data packets to the first data packet, and forward the first data packet to the next hop. For example, the forwarding policy may alternatively specify the lowest available QoT level of the first data packet under the degradable condition, that is, when the second QoT level is lower than the first QoT level and the second QoT level is higher than or equal to the lowest available QoT level, the first data packet may be sent to the second network device. Certainly, the foregoing merely describes examples of the forwarding policy. This application may further include more forwarding policies or a combination of forwarding policies. The first network device may flexibly select, according to the forwarding policy of the first data packet, the second network device to perform the data transmission. Therefore, when a trusted network route is constructed, flexibility of the data transmission is further improved.

For example, the first QoT level is higher than the third QoT level, and the first data packet is the sub-data packet obtained by fragmenting the data packet of the service by the terminal device.

Sending the first data packet to the second network device based on the first QoT level and the second QoT level and according to the forwarding policy includes:
The first network device sends the first data packet to the second core network node, so that the second core network node obtains the data packet of the service based on the first data packet and the second data packet, and sends the data packet of the service to the second network device based on the first QoT level and the second QoT level and according to the forwarding policy.

A QoT level of the second core network node is higher than the first QoT level, the second data packet is sent by the third network device to the second core network node, the first QoT level is higher than a fifth QoT level of the third network device, and the data packet of the service includes the forwarding policy. The second QoT level of the second network device satisfies a requirement of the forwarding policy. For example, when the data packet of the service in the forwarding policy cannot be degraded for transmission, the second QoT level needs to be higher than or equal to the first QoT level.

In this example, when the first QoT level is higher than the third QoT level, the terminal device needs to fragment the data packet of the service according to the fragmentable forwarding policy, and the first data packet is the sub-data packet from the terminal device. The first network device needs to send the first data packet to the second core network node whose QoT level is higher than or equal to the first QoT level, and the third network device sends the second data packet to the second core network node. The second core network node combines and restores all received sub-data packets (the first data packet and the second data packet) to the data packet of the service, and then sends the data packet of the service to the second network device based on the first QoT level and the second QoT level and according to the forwarding policy. In this way, when the first network device and the third network device do not satisfy a forwarding requirement of the data packet of the service, the data packet of the service may be fragmented, the first network device and the third network device separately send the received sub-data packets to the second core network node, and the second core network node sends the data packet of the service to the second network device. Therefore, the QoT level of the first network device and the QoT level of the third network device are improved, and a risk of data packet leakage of the service is reduced.

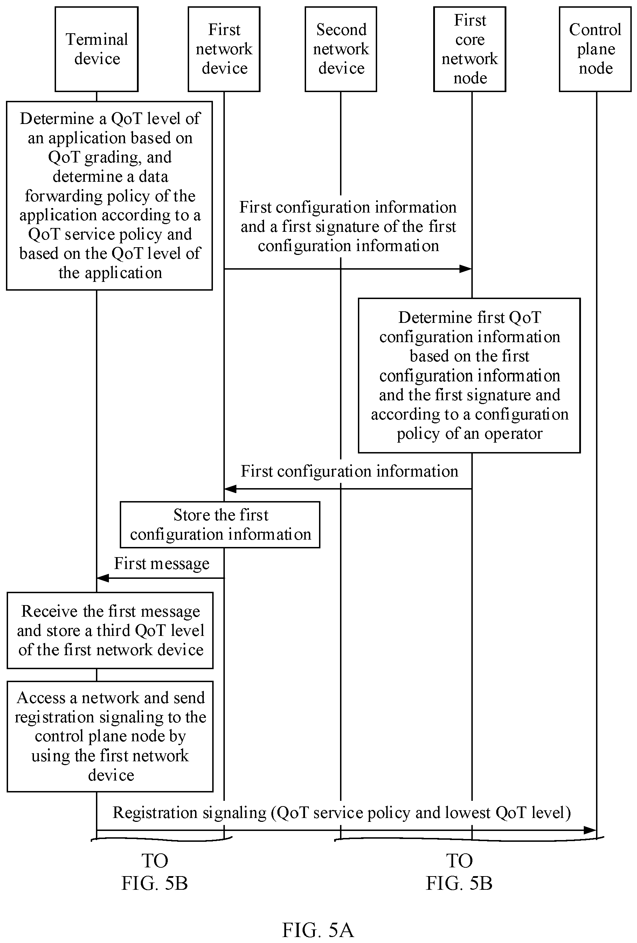

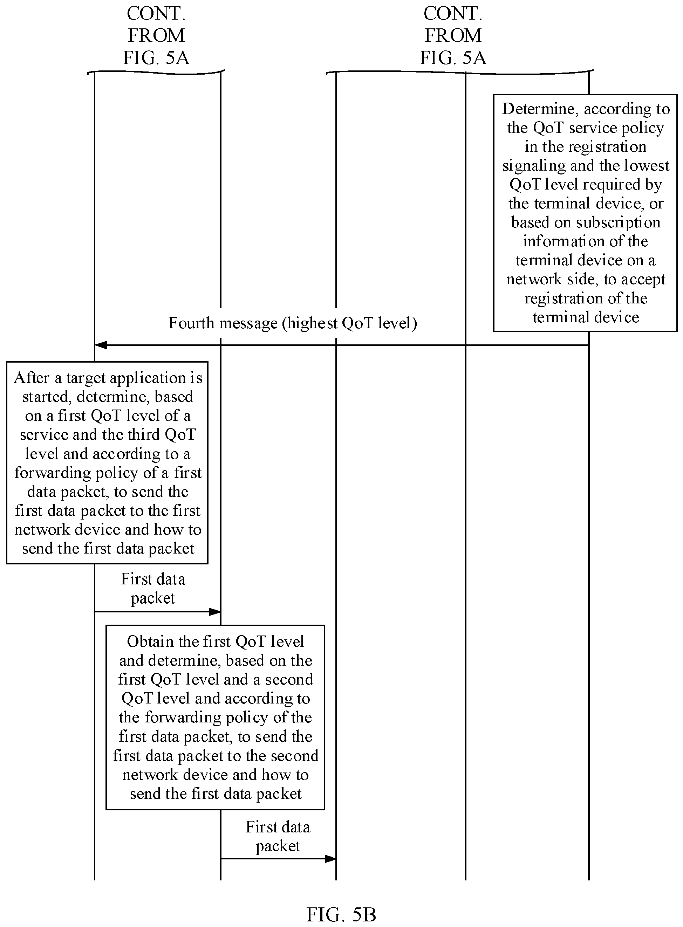

For ease of understanding, FIG. 5A and FIG. 5B are an overall schematic flowchart of a data transmission method according to an embodiment of this application. Specific steps are as follows:
(1) A terminal device determines a QoT level of an application based on QoT grading, and determines a data forwarding policy of the application according to a QoT service policy and based on the QoT level of the application.
(2) A first network device sends first configuration information and a first signature of the first configuration information to a first core network node.
(3) The first core network node determines first QoT configuration information based on the first configuration information and the first signature and according to a configuration policy of an operator, and delivers the first configuration information to the first network device.
(4) The first network device stores the first configuration information, and sends a first message to the terminal device.
(5) The terminal device receives the first message and stores a third QoT level of the first network device.
(6) The terminal device accesses a network and sends registration signaling to a control plane node by using the first network device.
(7) The control plane node determines, according to the QoT service policy in the registration signaling and based on a lowest QoT level required by the terminal device, or based on subscription information of the terminal device on a network side, to accept registration of the terminal device, and sends a fourth message to the terminal device by using the first network device.
(8) The terminal device determines, based on a highest QoT level in the fourth message, which applications are available and which applications are not available.
(9) After a target application is started, the terminal device determines, based on a first QoT level of a service and the third QoT level and according to a forwarding policy of a first data packet, to send the first data packet to the first network device and how to send the first data packet.
   The first QoT level may be carried in an IP header of the first data packet, and the first data packet may be sent by using a random access message msg.
(10) The first network device obtains the first QoT level from the first data packet, and determines, based on the first QoT level and a second QoT level and according to the forwarding policy of the first data packet, to send the first data packet to a second network device and how to send the first data packet.

It can be learned that in this embodiment, for the service on a terminal device side, the terminal device obtains the first QoT level of the service and the forwarding policy of the first data packet of the service, obtains the third QoT level of the first network device, and sends the first data packet to the first network device based on the first QoT level, according to the forwarding policy, and based on the third QoT level. The first network device receives the first data packet from the terminal device, obtains the second QoT level of the second network device, and sends the first data packet to the second network device based on the first QoT level and the second QoT level and according to the forwarding policy. It should be understood that, trustworthiness attributes of the terminal device, the service on the terminal device side, the core network node, and the network device in the network are quantized, QoT levels are configured for the terminal device, the service on the terminal device side, the core network node, and the network device, and the data forwarding policy is configured for the service on the terminal device side. When the terminal device needs to send the first data packet generated in the current service, the terminal device may determine, based on the first QoT level of the service and the third QoT level of the first network device and according to the forwarding policy of the first data packet, whether to send the first data packet to the first network device. When the first network device needs to forward the first data packet from the terminal device, the first network device may determine, based on the first QoT level of the service and the second QoT level of the second network device and according to the forwarding policy of the first data packet, whether to send the first data packet to the second network device, so that network devices selected for routing each time are trusted, thereby facilitating construction of a trusted network route for data transmission.

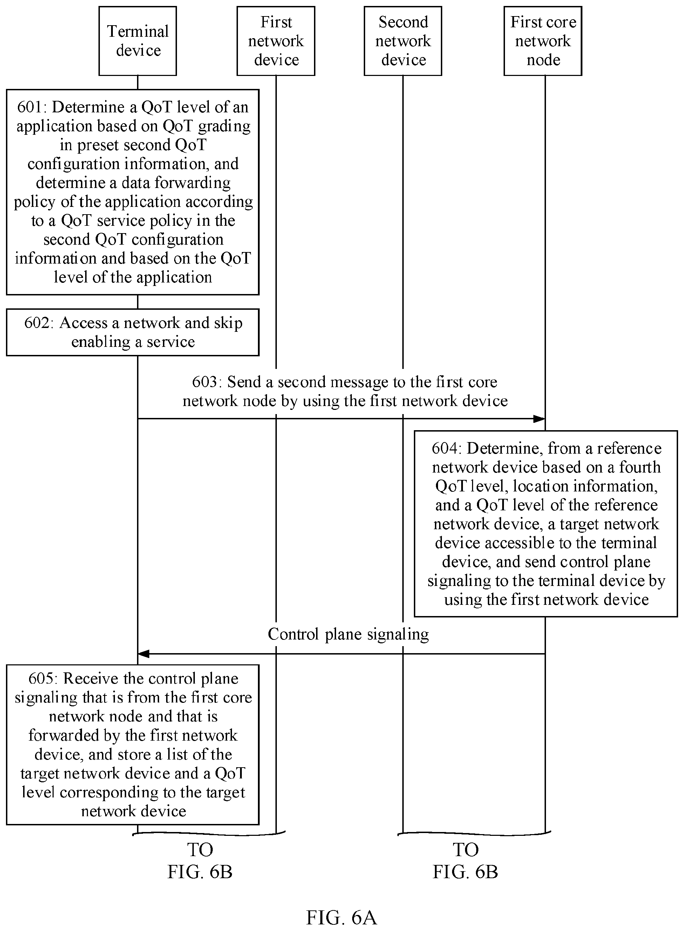

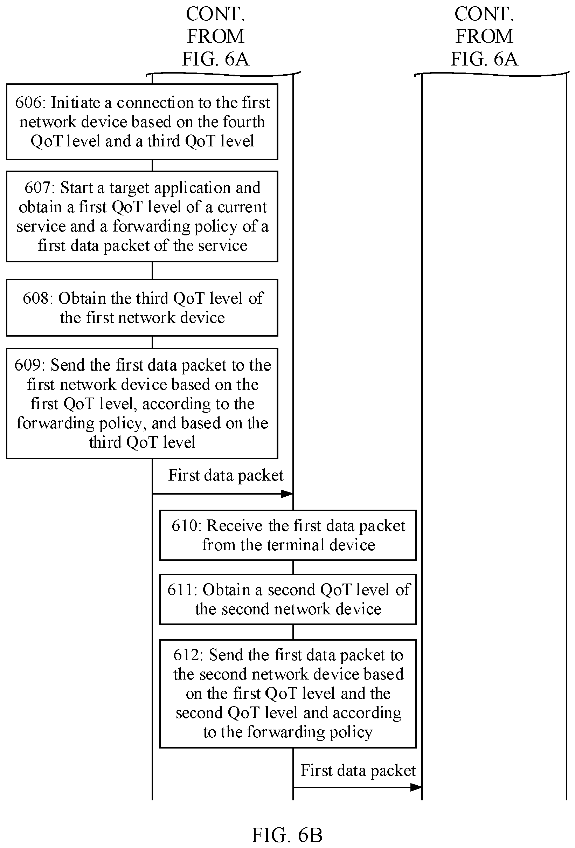

FIG. 6A and FIG. 6B are a schematic flowchart of another data transmission method according to an embodiment of this application. The method may also be applied to the data transmission system shown in FIG. 3, and the method includes but is not limited the following steps.

601: A terminal device determines a QoT level of an application based on QoT grading in preset second QoT configuration information, and determines a data forwarding policy of the application according to a QoT service policy in the second QoT configuration information and based on the QoT level of the application.

602: The terminal device accesses a network, and does not enable a service.

603: The terminal device sends a second message to a first core network node by using a first network device.

The second message includes location information of the terminal device, an identifier of a reference network device, and a fourth QoT level of the terminal device, and may further include an identifier of the terminal device, the second message is used to request the first core network node to determine, from the reference network device based on the fourth QoT level, the location information, and a QoT level of the reference network device, a target network device accessible to the terminal device, the reference network device includes a network device in a range determined based on the location information, and the identifier of the reference network device indicates the reference network device. The fourth QoT level may be configured by the terminal device or may be configured by the first core network node for the terminal device. Optionally, the second message may be a random access message msg.

604: The first core network node determines, from the reference network device based on the fourth QoT level, the location information, and the QoT level of the reference network device, the target network device accessible to the terminal device, and sends control plane signaling to the terminal device by using the first network device.

605: The terminal device receives the control plane signaling that is from the first core network node and that is forwarded by the first network device, and stores a list of the target network device and a QoT level corresponding to the target network device.

The control plane signaling from the first core network node includes an identifier and the QoT level of the target network device, and may further include the identifier of the terminal device. The target network device includes the first network device. Optionally, the control plane signaling from the first core network node may be the random access message msg.

606: The terminal device initiates a connection to the first network device based on the fourth QoT level and a third QoT level.

For example, the terminal device matches the QoT level corresponding to the target network device with the fourth QoT level, and when determining that the third QoT level is higher than or equal to the fourth QoT level, the terminal device initiates a connection request to the first network device.

607: The terminal device starts a target application, and obtains a first QoT level of a current service and a forwarding policy of a first data packet of the service.

608: The terminal device obtains the third QoT level of the first network device.

609: The terminal device sends the first data packet to the first network device based on the first QoT level, according to the forwarding policy, and based on the third QoT level.

610: The first network device receives the first data packet from the terminal device.

611: The first network device obtains a second QoT level of a second network device.

612: The first network device sends the first data packet to the second network device based on the first QoT level and the second QoT level and according to the forwarding policy.

The second QoT level of the second network device satisfies a requirement of the forwarding policy. For example, when the data packet of the service in the forwarding policy cannot be degraded for transmission, the second QoT level needs to be higher than or equal to the first QoT level.

It can be learned that in this embodiment, when an operator is not willing to expose privacy information such as the QoT level of the network device by using broadcast signaling such as a master information block MIB, a system information block SIB, and a beacon (Beacon), the terminal device may obtain, by using the control plane signaling of the first core network node, the accessible target network device and the QoT level of the target network device. This helps avoid a risk of exposing sensitive information such as the QoT level of the network device, and further helps improve security and trustworthiness of the network device.

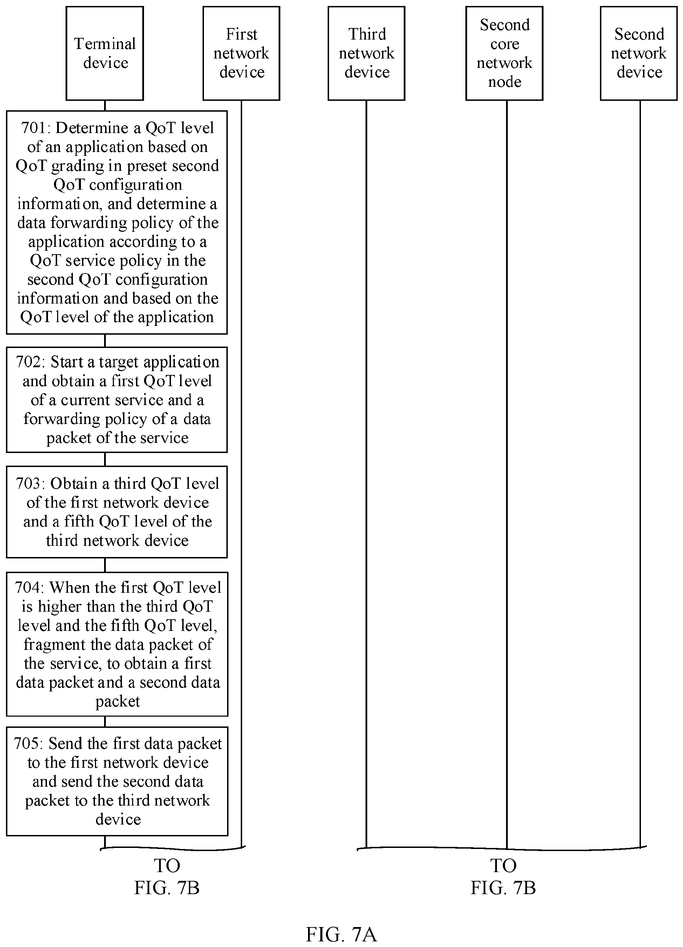

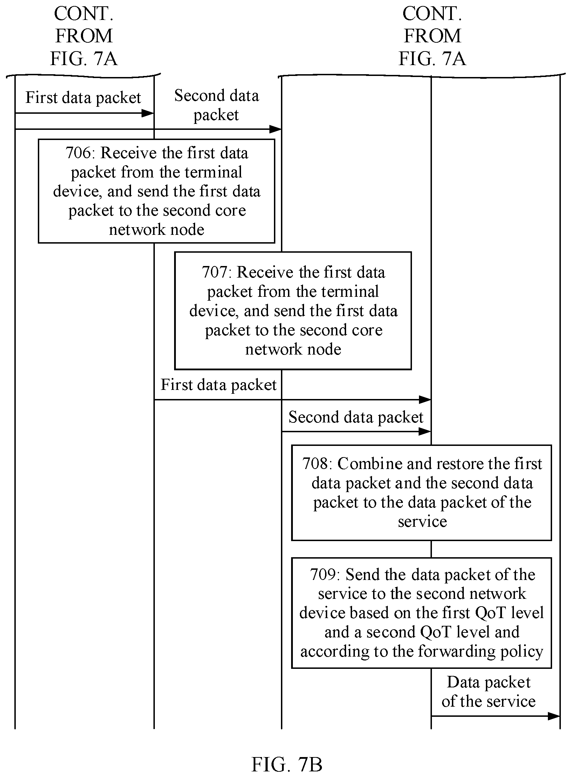

FIG. 7A and FIG. 7B are a schematic flowchart of another data transmission method according to an embodiment of this application. The method may also be applied to the data transmission system shown in FIG. 3, and the method includes but is not limited the following steps.

701: A terminal device determines a QoT level of an application based on QoT grading in preset second QoT configuration information, and determines a data forwarding policy of the application according to a QoT service policy in the second QoT configuration information and based on the QoT level of the application.

702: The terminal device starts a target application, and obtains a first QoT level of a current service and a forwarding policy of a data packet of the service.

703: The terminal device obtains a third QoT level of a first network device and a fifth QoT level of a third network device.

The first network device and the third network device are network devices currently connected to the terminal device.

704: When the first QoT level is higher than the third QoT level and the fifth QoT level, the terminal device fragments the data packet of the service, to obtain a first data packet and a second data packet.

The first data packet is a sub-data packet obtained by fragmenting the data packet of the service by the terminal device, and the second data packet is a sub-data packet other than the first data packet that is obtained by fragmenting the data packet of the service by the terminal device. The first data packet may include a part of data of the service, and the second data packet may include another part of data of the service. It should be understood that the sub-data packet usually refers to an IP packet (Packet).

705: The terminal device sends the first data packet to the first network device and sends the second data packet to the third network device.

The second data packet may be sent by using a random access message msg, and the terminal device may further encrypt the first data packet and the second data packet before sending.

706: The first network device receives the first data packet from the terminal device, and sends the first data packet to a second core network node.

707: The third network device receives the first data packet from the terminal device, and sends the first data packet to the second core network node.

A QoT level of the second core network node satisfies the first QoT level and a requirement of the forwarding policy. For example, the forwarding policy indicates that the data packet of the service needs to be forwarded by a network device or a core network node whose QoT level is higher than or equal to the first QoT level, and does not accept degraded transmission. In this case, the QoT level of the second core network node needs to be higher than or equal to the first QoT level.

708: The second core network node combines and restores the first data packet and the second data packet to the data packet of the service.

709: The second core network node sends the data packet of the service to a second network device based on the first QoT level and a second QoT level and according to the forwarding policy.

The second core network node stores the second QoT level of the second network device, and the second QoT level of the second network device satisfies the requirement of the forwarding policy. For example, when the data packet of the service in the forwarding policy cannot be degraded for transmission, the second QoT level needs to be higher than or equal to the first QoT level.

It can be learned that in this embodiment, when the third QoT level of the first network device currently connected to the terminal device and the fifth QoT level of the third network device do not satisfy the first QoT level required by the service, the terminal device may fragment the data packet of the service, and separately sends the first data packet and the second data packet to the first network device and the third network device. The first network device and the third network device respectively send the first data packet and the second data packet to the second core network node whose QoT level satisfies the first QoT level and the forwarding policy. This implements multipath (different paths) forwarding of the data packet of the service, which not only helps ensure security of the data packet of the service, but also improves trustworthiness of the first network device and the third network device.

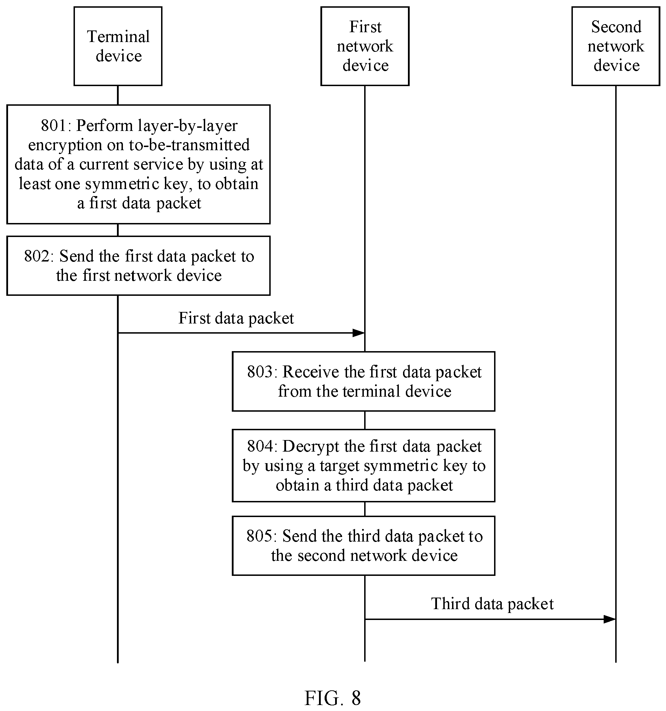

FIG. 8 is a schematic flowchart of another data transmission method according to an embodiment of this application. The method may also be applied to the data transmission system shown in FIG. 3, and the method includes but is not limited the following steps.

801: A terminal device performs layer-by-layer encryption on to-be-transmitted data of a current service by using at least one symmetric key, to obtain a first data packet.

The at least one symmetric key is a symmetric key corresponding to a network device on a transmission path of the to-be-transmitted data, the transmission path is determined based on location information of the terminal device, a first QoT level of the service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes a first network device.

For example, the terminal device may determine, based on QoT grading in preset second QoT configuration information, a QoT level of an application on the terminal device, where the second QoT configuration information may be configured by the terminal device or may be configured by a first core network node for the terminal device. For the QoT grading, refer to the definition of QoT, for example, the four levels of fully trusted, dedicated, public, and restricted, or refer to the six levels in Table 1. The second QoT configuration information includes a QoT service policy. Some QoT-based data forwarding policies are formulated in the QoT service policy. The terminal device may determine a data forwarding policy of the application according to the QoT service policy and based on the QoT level of the application. For example, for the first data packet of the current service, a base station to which the first data packet is to be sent and how to send the first data packet may be determined based on the first QoT level of the current service or a first QoT level of a target application corresponding to the current service and a QoT level of a base station in the network and according to the data forwarding policy in the QoT service policy. Optionally, when determining the QoT level for the application on the terminal device, the terminal device may further differentiate a type of an application service.

In this example, the terminal device may configure a corresponding QoT level for the application based on the QoT grading and a QoT requirement of the application, and determine the data forwarding policy of the application according to the QoT service policy and based on the QoT level of the application. Therefore, when the application subsequently executes a service and generates data, the terminal device may select, based on the QoT level, according to the data forwarding policy, and based on the QoT level of the network device, a network device to which the data is sent, and determine how to send the data, thereby facilitating construction of a trusted network route for data transmission.

For example, the terminal device may further determine a fourth QoT level of the terminal device with reference to the QoT grading in the second QoT configuration information and with reference to another factor. The another factor herein includes but is not limited to the location information of the terminal device, a purchased service, and second configuration information of the terminal device. The second configuration information is software and hardware configuration information of the first network device. For example, the second configuration information includes an identifier, a model, a manufacturer, a factory certificate, a version of used software, and the like of the terminal device.

For example, the terminal device may send the second configuration information and a second signature of the second configuration information to the first core network node by using the first network device, where the second signature is obtained by signing the second configuration information by using a private key of the terminal device. The first core network node verifies the second signature, and when the verification succeeds, configures second QoT configuration information for the terminal device based on the second configuration information and according to a configuration policy of an operator, and the terminal device receives the second QoT configuration information that is from the first core network node and that is forwarded by the first network device. The second QoT configuration information includes the fourth QoT level of the terminal device, that is, QoT configuration of the terminal device may be completed by the first core network node.

In this example, the terminal device may send the second configuration information and the second signature of the second configuration information to the first core network node by using the first network device, so that the first core network node verifies the second signature, and when the verification succeeds, configures QoT configuration information (that is, the second QoT configuration information) for the terminal device based on the second configuration information and according to the configuration policy of an operator, so that the terminal device can determine the QoT level and the data forwarding policy for the application on the terminal device based on the second QoT configuration information, thereby facilitating subsequent construction of the trusted network route. In addition, by using the fourth QoT level in the second QoT configuration information, the terminal device may further request, by using the first network device, the first core network node to determine an accessible target network device, thereby helping avoid an exposure risk caused when the target network device (for example, the first network device) sends sensitive information such as a QoT level of the target network device by using broadcast signaling.

For example, before performing the layer-by-layer encryption on the to-be-transmitted data of the current service by using the at least one symmetric key, to obtain the first data packet, the method further includes:

The terminal device sends a route request to a third core network node by using the first network device, where the route request includes the location information, the first QoT level, the forwarding policy, and the receiving end IP address, and the route request is used to request the third core network node to determine the transmission path. Optionally, the route request may further include the identifier of the terminal device, and the route request may be sent by using the random access message msg.

The terminal device receives a third message that is from the third core network node and that is forwarded by the first network device, where the third message includes the network device on the transmission path (which may be an identifier or an IP address of the network device), a certificate of the network device on the transmission path, and a temporary certificate issued by the third core network node to the terminal device. Optionally, the certificate of the network device on the transmission path is used by the terminal device to confirm an identity of the network device, that is, the terminal device determines that the network device is a network device specified by the third core network node. Optionally, the temporary certificate may include the QoT level of the network device on the transmission path and an effective period of authorization of the temporary certificate. It should be understood that the temporary certificate is used to indicate an identity of the terminal device, so that the network device on the transmission path identifies the terminal device during key agreement.

In this example, the terminal device sends the route request to the third core network code by using the first network device, so that the third core network node selects the transmission path for the to-be-transmitted data based on information in the route request, and sends the network device on the transmission path, the certificate of the network device, and the temporary certificate of the terminal device to the terminal device by using the first network device, which helps the terminal device perform the key agreement with a corresponding network device on the transmission path by using the certificate and the temporary certificate, and further helps subsequently perform the layer-by-layer encryption on the to-be-transmitted data.

For example, after receiving the third message that is from the third core network node and that is forwarded by the first network device, the method further includes:
The terminal device performs key agreement with the first network device or a subordinate node of the first network device by using the certificate of the first network device and the temporary certificate, to obtain a first service flow identifier (flow ID (identity document, unique code)) and a target symmetric key that correspond to the first network device.

Optionally, the terminal device may perform authentication and the key agreement with the first network device or the subordinate node of the first network device by using a TLS (Transport Layer Security, Transport Layer Security)/DTLS (Datagram Transport Layer Security, Datagram Transport Layer Security) protocol, and uses a session key or a legacy key of the TLS/DTLS as the symmetric key.

The first data packet is obtained by encrypting the first service flow identifier and a third data packet by using the target symmetric key, the third data packet is obtained by performing data encryption by using a symmetric key corresponding to a second network device, and the second network device is a next hop of the first network device on the transmission path.

For example, the to-be-transmitted data needs to pass through a plurality of network devices on the transmission path for transmission, for example, a plurality of routers, and the first network device and the second network device are network devices that need to be passed through in the plurality of network devices. In addition, a third QoT level of the first network device and a second QoT level of the second network device are lower than the first QoT level. The terminal device establishes a secure link with each network device by using a certificate of each network device in the plurality of network devices and the temporary certificate of the terminal device, and performs key agreement with each network device or a subordinate node of the network device, to obtain a service flow identifier and a symmetric key that correspond to each network device. It is assumed that the second network device is a network device closest to the receiving end, that is, a forwarding address of the second network device is the receiving end IP address. The terminal device obtains a service flow identifier flow 2 corresponding to the second network device, and a symmetric key is a symmetric key 2. In this case, the terminal device uses the symmetric key 2 to encrypt the flow 2 and the to-be-transmitted data (the second QoT level of the second network device may be further included), to obtain a third data packet Enc_{symmetric key 2} (flow 2, to-be-transmitted data). The terminal device obtains the first service flow identifier flow 1 corresponding to the first network device, and the target symmetric key is a symmetric key 1. In this case, the terminal device uses the symmetric key 1 to encrypt the flow 1 and the third data packet Enc_{symmetric key 2} (flow 2, to-be-transmitted data) (the third QoT level of the first network device may be further included), to obtain the first data packet EnC_{symmetric key 1} (flow 1, EnC_{symmetric key 2} (flow 2, to-be-transmitted data)). Therefore, a quantity of symmetric keys is the same as a quantity of network devices on the to-be-transmitted path, and a quantity of layers of encryption is the same as the quantity of symmetric keys.

In this example, the terminal device may perform the key agreement with the first network device or the subordinate node of the first network device over a secure link established to the first network device by using the certificate of the first network device and the temporary certificate of the terminal device, to obtain the target symmetric key and the service flow identifier (stored as the first service flow identifier) of the first network device. This helps the terminal device encrypt the third data packet and the first service flow identifier by using the target symmetric key, thereby improving security of the to-be-transmitted data.

For example, before sending the route request to the third core network node by using the first network device, the method further includes:
The terminal device accesses a network and sends registration signaling to a control plane node on a network side by using the first network device, where the registration signaling includes a QoT option (for example, the QoT service policy) provided by the terminal device and a lowest QoT level required by the terminal device, and the QoT service policy is used to determine the data forwarding policy for the application on the terminal device.

The terminal device receives a fourth message that is sent by the control plane node and that is forwarded by the first network device, where the fourth message includes a highest QoT level provided by the network, the fourth message is sent when the control plane node determines to accept registration of the terminal device according to the QoT service policy and based on the lowest QoT level, or based on subscription information of the terminal device on a network side, and the highest QoT level provided by the network is used by the terminal device to determine which applications are available and which applications are not available.

The terminal device determines, based on the highest QoT level and according to the forwarding policy, that the target application is available. For example, when the highest QoT level is higher than or equal to the first QoT level, and the forwarding policy is not accepting the degraded transmission, the target application is available. On the contrary, when the highest QoT level is lower than the first QoT level, and the forwarding policy is not accepting the degraded transmission, the target application is not available.

In this example, the terminal device sends the registration signaling to the control plane node by using the first network device, and sends the preconfigured QoT service policy and the required lowest QoT level to the control plane node. The control plane node determines to accept the registration of the terminal device according to the QoT service policy and based on the lowest QoT level, or based on the subscription information of the terminal device on the network side, and sends, to the terminal device by using the first network device and the fourth message, the highest QoT level that can be provided by the network, so that the terminal device determines, based on the highest QoT level, which applications (for example, the target application) are available on the terminal device, and performs permission setting and modification, for example, enabling or disabling, for the application on the terminal device.

For example, before accessing the network and sending the registration signaling to the control plane node on the network side, the method further includes:
The terminal device determines a QoT level of the application based on the QoT grading in the preset second QoT configuration information, where the second QoT configuration information includes the QoT service policy.

The terminal device determines the data forwarding policy of the application according to the QoT service policy and based on the QoT level of the application.

The fourth QoT level of the terminal device is determined based on the QoT grading. It should be noted that "preset" means that the second QoT configuration information may be configured by the terminal device or may be configured by the first core network node for the terminal device.

For example, for the terminal device, a forwarding policy of the first data packet includes at least one of the following:
When the first QoT level is lower than or equal to the third QoT level, the terminal device sends the first data packet to the first network device;
when the first QoT level is higher than the third QoT level and the service accepts the degraded transmission, the terminal device sends the first data packet to the first network device;
when the first QoT level is higher than the third QoT level, the terminal device does not send the first data packet to the first network device;
when the first QoT level is higher than the third QoT level, the terminal device fragments the first data packet, and sends, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop; and
when the first QoT level is higher than the third QoT level and the third QoT level is higher than or equal to a lowest available QoT level of the first data packet, the terminal device sends the first data packet to the first network device.

For example, the forwarding policy may be sending the first data packet to the first network device whose third QoT level is higher than or equal to the first QoT level. For example, the forwarding policy may alternatively be degradable transmission. In other words, if the first QoT level is higher than the third QoT level, but the terminal device configures for the service to accept the degraded transmission, the terminal device may send the first data packet to the first network device whose third QoT level is lower than the first QoT level. For example, the forwarding policy may alternatively be the fragmentation. In other words, if the first QoT level is higher than the third QoT level, the terminal device may fragment the first data packet, and then send the sub-data packets obtained through the fragmentation to different network devices, where the different network devices include the first network device, for example, a network device a and a network device b. The network device a and the network device b separately send, to the core network node whose QoT level is higher than or equal to the first QoT level, the sub-data packets obtained through the fragmentation. The core network node may combine and restore the received sub-data packets to the first data packet, and forward the first data packet to the next hop. For example, the forwarding policy may alternatively specify the lowest available QoT level of the first data packet under a degradable condition, that is, when the third QoT level is lower than the first QoT level and the third QoT level is higher than or equal to the lowest available QoT level, the first data packet may be sent to the first network device. Certainly, the foregoing merely describes examples of the forwarding policy. This application may further include more forwarding policies or a combination of forwarding policies. The terminal device may flexibly select, according to the forwarding policy of the first data packet, the first network device to perform the data transmission.

802: The terminal device sends the first data packet to the first network device.

The terminal device sends the first data packet EnC_{symmetric key 1} (flow 1, EnC_{symmetric key 2} (flow 2, to-be-transmitted data)) to the first network device based on an IP address of the first network device.

803: The first network device receives the first data packet from the terminal device.

For example, before receiving the first data packet from the terminal device, the method further includes:

The first network device forwards the route request from the terminal device to the third core network node, where the route request includes the location information, the first QoT level, the forwarding policy, and the receiving end IP address, and the route request is used to request the third core network node to determine the transmission path.

The first network device forwards the third message from the third core network node to the terminal device, where the third message includes the network device on the transmission path, the certificate of the network device on the transmission path, and the temporary certificate issued by the third core network node to the terminal device.

In this example, the first network device forwards the route request of the terminal device, so that the third core network node selects the transmission path for the to-be-transmitted data based on the information in the route request, and sends the network device on the transmission path, the certificate of the network device, and the temporary certificate of the terminal device to the terminal device by using the first network device, which helps the terminal device perform the key agreement with the corresponding network device on the transmission path by using the certificate and the temporary certificate, and further helps subsequently perform the layer-by-layer encryption on the to-be-transmitted data.

For example, the method further includes:
The first network device stores first context, where the first context is context in which the terminal device performs the key agreement with the first network device, and the first context includes a second service flow identifier and the target symmetric key; or
the first network device receives and stores second context sent by the subordinate node, where the second context is context in which the terminal device performs the key agreement with the subordinate node, the second context includes the second service flow identifier and the target symmetric key, and the subordinate node also stores the second context.

In this example, if the first network device performs the key agreement with the terminal device, the first network device needs to store the first context, or if the subordinate node of the first network device performs the key agreement with the terminal device, the subordinate node needs to store the second context, and sends the second context to the first network device for storage. Therefore, when subsequently receiving the first data packet, the first network device may perform decryption by using the target symmetric key, and forward the third data packet to the next hop when the second service flow identifier is the same as the first service flow identifier, thereby facilitating secure forwarding of the to-be-transmitted data on the transmission path.

For example, before forwarding the route request from the terminal device to the third core network node, the method further includes:

The first network device sends first configuration information and a first signature of the first configuration information to the first core network node, so that the first core network node verifies the first signature, and when the verification succeeds, configures first QoT configuration information for the first network device based on the first configuration information and according to the configuration policy of an operator, for example, determines the third QoT level, and determines the transmission path for the to-be-transmitted data based on the third QoT level. The first configuration information is the software and hardware configuration information of the first network device. For example, the first configuration information includes an identifier, a model, a manufacturer, a factory certificate, a version of used software, and the like of the first network device.

In this example, the first network device may send the first configuration information and the first signature of the first configuration information to the first core network node, so that the first core network node verifies the first signature, and when the verification succeeds, configures a QoT level (that is, the third QoT level) for the first network device based on the first configuration information and according to the configuration policy of an operator, to select the transmission path for the to-be-transmitted data based on the third QoT level. Therefore, the first network device only needs to forward the third data packet based on the transmission path after decrypting the third data packet, and does not need to perform a path selection operation, which helps reduce overheads of the first network device.

804: The first network device decrypts the first data packet by using the target symmetric key to obtain the third data packet.

For example, the method further includes:
The first network device decrypts the first data packet by using the target symmetric key to further obtain the first service flow identifier.

For example, the first network device uses the symmetric key 1 to decrypt the first data packet Enc_{symmetric key 1} (flow 1, Enc_{symmetric key 2} (flow 2, to-be-transmitted data)), to obtain the third data packet Enc_{symmetric key 2} (flow 2, to-be-transmitted data) and the flow 1. It should be understood that an IP header of the first data packet includes an IP address of the second network device, and the IP address of the second network device is used to notify the first network device of a forwarding address of the third data packet Enc_{symmetric key 2} (flow 2, to-be-transmitted data).

805: The first network device sends the third data packet to the second network device.

After receiving the third data packet, the second network device decrypts the third data packet by using the symmetric key 2, forwards the decrypted data packet or the to-be-transmitted data to a next hop, and finally sends the to-be-transmitted data to the receiving end through the transmission path.

For example, sending the third data packet to the second network device includes:
when the first service flow identifier is the same as the second service flow identifier stored by the first network device, the first network device sends the third data packet to the second network device. It should be understood that if the first service flow identifier is the same as the second service flow identifier stored by the first network device, it indicates that the service flow is a service flow that needs to be processed by the first network device, and the first network device performs an operation of sending the third data packet to the second network device. Otherwise, if the first service flow identifier is different from the second service flow identifier stored by the first network device, it indicates that the service flow is not a service flow processed by the first network device, and the first network device may not send the third data packet to the second network device. This helps avoid incorrect data forwarding.

For the first network device, the forwarding policy of the first data packet includes at least one of the following:
When the first QoT level is lower than or equal to the second QoT level, sending the first data packet to the second network device;
when the first QoT level is higher than the second QoT level and the service accepts the degraded transmission, sending the first data packet to the second network device;
when the first QoT level is higher than the second QoT level, skipping sending the first data packet to the second network device;
when the first QoT level is higher than the second QoT level, fragmenting the first data packet, and sending, through the different paths, the sub-data packets obtained through the fragmentation to the core network node whose QoT level is higher than or equal to the first QoT level, so that the core network node combines and restores the sub-data packets obtained through the fragmentation to the first data packet, and sends the first data packet to the next hop; and
when the first QoT level is higher than the second QoT level and the second QoT level is higher than or equal to the lowest available QoT level of the first data packet, sending the first data packet to the second network device.

For example, the forwarding policy may be sending the first data packet to the second network device whose second QoT level is higher than or equal to the first QoT level. For example, the forwarding policy may alternatively be the degradable transmission. In other words, if the first QoT level is higher than the second QoT level, but the terminal device configures for the service to accept the degraded transmission, the terminal device may send the first data packet to the second network device whose second QoT level is lower than the first QoT level. For example, the forwarding policy may alternatively be the fragmentation. In other words, if the first QoT level is higher than the second QoT level, the first network device may fragment the first data packet, and then send the sub-data packets obtained through the fragmentation to different network devices, where the different network devices include the second network device, for example, a network device 1 and a network device 2. The network device 1 and the network device 2 separately send, to the core network node whose QoT level is higher than or equal to the first QoT level, the sub-data packets obtained through the fragmentation. The core network node may combine and restore the received sub-data packets to the first data packet, and forward the first data packet to the next hop. For example, the forwarding policy may alternatively specify the lowest available QoT level of the first data packet under a degradable condition, that is, when the second QoT level is lower than the first QoT level and the second QoT level is higher than or equal to the lowest available QoT level, the first data packet may be sent to the second network device. Certainly, the foregoing merely describes examples of the forwarding policy. This application may further include more forwarding policies or a combination of forwarding policies. The first network device may flexibly select, according to the forwarding policy of the first data packet, the second network device to perform the data transmission. Therefore, when a trusted network route is constructed, flexibility of the data transmission is further improved.

It should be understood that, in this embodiment, the forwarding policy is mainly used by the third core network node to select an end-to-end transmission path for the to-be-transmitted data, and in a data transmission process, a sender may not need to refer to the forwarding policy.

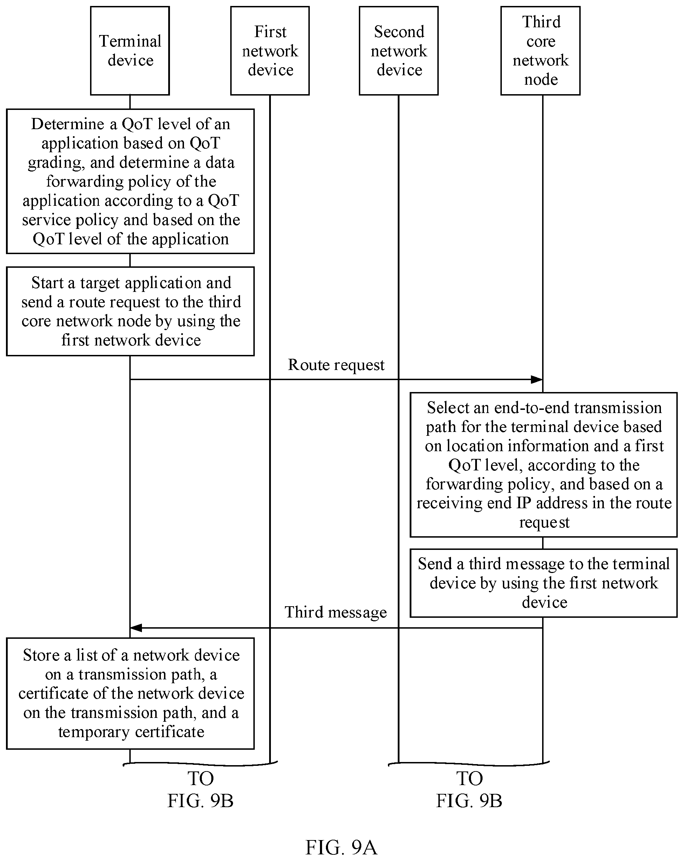

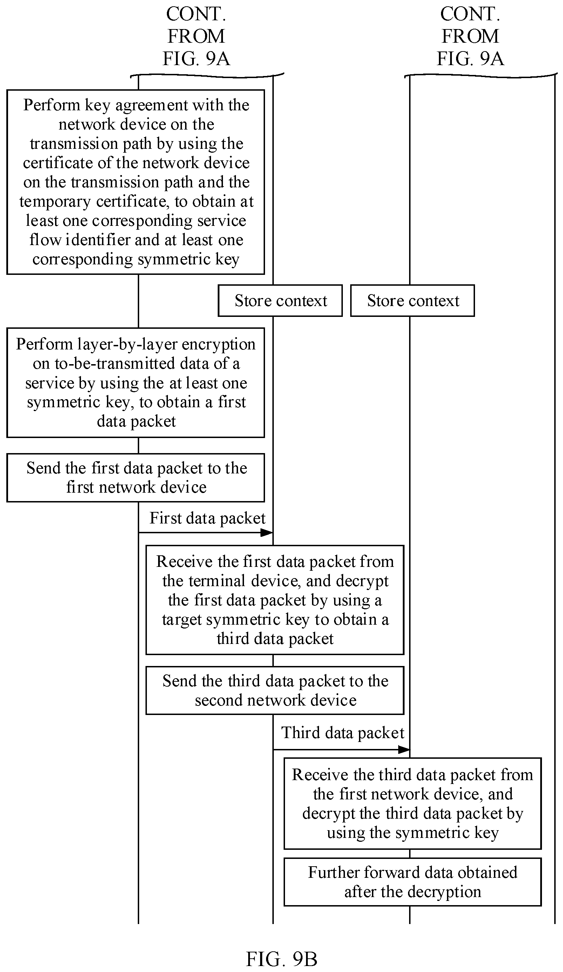

For ease of understanding, FIG. 9A and FIG. 9B are an overall schematic flowchart of another data transmission method according to an embodiment of this application. Specific steps are as follows:
(1) A terminal device determines a QoT level of an application based on QoT grading, and determines a data forwarding policy of the application according to a QoT service policy and based on the QoT level of the application.
(2) The terminal device starts a target application, and sends a route request to a third core network node by using a first network device, where the route request includes location information of the terminal device, a first QoT level, a forwarding policy, and a receiving end IP address, and the route request is used to request the third core network node to determine a transmission path.
(3) The third core network node selects an end-to-end transmission path for the terminal device based on the location information and the first QoT level, according to the forwarding policy, and based on the receiving end IP address in the route request.
(4) The third core network node sends a third message to the terminal device by using the first network device, where the third message includes a network device on the transmission path, a certificate of the network device on the transmission path, and a temporary certificate issued by the third core network node to the terminal device, and the third core network node may send the network device on the transmission path to the terminal device in a form of a list.
(5) The terminal device stores the list of the network device on the transmission path, the certificate of the network device on the transmission path, and the temporary certificate.
(6) The terminal device performs key agreement with the network device on the transmission path by using the certificate of the network device on the transmission path and the temporary certificate, to obtain at least one corresponding service flow identifier and at least one corresponding symmetric key.
(7) The first network device (or a subordinate node of the first network device) stores context, where the context includes a second service flow identifier and a target symmetric key that are obtained through key agreement performed between the first network device and the terminal device.
(8) A second network device (or a subordinate node of the second network device) stores context, where the context includes a service flow identifier and a symmetric key that are obtained through key agreement performed between the second network device and the terminal device.
(9) The terminal device performs layer-by-layer encryption on to-be-transmitted data of a service by using the at least one symmetric key, to obtain a first data packet.
(10) The terminal device sends the first data packet to the first network device.
(11) The first network device receives the first data packet from the terminal device, and decrypts the first data packet by using the target symmetric key to obtain a third data packet.
(12) The first network device sends the third data packet to the second network device.
(13) The second network device receives the third data packet from the first network device, and decrypts the third data packet by using the symmetric key.
(14) The second network device further forwards data obtained after the decryption.

It can be learned that in this embodiment, trustworthiness attributes of the terminal device, the service on the terminal device side, the core network node, and the network device (such as a base station, a router, and a gateway) in the network are quantized, QoT levels are configured for the terminal device, the service on the terminal device side, the core network node, and the network device, and the data forwarding policy is configured for the service on the terminal device side. The first core network node may determine the end-to-end transmission path for the to-be-transmitted data based on the location information of the terminal device, the first QoT level of the service corresponding to the to-be-transmitted data, and the QoT level of the network device in the network, according to the forwarding policy of the to-be-transmitted data, and based on the receiving end IP address of the to-be-transmitted data, thereby facilitating construction of a trusted network route for data transmission. Because the transmission path is selected by the first core network node, the first network device no longer needs to send a QoT level of the first network device to the terminal device, thereby helping avoid a risk of exposing the QoT level of the first network device. The terminal device may perform the layer-by-layer encryption on the to-be-transmitted data by using the symmetric key corresponding to the network device on the transmission path. Intermediate network devices (including the first network device and the second network device) can perform only partial decryption on the received data packets, and the intermediate network devices (except an intermediate network device of a previous hop of the receiving end) does not know the receiving end IP address. This helps improve data security.

The methods in embodiments of this application are described in detail above, and apparatuses in embodiments of this application are provided below.

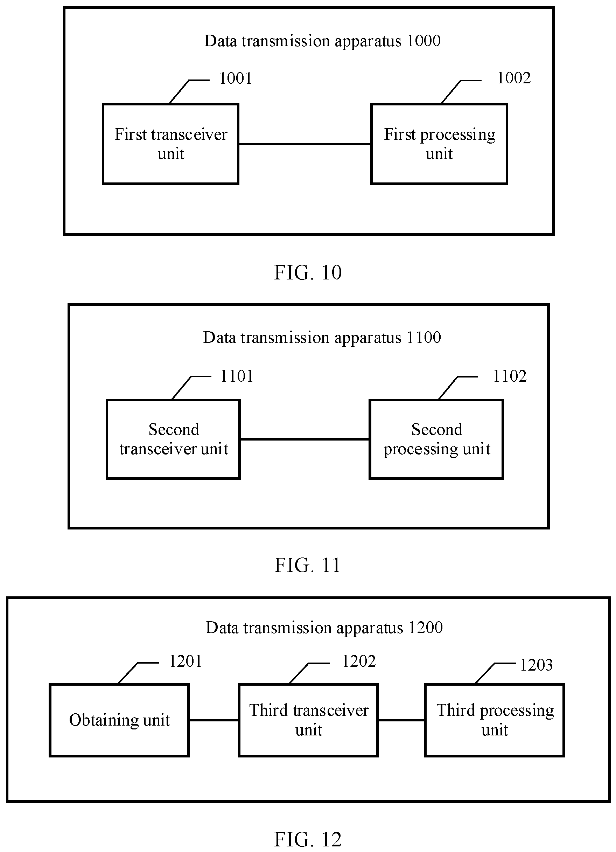

FIG. 10 is a schematic diagram of a structure of a data transmission apparatus 1000 according to an embodiment of this application. The apparatus 1000 is applied to a first network device. As shown in FIG. 10, the apparatus includes a first transceiver unit 1001 and a first processing unit 1002.

The first transceiver unit 1001 is configured to receive a first data packet from a terminal device, where the first data packet includes a first QoT level of a service corresponding to the first data packet and a forwarding policy of the first data packet.

The first processing unit 1002 is configured to obtain a second QoT level of a second network device.

The first processing unit 1002 is further configured to invoke the first transceiver unit 1001 to send the first data packet to the second network device based on the first QoT level and the second QoT level and according to the forwarding policy.

In some possible implementations, the first transceiver unit 1001 is further configured to send a first message to the terminal device, where the first message includes a third QoT level of the first network device, and the first data packet is sent by the terminal device based on the first QoT level and the third QoT level and according to the forwarding policy.

In some possible implementations, the first transceiver unit 1001 is further configured to: send first configuration information and a first signature of the first configuration information to a first core network node, so that the first core network node determines the third QoT level based on the first signature and the first configuration information and according to a configuration policy of an operator; and receive first QoT configuration information from the first core network node, where the first QoT configuration information includes the third QoT level.

In some possible implementations, the first message includes any one of a master information block MIB, a system information block SIB, a beacon (Beacon), and control plane signaling from the first core network node.

In some possible implementations, the first transceiver unit 1001 is further configured to forward a second message from the terminal device to the first core network node, where the second message includes location information of the terminal device, an identifier of a reference network device, and a fourth QoT level of the terminal device, the second message is used to request the first core network node to determine, from the reference network device based on the fourth QoT level, the location information, and a QoT level of the reference network device, a target network device accessible to the terminal device, the reference network device includes a network device in a range determined based on the location information, and the identifier of the reference network device indicates the reference network device.

In some possible implementations, in terms of sending the first message to the terminal device, the first transceiver unit 1001 is specifically configured to forward the control plane signaling from the first core network node to the terminal device, where the control plane signaling from the first core network node includes an identifier and a QoT level of the target network device, and the target network device includes the first network device.

In some possible implementations, the first processing unit 1002 is further configured to: when the first QoT level is lower than or equal to the second QoT level, invoke the first transceiver unit 1001 to send the first data packet to the second network device. The first processing unit 1002 is further configured to: when the first QoT level is higher than the second QoT level and the service accepts degraded transmission, invoke the first transceiver unit 1001 to send the first data packet to the second network device. The first processing unit 1002 is further configured to: when the first QoT level is higher than the second QoT level, skip invoking the first transceiver unit 1001 to send the first data packet to the second network device. The first processing unit 1002 is further configured to: when the first QoT level is higher than the second QoT level, fragment the first data packet, and invoke the first transceiver unit 1001 to send, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop. The first processing unit 1002 is further configured to: when the first QoT level is higher than the second QoT level and the second QoT level is higher than or equal to a lowest available QoT level of the first data packet, invoke the first transceiver unit 1001 to send the first data packet to the second network device.

In some possible implementations, the first QoT level is higher than the third QoT level, and the first data packet is a sub-data packet obtained by fragmenting a data packet of the service by the terminal device. In terms of invoking the first transceiver unit 1001 to send the first data packet to the second network device based on the first QoT level and the second QoT level and according to the forwarding policy, the first processing unit 1002 is specifically configured to: invoke the first transceiver unit 1001 to send the first data packet to a second core network node, so that the second core network node obtains the data packet of the service based on the first data packet and a second data packet, and send the data packet of the service to the second network device based on the first QoT level and the second QoT level and according to the forwarding policy. A QoT level of the second core network node is higher than or equal to the first QoT level, the second data packet is a sub-data packet other than the first data packet that is obtained by fragmenting the data packet of the service by the terminal device, the second data packet is sent by a third network device to the second core network node, the first QoT level is higher than a fifth QoT level of the third network device, and the data packet of the service includes the forwarding policy.

FIG. 11 is a schematic diagram of a structure of another data transmission apparatus 1100 according to an embodiment of this application. The apparatus 1100 is applied to a first network device. As shown in FIG. 11, the apparatus includes a second transceiver unit 1101 and a second processing unit 1102. The second transceiver unit 1101 is configured to receive a first data packet from a terminal device, where the first data packet is obtained by the terminal device by performing layer-by-layer encryption on to-be-transmitted data by using at least one symmetric key, the at least one symmetric key includes a symmetric key corresponding to a network device on a transmission path of the to-be-transmitted data, the transmission path is determined based on location information of the terminal device, a first QoT level of a service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes the first network device. The second processing unit 1102 is configured to decrypt the first data packet by using a target symmetric key to obtain a third data packet, where the target symmetric key is a symmetric key corresponding to the first network device. The second transceiver unit 1101 is further configured to send the third data packet to a second network device, where the second network device is a next hop of the first network device on the transmission path.

In some possible implementations, the second transceiver unit 1101 is further configured to: forward a route request from the terminal device to a third core network node, where the route request includes the location information, the first QoT level, the forwarding policy, and the receiving end IP address, and the route request is used to request the third core network node to determine the transmission path; and forward a third message from the third core network node to the terminal device, where the third message includes the network device on the transmission path, a certificate of the network device on the transmission path, and a temporary certificate issued by the third core network node to the terminal device.

In some possible implementations, the target symmetric key is obtained by the terminal device by performing key agreement with the first network device or a subordinate node of the first network device by using a certificate of the first network device and the temporary certificate.

The first data packet is obtained by the terminal device by encrypting a first service flow identifier and the third data packet by using the target symmetric key, and the first service flow identifier is obtained by the terminal device by performing the key agreement with the first network device or the subordinate node of the first network device by using the certificate of the first network device and the temporary certificate. The second processing unit 1102 is configured to decrypt the first data packet by using the target symmetric key to further obtain the first service flow identifier.

In terms of sending the third data packet to the second network device, the second transceiver unit 1101 is specifically configured to: when the first service flow identifier is the same as a second service flow identifier stored by the first network device, send the third data packet to the second network device.

In some possible implementations, the second processing unit 1102 is further configured to: store first context, where the first context is context in which the terminal device performs the key agreement with the first network device, and the first context includes the second service flow identifier and the target symmetric key; or receive, by using the second transceiver unit 1101, second context sent by the subordinate node, and store the second context, where the second context is context in which the terminal device performs the key agreement with the subordinate node, and the second context includes the second service flow identifier and the target symmetric key.

In some possible implementations, the second transceiver unit 1101 is further configured to send first configuration information and a first signature of the first configuration information to the first core network node, so that the first core network node determines a third QoT level based on the first signature and the first configuration information and according to a configuration policy of an operator, and obtains the transmission path based on the third QoT level.

In some possible implementations, the second processing unit 1102 is further configured to: when the first QoT level is lower than or equal to a second QoT level, invoke the second transceiver unit 1101 to send the first data packet to the second network device. The second processing unit 1102 is further configured to: when the first QoT level is higher than the second QoT level and the service accepts degraded transmission, invoke the second transceiver unit 1101 to send the first data packet to the second network device. The second processing unit 1102 is further configured to: when the first QoT level is higher than the second QoT level, skip invoking the second transceiver unit 1101 to send the first data packet to the second network device. The second processing unit 1102 is further configured to: when the first QoT level is higher than the second QoT level, fragment the first data packet, and invoke the second transceiver unit 1101 to send, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop. The second processing unit 1102 is further configured to: when the first QoT level is higher than the second QoT level and the second QoT level is higher than or equal to a lowest available QoT level of the first data packet, invoke the second transceiver unit 1101 to send the first data packet to the second network device.

FIG. 12 is a schematic diagram of a structure of another data transmission apparatus 1200 according to an embodiment of this application. The apparatus 1200 is applied to a terminal device. As shown in FIG. 12, the apparatus includes an obtaining unit 1201, a third transceiver unit 1202, and a third processing unit 1203. The obtaining unit 1201 is configured to obtain a first QoT level of a current service and a forwarding policy of a first data packet of the service. The obtaining unit 1201 is further configured to obtain a third QoT level of a first network device. The processing unit is further configured to invoke the third transceiver unit 1202 to send the first data packet to the first network device based on the first QoT level, according to the forwarding policy, and based on the third QoT level.

In some possible implementations, the third transceiver unit 1202 is further configured to receive a first message sent by the first network device, where the first message includes the third QoT level. The third processing unit 1203 is further configured to store the third QoT level, where the third QoT level is determined by a first core network node based on first configuration information of the first network device and a first signature of the first configuration information and according to a configuration policy of an operator.

In some possible implementations, the third processing unit 1203 is further configured to: access a network and invoke the third transceiver unit 1202 to send registration signaling to a control plane node on a network side by using the first network device, where the registration signaling includes a QoT service policy of the terminal device and a lowest QoT level required by the terminal device, the QoT service policy is used to determine a data forwarding policy for an application on the terminal device, and the application includes a target application corresponding to the service. The third transceiver unit 1202 is further configured to receive a fourth message that is from the control plane node and that is forwarded by the first network device, where the fourth message includes a highest QoT level provided by the network, the fourth message is sent when the control plane node determines to accept registration of the terminal device according to the QoT service policy and based on the lowest QoT level, or based on subscription information of the terminal device on the network side, and the highest QoT level is used to determine that the target application is available.

In some possible implementations, the first message includes any one of a master information block MIB, a system information block SIB, a beacon (Beacon), and control plane signaling from the first core network node.

In some possible implementations, the third transceiver unit 1202 is further configured to send a second message to the first core network node by using the first network device, where the second message includes location information of the terminal device, an identifier of a reference network device, and a fourth QoT level of the terminal device, the second message is used to request the first core network node to determine, from the reference network device based on the fourth QoT level, the location information, and a QoT level of the reference network device, a target network device accessible to the terminal device, the reference network device includes a network device in a range determined based on the location information, and the identifier of the reference network device indicates the reference network device.

In some possible implementations, in terms of receiving the first message sent by the first network device, the third transceiver unit 1202 is specifically configured to receive the control plane signaling that is from the first core network node and that is forwarded by the first network device, where the control plane signaling from the first core network node includes an identifier and a QoT level of the target network device, and the target network device includes the first network device.

In some possible implementations, the third processing unit 1203 is further configured to: when the first QoT level is lower than or equal to the third QoT level, invoke the third transceiver unit 1202 to send the first data packet to the first network device. The third processing unit 1203 is further configured to: when the first QoT level is higher than the third QoT level and the service accepts degraded transmission, invoke the third transceiver unit 1202 to send the first data packet to the first network device. The third processing unit 1203 is further configured to: when the first QoT level is higher than the third QoT level, skip invoking the third transceiver unit 1202 to send the first data packet to the first network device. The third processing unit 1203 is further configured to: when the first QoT level is higher than the third QoT level, fragment the first data packet, and invoke the third transceiver unit 1202 to send, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop. The third processing unit 1203 is further configured to: when the first QoT level is higher than the third QoT level and the third QoT level is higher than or equal to a lowest available QoT level of the first data packet, invoke the third transceiver unit 1202 to send the first data packet to the first network device.

In some possible implementations, the first data packet is a sub-data packet obtained by fragmenting a data packet of the service by the terminal device. The obtaining unit 1201 is further configured to obtain a fifth QoT level of a third network device, where the fifth QoT level is obtained based on a fifth message sent by the third network device. The third processing unit 1203 is further configured to: if the first QoT level is higher than the third QoT level and the fifth QoT level, fragment the data packet of the service, to obtain the first data packet and a second data packet, where the second data packet is a sub-data packet other than the first data packet that is obtained by fragmenting the data packet of the service by the terminal device, and the data packet of the service includes the forwarding policy. The third processing unit 1203 is further configured to invoke the third transceiver unit 1202 to send the second data packet to the third network device based on the first QoT level, according to the forwarding policy, and based on the fifth QoT level.

In some possible implementations, the third processing unit 1203 is further configured to: determine a QoT level of the application based on QoT grading in preset second QoT configuration information, where the second QoT configuration information includes the QoT service policy; and determine the data forwarding policy of the application according to the QoT service policy and based on the QoT level of the application.

In some possible implementations, the third transceiver unit 1202 is further configured to: send second configuration information and a second signature of the second configuration information to the first core network node by using the first network device; and receive the second QoT configuration information that is from the first core network node and that is forwarded by the first network device, where the second QoT configuration information is determined by the first core network node based on the second signature and the second configuration information and according to the configuration policy of an operator, and the second QoT configuration information includes the fourth QoT level.

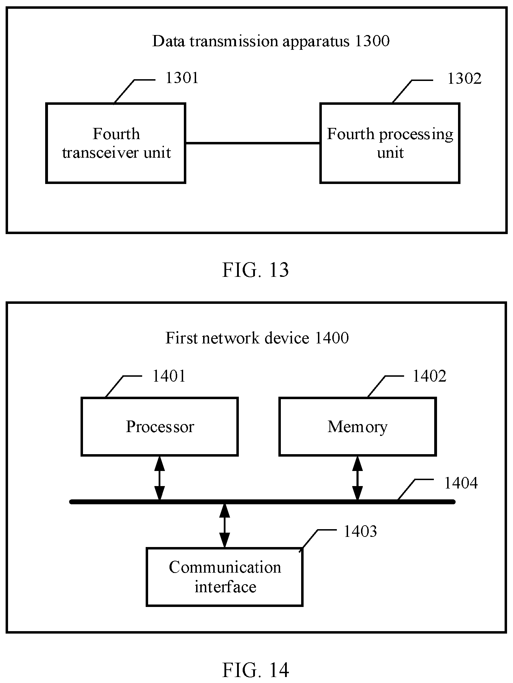

FIG. 13 is a schematic diagram of a structure of another data transmission apparatus 1300 according to an embodiment of this application. The apparatus 1300 is applied to a terminal device. As shown in FIG. 13, the apparatus includes a fourth transceiver unit 1301 and a fourth processing unit 1302. The fourth processing unit 1302 is configured to perform layer-by-layer encryption on to-be-transmitted data of a current service by using at least one symmetric key, to obtain a first data packet, where the at least one symmetric key is a symmetric key corresponding to a network device on a transmission path of the to-be-transmitted data, the transmission path is determined based on location information of the terminal device, a first QoT level of the service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes a first network device. The fourth transceiver unit 1301 is configured to send the first data packet to the first network device.

In some possible implementations, the fourth transceiver unit 1301 is further configured to: send a route request to a third core network node by using the first network device, where the route request includes the location information, the first QoT level, the forwarding policy, and the receiving end IP address, and the route request is used to request the third core network node to determine the transmission path; and receive a third message that is from the third core network node and that is forwarded by the first network device, where the third message includes the network device on the transmission path, a certificate of the network device on the transmission path, and a temporary certificate issued by the third core network node to the terminal device.

In some possible implementations, the fourth processing unit 1302 is further configured to perform key agreement with the first network device or a subordinate node of the first network device by using a certificate of the first network device and the temporary certificate, to obtain a first service flow identifier and a target symmetric key corresponding to the first network device, where the first data packet is obtained by encrypting the first service flow identifier and a third data packet by using the target symmetric key, the third data packet is obtained by performing data encryption by using a symmetric key corresponding to a second network device, and the second network device is a next hop of the first network device on the transmission path.

In some possible implementations, the fourth processing unit 1302 is further configured to: access a network and invoke the fourth transceiver unit 1301 to send registration signaling to a control plane node on a network side by using the first network device, where the registration signaling includes a QoT service policy of the terminal device and a lowest QoT level required by the terminal device, the QoT service policy is used to determine a data forwarding policy for an application on the terminal device, and the application includes a target application corresponding to the service. The fourth transceiver unit 1301 is further configured to receive a fourth message that is from the control plane node and that is forwarded by the first network device, where the fourth message includes a highest QoT level provided by the network, and the fourth message is sent when the control plane node determines to accept registration of the terminal device according to the QoT service policy and based on the lowest QoT level, or based on subscription information of the terminal device on the network side. The fourth processing unit 1302 is further configured to determine, based on the highest QoT level and according to the forwarding policy, that the target application is available.

In some possible implementations, the fourth processing unit 1302 is further configured to: determine a QoT level of the application based on QoT grading in preset second QoT configuration information, where the second QoT configuration information includes the QoT service policy; and determine the data forwarding policy of the application according to the QoT service policy and based on the QoT level of the application, where a fourth QoT level of the terminal device is determined based on the QoT grading.

In some possible implementations, the fourth transceiver unit 1301 is further configured to: send second configuration information and a second signature of the second configuration information to the first core network node by using the first network device; and receive the second QoT configuration information that is from the first core network node and that is forwarded by the first network device, where the second QoT configuration information is determined by the first core network node based on the second signature and the second configuration information and according to a configuration policy of an operator, and the second QoT configuration information includes the fourth QoT level.

In some possible implementations, the fourth processing unit 1302 is further configured to: when the first QoT level is lower than or equal to a third QoT level, invoke the fourth transceiver unit 1301 to send the first data packet to the first network device. The fourth processing unit 1302 is further configured to: when the first QoT level is higher than the third QoT level and the service accepts degraded transmission, invoke the fourth transceiver unit 1301 to send the first data packet to the first network device. The fourth processing unit 1302 is further configured to: when the first QoT level is higher than the third QoT level, skip invoking the fourth transceiver unit 1301 to send the first data packet to the first network device. The fourth processing unit 1302 is further configured to: when the first QoT level is higher than the third QoT level, fragment the first data packet, and invoke the fourth transceiver unit 1301 to send, through different paths, sub-data packets obtained through fragmentation to a core network node whose QoT level is higher than or equal to the first QoT level, so that the core network node combines and restores the sub-data packets obtained through fragmentation to the first data packet, and sends the first data packet to a next hop. The fourth processing unit 1302 is further configured to: when the first QoT level is higher than the third QoT level and the third QoT level is higher than or equal to a lowest available QoT level of the first data packet, invoke the fourth transceiver unit 1301 to send the first data packet to the first network device.

FIG. 14 is a schematic diagram of a structure of a first network device 1400 according to an embodiment of this application. The first network device 1400 includes a processor 1401, a memory 1402, and a communication interface 1403, and the processor 1401, the memory 1402, and the communication interface 1403 are connected to each other through a bus 1404.

The memory 1402 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1402 is configured to store a related computer program and data. The communication interface 1403 is configured to: receive and send data.

The processor 1401 may be one or more central processing units (central processing unit, CPU). When the processor 1401 is a CPU, the CPU may be a single-core CPU or a multi-core CPU.

The processor 1401 in the first network device 1400 is configured to: read computer program code stored in the memory 1402, and perform the following operations: receiving a first data packet from a terminal device by using the communication interface 1403, where the first data packet includes a first QoT level of a service corresponding to the first data packet and a forwarding policy of the first data packet; obtaining a second QoT level of a second network device; and sending the first data packet to the second network device based on the first QoT level and the second QoT level and according to the forwarding policy by using the communication interface 1403.

In the first network device 1400 shown in FIG. 14, when the first network device needs to forward the first data packet from the terminal device, the first network device may determine, based on the first QoT level of the service and the second QoT level of the second network device and according to the forwarding policy of the first data packet, whether to send the first data packet to the second network device. For example, if the forwarding policy of the first data packet indicates that the first data packet can be forwarded only to a network device whose QoT level is higher than or equal to the first QoT level, when the second QoT level is higher than or equal to the first QoT level, the first network device sends the first data packet to the second network device. Certainly, there may be a plurality of forwarding policies. This is not limited in this application. It should be understood that, based on the first QoT level and the second QoT level and according to the forwarding policy, the first data packet is sent to the second network device only when the second QoT level satisfies the first QoT level and the forwarding policy, so that network devices selected for routing each time are trusted, thereby facilitating construction of a trusted network route for data transmission.

The processor 1401 in the first network device 1400 is configured to: read the computer program code stored in the memory 1402, and further perform the following operations: receiving the first data packet from the terminal device by using the communication interface 1403, where the first data packet is obtained by the terminal device by performing layer-by-layer encryption on to-be-transmitted data by using at least one symmetric key, the at least one symmetric key includes a symmetric key corresponding to a network device on a transmission path of the to-be-transmitted data, the transmission path is determined based on location information of the terminal device, the first QoT level of the service corresponding to the to-be-transmitted data, and a QoT level of the network device on the transmission path, according to a forwarding policy of the to-be-transmitted data, and based on a receiving end IP address of the to-be-transmitted data, and the network device on the transmission path includes the first network device; decrypting the first data packet by using a target symmetric key to obtain a third data packet, where the target symmetric key is a symmetric key corresponding to the first network device; and sending the third data packet to the second network device by using the communication interface 1403, where the second network device is a next hop of the first network device on the transmission path.

In the first network device 1400 shown in FIG. 14, the transmission path is determined for the to-be-transmitted data based on the location information of the terminal device, the first QoT level of the service corresponding to the to-be-transmitted data, and the QoT level of the network device in the network, according to the forwarding policy of the to-be-transmitted data, and based on the receiving end IP address of the to-be-transmitted data, thereby implementing the construction of the trusted network route. In addition, the terminal device may perform the layer-by-layer encryption on the to-be-transmitted data by using the symmetric key corresponding to the network device on the transmission path. The first network device on the transmission path decrypts the first data packet by using the target symmetric key, to obtain an encrypted third data packet. After decrypting the third data packet, the second network device obtains an encrypted data packet. Because the network device on the transmission path does not know the receiving end IP address of the to-be-transmitted data, the network device can only perform partial decryption and send the data to a next hop, and the next hop can only perform partial decryption, and cannot obtain unencrypted to-be-transmitted data. This helps improve data security.

It should be noted that, for implementation of the operations, refer to the corresponding descriptions in the method embodiment shown in FIG. 4.

It should be noted that although only the processor 1401, the memory 1402, and the communication interface 1403 are shown in the first network device 1400 shown in FIG. 14, in a specific implementation process, a person skilled in the art should understand that the first network device 1400 further includes another component necessary for implementing normal running. In addition, based on a specific requirement, a person skilled in the art should understand that the first network device 1400 may further include hardware components for implementing other additional functions. In addition, a person skilled in the art should understand that the first network device 1400 may alternatively include only components necessary for implementing embodiments of this application, but not necessarily include all the components shown in FIG. 14.

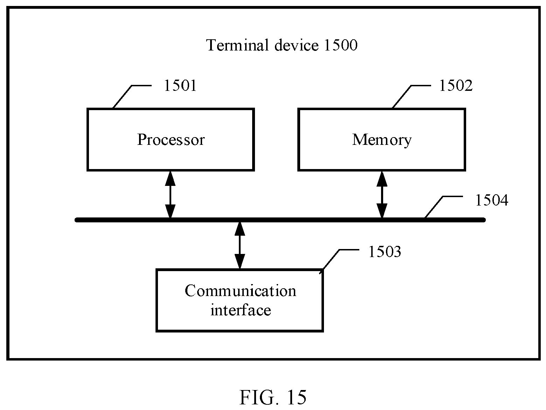

FIG. 15 is a schematic diagram of a structure of a terminal device 1500 according to an embodiment of this application. The terminal device 1500 includes a processor 1501, a memory 1502, and a communication interface 1503, and the processor 1501, the memory 1502, and the communication interface 1503 are connected to each other through a bus 1504.

The memory 1502 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1502 is configured to store a related computer program and data. The communication interface 1503 is configured to: receive and send data.

The processor 1501 may be one or more central processing units (central processing unit, CPU). When the processor 1501 is a CPU, the CPU may be a single-core CPU or a multi-core CPU.

The processor 1501 in the terminal device 1500 is configured to: read computer program code stored in the memory 1502, and perform the following operations: obtaining a first QoT level of a current service and a forwarding policy of a first data packet of the service; obtaining a third QoT level of a first network device; and sending the first data packet to the first network device based on the first QoT level, according to the forwarding policy, and based on the third QoT level by using the communication interface 1503.

In the terminal device 1500 shown in FIG. 15, when the processor 1501 needs to send the first data packet generated in the current service, the processor 1501 may determine, based on the first QoT level of the service and the third QoT level of the first network device and according to the forwarding policy of the first data packet, whether to send the first data packet to the first network device. It should be understood that, based on the first QoT level and the third QoT level and according to the forwarding policy, the first data packet is sent to the first network device only when the third QoT level satisfies the first QoT level and the forwarding policy, so that all selected first network devices are trusted, thereby facilitating construction of a trusted network route for data transmission.

The processor 1501 in the terminal device 1500 is configured to: read the computer program code stored in the memory 1502, and further perform the following operations: performing layer-by-layer encryption on to-be-transmitted data of the current service by using at least one symmetric key, to obtain the first data packet, where the at least one symmetric key is a symmetric key corresponding to a network device on a transmission path of the to-be-transmitted data, the transmission path is determined based on location information of the terminal device, the first QoT level of the service corresponding to the to-be-transmitted data, and a QoT level of the network device on the transmission path, according to the forwarding policy of the to-be-transmitted data, and based on a receiving end IP address of the to-be-transmitted data, and the network device on the transmission path includes the first network device; and sending the first data packet to the first network device by using the communication interface 1503.

In the terminal device 1500 shown in FIG. 15, the transmission path is determined for the to-be-transmitted data based on the location information of the terminal device 1500, the first QoT level of the service corresponding to the to-be-transmitted data, and the QoT level of the network device in the network, according to the forwarding policy of the to-be-transmitted data, and based on the receiving end IP address of the to-be-transmitted data, thereby implementing the construction of the trusted network route. In addition, when the processor 1501 needs to send the to-be-transmitted data, the processor 1501 may perform the layer-by-layer encryption on the to-be-transmitted data by using the symmetric key corresponding to the network device on the transmission path, and intermediate network devices (including the first network device) can perform only partial decryption on the first data packet, which helps improve data security.

It should be noted that, for implementation of the operations, refer to the corresponding descriptions in the method embodiment shown in FIG. 8.

It should be noted that although only the processor 1501, the memory 1502, and the communication interface 1503 are shown in the terminal device 1500 shown in FIG. 15, in a specific implementation process, a person skilled in the art should understand that the terminal device 1500 further includes another component necessary for implementing normal running. In addition, based on a specific requirement, a person skilled in the art should understand that the terminal device 1500 may further include hardware components for implementing other additional functions. In addition, a person skilled in the art should understand that the terminal device 1500 may alternatively include only components necessary for implementing embodiments of this application, but not necessarily include all the components shown in FIG. 15.

An embodiment of this application further provides a computer-readable storage medium. The computer-readable storage medium stores program code that is executed by a device. When the program code is run on a first network device, the method procedures shown in FIG. 4 to FIG. 7A and FIG. 7B are implemented.

An embodiment of this application further provides a computer-readable storage medium. The computer-readable storage medium stores program code that is executed by a device. When the program code is run on a terminal device, the method procedures shown in FIG. 8 and FIG. 9A and FIG. 9B are implemented.

An embodiment of this application further provides a computer program product. When the computer program product is run on a first network device, the method procedures shown in FIG. 4 to FIG. 7A and FIG. 7B are implemented.

An embodiment of this application further provides a computer program product. When the computer program product is run on a terminal device, the method procedures shown in FIG. 8 and FIG. 9A and FIG. 9B are implemented.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a discrete gate or transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) is integrated into the processor.

It should be noted that the memory described in this specification intends to include, but is not limited to, these memories and any other memory of an appropriate type.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, a character "/" usually indicates an "or" relationship between the associated objects.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof.

## Claims

1. A data transmission method, performed by a first network device, wherein the method comprises:
receiving (404, 610) a first data packet from a terminal device, wherein the first data packet comprises a first quality of trust level of a service corresponding to the first data packet and a forwarding policy of the first data packet;
obtaining (405, 611) a second quality of trust level of a second network device; and
sending (406, 612) the first data packet to the second network device based on the first quality of trust level and the second quality of trust level and according to the forwarding policy,
wherein before the receiving (404, 610) a first data packet from a terminal device, the method further comprises:
sending a first message to the terminal device, wherein the first message comprises a third quality of trust level of the first network device, and the first data packet is sent by the terminal device based on the first quality of trust level and the third quality of trust level and according to the forwarding policy; and
wherein before the sending a first message to the terminal device, the method further comprises:
sending first configuration information and a first signature of the first configuration information to a first core network node, so that the first core network node determines the third quality of trust level based on the first signature and the first configuration information and according to a configuration policy of an operator, wherein the first configuration information is software and hardware configuration information of the first network device; and
receiving first quality of trust configuration information from the first core network node, wherein the first quality of trust configuration information comprises the third quality of trust level.

2. The method according to claim 1, wherein
the first message comprises any one of a master information block, MIB, a system information block, SIB, a beacon, and control plane signaling from the first core network node.

3. The method according to claim 2, wherein after the sending first configuration information to a first core network node, the method further comprises:
forwarding (603) a second message from the terminal device to the first core network node, wherein the second message comprises location information of the terminal device, an identifier of a reference network device, and a fourth quality of trust level of the terminal device, the second message is used to request the first core network node to determine, from the reference network device based on the fourth quality of trust level, the location information, and a quality of trust level of the reference network device, a target network device accessible to the terminal device, the reference network device comprises a network device in a range determined based on the location information, and the identifier of the reference network device indicates the reference network device.

4. The method according to claim 3, wherein the first message comprises the control plane signaling from the first core network node, and the sending a first message to the terminal device comprises:
forwarding the control plane signaling from the first core network node to the terminal device, wherein the control plane signaling from the first core network node comprises an identifier and a quality of trust level of the target network device, and
the target network device comprises the first network device.

5. The method according to any one of claims 1 to 4, wherein the forwarding policy comprises at least one of the following:
when the first quality of trust level is lower than or equal to the second quality of trust level, sending the first data packet to the second network device;
when the first quality of trust level is higher than the second quality of trust level and the service accepts degraded transmission, sending the first data packet to the second network device;
when the first quality of trust level is higher than the second quality of trust level, skipping sending the first data packet to the second network device;
when the first quality of trust level is higher than the second quality of trust level, fragmenting the first data packet, and sending, through different paths, sub-data packets obtained through fragmentation to a core network node whose quality of trust level is higher than or equal to the first quality of trust level, so that the core network node combines and restores the sub-data packets obtained through fragmentation to the first data packet, and sends the first data packet to a next hop; and
when the first quality of trust level is higher than the second quality of trust level and the second quality of trust level is higher than or equal to a lowest available quality of trust level of the first data packet, sending the first data packet to the second network device.

6. The method according to any one of claims 1 to 5, wherein the first quality of trust level is higher than the third quality of trust level, and the first data packet is a sub-data packet obtained by fragmenting a data packet of the service by the terminal device; and
the sending the first data packet to the second network device based on the first quality of trust level and the second quality of trust level and according to the forwarding policy comprises:
sending the first data packet to a second core network node, so that the second core network node obtains the data packet of the service based on the first data packet and a second data packet, and sending the data packet of the service to the second network device based on the first quality of trust level and the second quality of trust level and according to the forwarding policy, wherein
a quality of trust level of the second core network node is higher than or equal to the first quality of trust level, the second data packet is a sub-data packet other than the first data packet that is obtained by fragmenting the data packet of the service by the terminal device, the second data packet is sent by a third network device to the second core network node, the first quality of trust level is higher than a fifth quality of trust level of the third network device, and the data packet of the service comprises the forwarding policy.

7. A data transmission method comprising the method according to claim 1 and further comprising:
obtaining (401, 607), by the terminal device, the first quality of trust level of the service and the forwarding policy of the first data packet of the service;
obtaining (402, 608), by the terminal device, the third quality of trust level of the first network device; and
sending (403, 609), by the terminal device, the first data packet to the first network device based on the first quality of trust level, according to the forwarding policy, and based on the third quality of trust level;
wherein before the obtaining (401, 607), by the terminal device, the first quality of trust level of the service and the forwarding policy of the first data packet of the service, the method further comprises:
receiving, by the terminal device, the first message sent by the first network device, wherein the first message comprises the third quality of trust level; and
storing the third quality of trust level.

8. The method according to claim 7, wherein after the storing, by the terminal device, the third quality of trust level, the method further comprises:
accessing, by the terminal device, a network and sending, by the terminal device, registration signaling to a control plane node on a network side by using the first network device, wherein the registration signaling comprises a quality of trust service policy of the terminal device and a lowest quality of trust level required by the terminal device, the quality of trust service policy is used to determine a data forwarding policy for an application on the terminal device, and the application comprises a target application corresponding to the service; and
receiving, by the terminal device, a fourth message that is from the control plane node and that is forwarded by the first network device, wherein the fourth message comprises a highest quality of trust level provided by the network, the fourth message is sent when the control plane node determines to accept registration of the terminal device according to the quality of trust service policy and based on the lowest quality of trust level, or based on subscription information of the terminal device on the network side, and the highest quality of trust level is used to determine that the target application is available.

9. The method according to claim 7 or 8, wherein
the first message comprises any one of a master information block, MIB, a system information block, SIB, a beacon, and control plane signaling from the first core network node.

10. The method according to claim 9, wherein after the receiving, by the terminal device, a fourth message that is from the control plane node and that is forwarded by the first network device, the method further comprises:
sending, by the terminal device, a second message to the first core network node by using the first network device, wherein the second message comprises location information of the terminal device, an identifier of a reference network device, and a fourth quality of trust level of the terminal device, the second message is used to request the first core network node to determine, from the reference network device based on the fourth quality of trust level, the location information, and a quality of trust level of the reference network device, a target network device accessible to the terminal device, the reference network device comprises a network device in a range determined based on the location information, and the identifier of the reference network device indicates the reference network device.

11. The method according to claim 10, wherein the first message comprises the control plane signaling from the first core network node, and the receiving, by the terminal device, the first message sent by the first network device comprises:
receiving, by the terminal device, the control plane signaling that is from the first core network node and that is forwarded by the first network device, wherein the control plane signaling from the first core network node comprises an identifier and a quality of trust level of the target network device, and
the target network device comprises the first network device.

12. The method according to any one of claims 7 to 11, wherein the forwarding policy comprises at least one of the following:
when the first quality of trust level is lower than or equal to the third quality of trust level, sending, by the terminal device, the first data packet to the first network device;
when the first quality of trust level is higher than the third quality of trust level and the service accepts degraded transmission, sending, by the terminal device, the first data packet to the first network device;
when the first quality of trust level is higher than the third quality of trust level, skipping, by the terminal device, sending the first data packet to the first network device;
when the first quality of trust level is higher than the third quality of trust level, fragmenting, by the terminal device, the first data packet, and sending, by the terminal device through different paths, sub-data packets obtained through fragmentation to a core network node whose quality of trust level is higher than or equal to the first quality of trust level, so that the core network node combines and restores the sub-data packets obtained through fragmentation to the first data packet, and sends the first data packet to a next hop; and
when the first quality of trust level is higher than the third quality of trust level and the third quality of trust level is higher than or equal to a lowest available quality of trust level of the first data packet, sending, by the terminal device, the first data packet to the first network device.

13. The method according to any one of claims 7 to 12, wherein the first data packet is a sub-data packet obtained by fragmenting a data packet of the service by the terminal device; and
after the receiving, by the terminal device, a fourth message that is from the control plane node and that is forwarded by the first network device, the method further comprises:
obtaining, by the terminal device, a fifth quality of trust level of a third network device, wherein the fifth quality of trust level is obtained based on a fifth message sent by the third network device; and
if the first quality of trust level is higher than the third quality of trust level and the fifth quality of trust level, fragmenting, by the terminal device, the data packet of the service, to obtain the first data packet and a second data packet, wherein the second data packet is a sub-data packet other than the first data packet that is obtained by fragmenting the data packet of the service by the terminal device, and the data packet of the service comprises the forwarding policy; and
the method further comprises:
sending, by the terminal device, the second data packet to the third network device based on the first quality of trust level, according to the forwarding policy, and based on the fifth quality of trust level.

14. A first network device (1400), comprising a processor (1401), a memory (1402), a communication interface (1403), and one or more programs stored in the memory wherein, when the one or more programs are executed by the processor, the first network device is caused to perform the method according to any one of claims 1 to 6.

15. A system comprising:
a terminal device (1500), wherein the terminal device comprises a processor (1501), a memory (1502), a communication interface (1503), and one or more programs stored in the memory and, when the one or more programs are executed by the processor, the terminal device is caused to perform the steps performed by the terminal device in claim 7; and
wherein the system further comprises the first network device of claim 14.

16. A computer program wherein, when the computer program is executed by the processor (1401) of the first network device (1400) of claim 14, the first network device is caused to perform the method according to any one of claims 1 to 6.

17. A computer-readable storage medium having stored thereon the computer program of claim 16.

## Patentansprüche

1. Datenübertragungsverfahren, das durch eine erste Netzvorrichtung durchgeführt wird, wobei das Verfahren Folgendes umfasst:
Empfangen (404, 610) eines ersten Datenpakets von einer Endgerätevorrichtung, wobei das erste Datenpaket eine erste Vertrauensqualitätsstufe eines Dienstes, der dem ersten Datenpaket entspricht, und eine Weiterleitungsrichtlinie des ersten Datenpakets umfasst;
Erlangen (405, 611) einer zweiten Vertrauensqualitätsstufe einer zweiten Netzvorrichtung; und
Senden (406, 612) des ersten Datenpakets an die zweite Netzvorrichtung basierend auf der ersten Vertrauensqualitätsstufe und der zweiten Vertrauensqualitätsstufe und gemäß der Weiterleitungsrichtlinie,
wobei das Verfahren vor dem Empfangen (404, 610) eines ersten Datenpakets von einer Endgerätevorrichtung ferner Folgendes umfasst:
Senden einer ersten Nachricht an die Endgerätevorrichtung, wobei die erste Nachricht eine dritte Vertrauensqualitätsstufe der ersten Netzvorrichtung umfasst und das erste Datenpaket durch die Endgerätevorrichtung basierend auf der ersten Vertrauensqualitätsstufe und der dritten Vertrauensqualitätsstufe und gemäß der Weiterleitungsrichtlinie gesendet wird; und
wobei das Verfahren vor dem Senden einer ersten Nachricht an die Endgerätevorrichtung ferner Folgendes umfasst:
Senden erster Konfigurationsinformationen und einer ersten Signatur der ersten Konfigurationsinformationen an einen ersten Kernnetzknoten, sodass der erste Kernnetzknoten die dritte Vertrauensqualitätsstufe basierend auf der ersten Signatur und den ersten Konfigurationsinformationen und gemäß einer Konfigurationsrichtlinie eines Betreibers bestimmt, wobei die ersten Konfigurationsinformationen Software- und
Hardwarekonfigurationsinformationen der ersten Netzvorrichtung sind; und
Empfangen erster Vertrauensqualitätskonfigurationsinformationen von dem ersten Kernnetzknoten, wobei die ersten Vertrauensqualitätskonfigurationsinformationen die dritte Vertrauensqualitätsstufe umfassen.

2. Verfahren nach Anspruch 1, wobei
die erste Nachricht ein beliebiges eines Masterinformationsblocks, MIB, eines Systeminformationsblocks, SIB, einer Bake und einer Steuerebenensignalisierung von dem ersten Kernnetzknoten umfasst.

3. Verfahren nach Anspruch 2, wobei das Verfahren nach dem Senden erster Konfigurationsinformationen an einen ersten Kernnetzknoten ferner Folgendes umfasst:
Weiterleiten (603) einer zweiten Nachricht von der Endgerätevorrichtung an den ersten Kernnetzknoten, wobei die zweite Nachricht Ortsinformationen der Endgerätevorrichtung, eine Kennung einer Referenznetzvorrichtung und eine vierte Vertrauensqualitätsstufe der Endgerätevorrichtung umfasst, die zweite Nachricht dazu verwendet wird, den ersten Kernnetzknoten dazu aufzufordern, aus der Referenznetzvorrichtung basierend auf der vierten Vertrauensqualitätsstufe, den Ortsinformationen und einer Vertrauensqualitätsstufe der Referenznetzvorrichtung eine Zielnetzvorrichtung zu bestimmen, die für die Endgerätevorrichtung zugänglich ist, die Referenznetzvorrichtung eine Netzvorrichtung in einem Bereich umfasst, der basierend auf den Ortsinformationen bestimmt wird, und die Kennung der Referenznetzvorrichtung die Referenznetzvorrichtung angibt.

4. Verfahren nach Anspruch 3, wobei die erste Nachricht die Steuerebenensignalisierung von dem ersten Kernnetzknoten umfasst und das Senden einer ersten Nachricht an die Endgerätevorrichtung Folgendes umfasst:
Weiterleiten der Steuerebenensignalisierung von dem ersten Kernnetzknoten an die Endgerätevorrichtung, wobei die Steuerebenensignalisierung von dem ersten Kernnetzknoten eine Kennung und eine Vertrauensqualitätsstufe der Zielnetzvorrichtung umfasst, und
die Zielnetzvorrichtung die erste Netzvorrichtung umfasst.

5. Verfahren nach einem der Ansprüche 1 bis 4, wobei die Weiterleitungsrichtlinie mindestens eines von Folgendem umfasst:
wenn die erste Vertrauensqualitätsstufe niedriger als oder gleich der zweiten Vertrauensqualitätsstufe ist, Senden des ersten Datenpakets an die zweite Netzvorrichtung;
wenn die erste Vertrauensqualitätsstufe höher als die zweite Vertrauensqualitätsstufe ist und der Dienst eine verschlechterte Übertragung akzeptiert, Senden des ersten Datenpakets an die zweite Netzvorrichtung;
wenn die erste Vertrauensqualitätsstufe höher als die zweite Vertrauensqualitätsstufe ist, Überspringen des Sendens des ersten Datenpakets an die zweite Netzvorrichtung;
wenn die erste Vertrauensqualitätsstufe höher als die zweite Vertrauensqualitätsstufe ist, Fragmentieren des ersten Datenpakets und Senden, über unterschiedliche Pfade, von Teildatenpaketen, die über die Fragmentierung erlangt werden, an einen Kernnetzknoten, dessen Vertrauensqualitätsstufe höher als oder gleich der ersten Vertrauensqualitätsstufe ist, sodass der Kernnetzknoten die Teildatenpakete, die über die Fragmentierung erlangt werden, kombiniert und zu dem ersten Datenpaket zusammensetzt und das erste Datenpaket an einen nächsten Hop sendet; und
wenn die erste Vertrauensqualitätsstufe höher als die zweite Vertrauensqualitätsstufe ist und die zweite Vertrauensqualitätsstufe höher als oder gleich einer niedrigsten verfügbaren Vertrauensqualitätsstufe des ersten Datenpakets ist, Senden des ersten Datenpakets an die zweite Netzvorrichtung.

6. Verfahren nach einem der Ansprüche 1 bis 5, wobei die erste Vertrauensqualitätsstufe höher als die dritte Vertrauensqualitätsstufe ist und das erste Datenpaket ein Teildatenpaket ist, das durch Fragmentieren eines Datenpakets des Dienstes durch die Endgerätevorrichtung erlangt wird; und das Senden des ersten Datenpakets an die zweite Netzvorrichtung basierend auf der ersten Vertrauensqualitätsstufe und der zweiten Vertrauensqualitätsstufe und gemäß der Weiterleitungsrichtlinie Folgendes umfasst:
Senden des ersten Datenpakets an einen zweiten Kernnetzknoten, sodass der zweite Kernnetzknoten das Datenpaket des Dienstes basierend auf dem ersten Datenpaket und einem zweiten Datenpaket erlangt, und Senden des Datenpakets des Dienstes an die zweite Netzvorrichtung basierend auf der ersten Vertrauensqualitätsstufe und der zweiten Vertrauensqualitätsstufe und gemäß der Weiterleitungsrichtlinie, wobei
eine Vertrauensqualitätsstufe des zweiten Kernnetzknotens höher als oder gleich der ersten Vertrauensqualitätsstufe ist, das zweite Datenpaket ein anderes Teildatenpaket als das erste Datenpaket ist, das durch das Fragmentieren des Datenpakets des Dienstes durch die Endgerätevorrichtung erlangt wird, das zweite Datenpaket durch eine dritte Netzvorrichtung an den zweiten Kernnetzknoten gesendet wird, die erste Vertrauensqualitätsstufe höher als eine fünfte Vertrauensqualitätsstufe der dritten Netzvorrichtung ist und das Datenpaket des Dienstes die Weiterleitungsrichtlinie umfasst.

7. Datenübertragungsverfahren, umfassend das Verfahren nach Anspruch 1 und ferner umfassend:
Erlangen (401, 607), durch die Endgerätevorrichtung, der ersten Vertrauensqualitätsstufe des Dienstes und der Weiterleitungsrichtlinie des ersten Datenpakets des Dienstes;
Erlangen (402, 608), durch die Endgerätevorrichtung, der dritten Vertrauensqualitätsstufe der ersten Netzvorrichtung; und
Senden (403, 609), durch die Endgerätevorrichtung, des ersten Datenpakets an die erste Netzvorrichtung basierend auf der ersten Vertrauensqualitätsstufe, gemäß der Weiterleitungsrichtlinie und basierend auf der dritten Vertrauensqualitätsstufe;
wobei das Verfahren vor dem Erlangen (401, 607), durch die Endgerätevorrichtung, der ersten Vertrauensqualitätsstufe des Dienstes und der Weiterleitungsrichtlinie des ersten Datenpakets des Dienstes ferner Folgendes umfasst:
Empfangen, durch die Endgerätevorrichtung, der ersten Nachricht, die durch die erste Netzvorrichtung gesendet wird, wobei die erste Nachricht die dritte Vertrauensqualitätsstufe umfasst; und Speichern der dritten Vertrauensqualitätsstufe.

8. Verfahren nach Anspruch 7, wobei das Verfahren nach dem Speichern, durch die Endgerätevorrichtung, der dritten Vertrauensqualitätsstufe ferner Folgendes umfasst:
Zugreifen, durch die Endgerätevorrichtung, auf ein Netz und Senden, durch die Endgerätevorrichtung, einer Registrierungssignalisierung an einen Steuerebenenknoten auf einer Netzseite unter Verwendung der ersten Netzvorrichtung, wobei die Registrierungssignalisierung eine Vertrauensqualitätsdienstrichtlinie der Endgerätevorrichtung und eine niedrigste Vertrauensqualitätsstufe umfasst, die durch die Endgerätevorrichtung erfordert wird, die Vertrauensqualitätsdienstrichtlinie dazu verwendet wird, eine Datenweiterleitungsrichtlinie für eine Anwendung auf der Endgerätevorrichtung zu bestimmen, und die Anwendung eine Zielanwendung umfasst, die dem Dienst entspricht; und
Empfangen, durch die Endgerätevorrichtung, einer vierten Nachricht, die von dem Steuerebenenknoten stammt und die durch die erste Netzvorrichtung weitergeleitet wird, wobei die vierte Nachricht eine höchste Vertrauensqualitätsstufe umfasst, die durch das Netz bereitgestellt wird, die vierte Nachricht gesendet wird, wenn der Steuerebenenknoten bestimmt, eine Registrierung der Endgerätevorrichtung gemäß der Vertrauensqualitätsdienstrichtlinie und basierend auf der niedrigsten Vertrauensqualitätsstufe oder basierend auf Abonnementinformationen der Endgerätevorrichtung auf der Netzseite zu akzeptieren, und die höchste Vertrauensqualitätsstufe dazu verwendet wird, zu bestimmen, dass die Zielanwendung verfügbar ist.

9. Verfahren nach Anspruch 7 oder 8, wobei
die erste Nachricht ein beliebiges eines Masterinformationsblocks, MIB, eines Systeminformationsblocks, SIB, einer Bake und einer Steuerebenensignalisierung von dem ersten Kernnetzknoten umfasst.

10. Verfahren nach Anspruch 9, wobei das Verfahren nach dem Empfangen, durch die Endgerätevorrichtung, einer vierten Nachricht, die von dem Steuerebenenknoten stammt und die durch die erste Netzvorrichtung weitergeleitet wird, ferner Folgendes umfasst:
Senden, durch die Endgerätevorrichtung, einer zweiten Nachricht an den ersten Kernnetzknoten unter Verwendung der ersten Netzvorrichtung, wobei die zweite Nachricht Ortsinformationen der Endgerätevorrichtung, eine Kennung einer Referenznetzvorrichtung und eine vierte Vertrauensqualitätsstufe der Endgerätevorrichtung umfasst, die zweite Nachricht dazu verwendet wird, den ersten Kernnetzknoten dazu aufzufordern, aus der Referenznetzvorrichtung basierend auf der vierten Vertrauensqualitätsstufe, den Ortsinformationen und einer Vertrauensqualitätsstufe der Referenznetzvorrichtung eine Zielnetzvorrichtung zu bestimmen, die für die Endgerätevorrichtung zugänglich ist, die Referenznetzvorrichtung eine Netzvorrichtung in einem Bereich umfasst, der basierend auf den Ortsinformationen bestimmt wird, und die Kennung der Referenznetzvorrichtung die Referenznetzvorrichtung angibt.

11. Verfahren nach Anspruch 10, wobei die erste Nachricht die Steuerebenensignalisierung von dem ersten Kernnetzknoten umfasst und das Empfangen, durch die Endgerätevorrichtung, der ersten Nachricht, die durch die erste Netzvorrichtung gesendet wird, Folgendes umfasst:
Empfangen, durch die Endgerätevorrichtung, der Steuerebenensignalisierung, die von dem ersten Kernnetzknoten stammt und die durch die erste Netzvorrichtung weitergeleitet wird, wobei die Steuerebenensignalisierung von dem ersten Kernnetzknoten eine Kennung und eine Vertrauensqualitätsstufe der Zielnetzvorrichtung umfasst, und
die Zielnetzvorrichtung die erste Netzvorrichtung umfasst.

12. Verfahren nach einem der Ansprüche 7 bis 11, wobei die Weiterleitungsrichtlinie mindestens eines von Folgendem umfasst:
wenn die erste Vertrauensqualitätsstufe niedriger als oder gleich der dritten Vertrauensqualitätsstufe ist, Senden, durch die Endgerätevorrichtung, des ersten Datenpakets an die erste Netzvorrichtung;
wenn die erste Vertrauensqualitätsstufe höher als die dritte Vertrauensqualitätsstufe ist und der Dienst eine verschlechterte Übertragung akzeptiert, Senden, durch die Endgerätevorrichtung, des ersten Datenpakets an die erste Netzvorrichtung;
wenn die erste Vertrauensqualitätsstufe höher als die dritte Vertrauensqualitätsstufe ist, Überspringen, durch die Endgerätevorrichtung, des Sendens des ersten Datenpakets an die erste Netzvorrichtung;
wenn die erste Vertrauensqualitätsstufe höher als die dritte Vertrauensqualitätsstufe ist, Fragmentieren, durch die Endgerätevorrichtung, des ersten Datenpakets und Senden, durch die Endgerätevorrichtung über unterschiedliche Pfade, von Teildatenpaketen, die über die Fragmentierung erlangt werden, an einen Kernnetzknoten, dessen Vertrauensqualitätsstufe höher als oder gleich der ersten Vertrauensqualitätsstufe ist, sodass der Kernnetzknoten die Teildatenpakete, die über die Fragmentierung erlangt werden, kombiniert und zu dem ersten Datenpaket zusammensetzt und das erste Datenpaket an einen nächsten Hop sendet; und
wenn die erste Vertrauensqualitätsstufe höher als die dritte Vertrauensqualitätsstufe ist und die dritte Vertrauensqualitätsstufe höher als oder gleich einer niedrigsten verfügbaren Vertrauensqualitätsstufe des ersten Datenpakets ist, Senden, durch die Endgerätevorrichtung, des ersten Datenpakets an die erste Netzvorrichtung.

13. Verfahren nach einem der Ansprüche 7 bis 12, wobei das erste Datenpaket ein Teildatenpaket ist, das durch Fragmentieren eines Datenpakets des Dienstes durch die Endgerätevorrichtung erlangt wird; und
das Verfahren nach dem Empfangen, durch die Endgerätevorrichtung, einer vierten Nachricht, die von dem Steuerebenenknoten stammt und die durch die erste Netzvorrichtung weitergeleitet wird, ferner Folgendes umfasst:
Erlangen, durch die Endgerätevorrichtung, einer fünften Vertrauensqualitätsstufe einer dritten Netzvorrichtung, wobei die fünfte Vertrauensqualitätsstufe basierend auf einer fünften Nachricht erlangt wird, die durch die dritte Netzvorrichtung gesendet wird; und
falls die erste Vertrauensqualitätsstufe höher als die dritte Vertrauensqualitätsstufe und die fünfte Vertrauensqualitätsstufe ist, Fragmentieren, durch die Endgerätevorrichtung, des Datenpakets des Dienstes, um das erste Datenpaket und ein zweites Datenpaket zu erlangen, wobei das zweite Datenpaket ein anderes Teildatenpaket als das erste Datenpaket ist, das durch das Fragmentieren des Datenpakets des Dienstes durch die Endgerätevorrichtung erlangt wird, und das Datenpaket des Dienstes die Weiterleitungsrichtlinie umfasst; und
das Verfahren ferner Folgendes umfasst:
Senden, durch die Endgerätevorrichtung, des zweiten Datenpakets an die dritte Netzvorrichtung basierend auf der ersten Vertrauensqualitätsstufe, gemäß der Weiterleitungsrichtlinie und basierend auf der fünften Vertrauensqualitätsstufe.

14. Erste Netzvorrichtung (1400), umfassend einen Prozessor (1401), einen Speicher (1402), eine Kommunikationsschnittstelle (1403) und ein oder mehrere Programme, die in dem Speicher gespeichert sind, wobei, wenn das eine oder die mehreren Programme durch den Prozessor ausgeführt werden, die erste Netzvorrichtung dazu veranlasst wird, das Verfahren nach einem der Ansprüche 1 bis 6 durchzuführen.

15. System, umfassend:
eine Endgerätevorrichtung (1500), wobei die Endgerätevorrichtung einen Prozessor (1501), einen Speicher (1502), eine Kommunikationsschnittstelle (1503) und ein oder mehrere Programme umfasst, die in dem Speicher gespeichert sind, und, wenn das eine oder die mehreren Programme durch den Prozessor ausgeführt werden, die Endgerätevorrichtung dazu veranlasst wird, die Schritte durchzuführen, die durch die Endgerätevorrichtung in Anspruch 7 durchgeführt werden; und
wobei das System ferner die erste Netzvorrichtung nach Anspruch 14 umfasst.

16. Computerprogramm, wobei, wenn das Computerprogramm durch den Prozessor (1401) der ersten Netzvorrichtung (1400) nach Anspruch 14 ausgeführt wird, die erste Netzvorrichtung dazu veranlasst wird, das Verfahren nach einem der Ansprüche 1 bis 6 durchzuführen.

17. Computerlesbares Speichermedium, welches das darauf gespeicherte Computerprogramm nach Anspruch 16 aufweist.

## Revendications

1. Procédé de transmission de données, réalisé par un premier dispositif réseau, dans lequel le procédé comprend :
la réception (404, 610) d'un premier paquet de données provenant d'un dispositif terminal, dans lequel le premier paquet de données comprend un premier niveau de qualité de confiance d'un service correspondant au premier paquet de données et une politique de transfert du premier paquet de données ;
l'obtention (405, 611) d'un deuxième niveau de qualité de confiance pour un second dispositif réseau ; et
l'envoi (406, 612) du premier paquet de données au second dispositif réseau sur la base du premier niveau de qualité de confiance et du deuxième niveau de qualité de confiance et conformément à la politique de transfert,
dans lequel, avant la réception (404, 610) d'un premier paquet de données provenant d'un dispositif terminal, le procédé comprend en outre :
l'envoi d'un premier message au dispositif terminal, dans lequel le premier message comprend un troisième niveau de qualité de confiance du premier dispositif réseau, et le premier paquet de données est envoyé par le dispositif terminal sur la base du premier niveau de qualité de confiance et du troisième niveau de qualité de confiance et conformément à la politique de transfert ; et
dans lequel, avant l'envoi d'un premier message au dispositif terminal, le procédé comprend en outre :
l'envoi de premières informations de configuration et d'une première signature des premières informations de configuration à un premier nœud de réseau central, de sorte que le premier nœud de réseau central détermine le troisième niveau de qualité de confiance sur la base de la première signature et des premières informations de configuration et conformément à une politique de configuration d'un opérateur, dans lequel les premières informations de configuration sont des informations de configuration logicielle et matérielle du premier dispositif réseau ; et
la réception de premières informations de configuration de qualité de confiance provenant du premier nœud de réseau central, dans lequel les premières informations de configuration de qualité de confiance comprennent le troisième niveau de qualité de confiance.

2. Procédé selon la revendication 1, dans lequel le premier message comprend l'un quelconque d'un bloc d'informations maître, MIB, d'un bloc d'informations système, SIB, d'une balise et d'une signalisation de plan de commande provenant du premier nœud de réseau central.

3. Procédé selon la revendication 2, dans lequel, après l'envoi des premières informations de configuration à un premier nœud de réseau central, le procédé comprend en outre :
le transfert (603) d'un deuxième message à partir du dispositif terminal au premier nœud de réseau central, dans lequel le deuxième message comprend des informations d'emplacement du dispositif terminal, un identifiant d'un dispositif réseau de référence et un quatrième niveau de qualité de confiance du dispositif terminal, le deuxième message est utilisé pour demander au premier nœud de réseau central de déterminer, à partir du dispositif réseau de référence sur la base du quatrième niveau de qualité de confiance, des informations d'emplacement et d'un niveau de qualité de confiance du dispositif réseau de référence, un dispositif réseau cible accessible au dispositif terminal, le dispositif réseau de référence comprend un dispositif réseau dans une plage déterminée sur la base des informations d'emplacement, et l'identifiant du dispositif réseau de référence indique le dispositif réseau de référence.

4. Procédé selon la revendication 3, dans lequel le premier message comprend la signalisation de plan de commande provenant du premier nœud de réseau central, et l'envoi d'un premier message au dispositif terminal comprend :
la transmission de la signalisation de plan de commande du premier nœud de réseau central au dispositif terminal, dans lequel la signalisation de plan de commande provenant du premier nœud de réseau central comprend un identifiant et un niveau de qualité de confiance du dispositif réseau cible, et
le dispositif réseau cible comprend le premier dispositif réseau.

5. Procédé selon l'une quelconque des revendications 1 à 4, dans lequel la politique de transfert comprend au moins l'un des éléments suivants :
lorsque le premier niveau de qualité de confiance est inférieur ou égal au deuxième niveau de qualité de confiance, l'envoi du premier paquet de données au second dispositif réseau ;
lorsque le premier niveau de qualité de confiance est supérieur au deuxième niveau de qualité de confiance et que le service accepte une transmission dégradée, l'envoi du premier paquet de données au second dispositif réseau ;
lorsque le premier niveau de qualité de confiance est supérieur au deuxième niveau de qualité de confiance, l'omission de l'envoi du premier paquet de données au second dispositif réseau ;
lorsque le premier niveau de qualité de confiance est supérieur au deuxième niveau de qualité de confiance, la fragmentation du premier paquet de données, et l'envoi, à travers des chemins différents, de sous-paquets de données obtenus par la fragmentation à un nœud de réseau central dont le niveau de qualité de confiance est supérieur ou égal au premier niveau de qualité de confiance, de sorte que le nœud de réseau central combine et reconstitue les sous-paquets de données obtenus par la fragmentation en le premier paquet de données, et envoie le premier paquet de données à un saut suivant ; et
lorsque le premier niveau de qualité de confiance est supérieur au deuxième niveau de qualité de confiance et que le deuxième niveau de qualité de confiance est supérieur ou égal à un niveau de qualité de confiance le plus bas disponible du premier paquet de données, l'envoi du premier paquet de données au second dispositif réseau.

6. Procédé selon l'une quelconque des revendications 1 à 5, dans lequel le premier niveau de qualité de confiance est supérieur au troisième niveau de qualité de confiance, et le premier paquet de données est un sous-paquet de données obtenu par fragmentation d'un paquet de données du service par le dispositif terminal ; et
l'envoi du premier paquet de données au second dispositif réseau sur la base du premier niveau de qualité de confiance et du deuxième niveau de qualité de confiance, et conformément à la politique de transfert, comprend :
l'envoi du premier paquet de données à un second nœud de réseau central, de sorte que le second nœud de réseau central obtient le paquet de données du service sur la base du premier paquet de données et d'un second paquet de données, et l'envoi du paquet de données du service au second dispositif réseau sur la base du premier niveau de qualité de confiance et du deuxième niveau de qualité de confiance, et conformément à la politique de transfert, dans lequel
un niveau de qualité de confiance du second nœud de réseau central est supérieur ou égal au premier niveau de qualité de confiance, le second paquet de données est un sous-paquet de données autre que le premier paquet de données qui est obtenu par fragmentation du paquet de données du service par le dispositif terminal, le second paquet de données est envoyé par un troisième dispositif réseau au second nœud de réseau central, le premier niveau de qualité de confiance est supérieur à un cinquième niveau de qualité de confiance du troisième dispositif réseau, et le paquet de données du service comprend la politique de transfert.

7. Procédé de transmission de données comprenant le procédé selon la revendication 1 et comprenant en outre :
l'obtention (401, 607), par le dispositif terminal, du premier niveau de qualité de confiance du service et de la politique de transfert du premier paquet de données du service ;
l'obtention (402, 608), par le dispositif terminal, du troisième niveau de qualité de confiance du premier dispositif réseau ; et
l'envoi (403, 609), par le dispositif terminal, du premier paquet de données au premier dispositif réseau sur la base du premier niveau de qualité de confiance, conformément à la politique de transfert, et sur la base du troisième niveau de qualité de confiance ;
dans lequel avant l'obtention (401, 607), par le dispositif terminal, du premier niveau de qualité de confiance du service et de la politique de transfert du premier paquet de données du service, le procédé comprend en outre :
la réception, par le dispositif terminal, du premier message envoyé par le premier dispositif réseau, dans lequel le premier message comprend le troisième niveau de qualité de confiance ; et
le stockage du troisième niveau de qualité de confiance.

8. Procédé selon la revendication 7, dans lequel, après le stockage, par le dispositif terminal, du troisième niveau de qualité de confiance, le procédé comprend en outre :
l'accès, par le dispositif terminal, à un réseau et l'envoi, par le dispositif terminal, d'une signalisation d'enregistrement à un nœud de plan de commande sur un côté réseau à l'aide du premier dispositif réseau, dans lequel la signalisation d'enregistrement comprend une politique de service de qualité de confiance du dispositif terminal et un niveau de qualité de confiance le plus bas requis par le dispositif terminal, la politique de service de qualité de confiance est utilisée pour déterminer une politique de transfert de données pour une application sur le dispositif terminal, et l'application comprend une application cible correspondant au service ; et
la réception, par le dispositif terminal, d'un quatrième message qui provient du nœud de plan de commande et qui est transféré par le premier dispositif réseau, dans lequel le quatrième message comprend un niveau de qualité de confiance le plus élevé fourni par le réseau, le quatrième message est envoyé lorsque le nœud de plan de commande décide d'accepter l'enregistrement du dispositif terminal conformément à la politique de service de qualité de confiance et sur la base du niveau de qualité de confiance le plus bas, ou sur la base d'informations d'abonnement du dispositif terminal sur le côté réseau, et le niveau de qualité de confiance le plus élevé est utilisé pour déterminer que l'application cible est disponible.

9. Procédé selon la revendication 7 ou 8, dans lequel le premier message comprend l'un quelconque d'un bloc d'informations maître, MIB, d'un bloc d'informations système, SIB, d'une balise et d'une signalisation de plan de commande provenant du premier nœud de réseau central.

10. Procédé selon la revendication 9, dans lequel, après la réception, par le dispositif terminal, d'un quatrième message qui provient du nœud de plan de commande et qui est transféré par le premier dispositif réseau, le procédé comprend en outre : l'envoi, par le dispositif terminal, d'un deuxième message au premier nœud de réseau central à l'aide du premier dispositif réseau, dans lequel le deuxième message comprend des informations d'emplacement du dispositif terminal, un identifiant d'un dispositif réseau de référence et un quatrième niveau de qualité de confiance du dispositif terminal, le deuxième message est utilisé pour demander au premier nœud de réseau central de déterminer, à partir du dispositif réseau de référence sur la base du quatrième niveau de qualité de confiance, des informations d'emplacement et d'un niveau de qualité de confiance du dispositif réseau de référence, un dispositif réseau cible accessible au dispositif terminal, le dispositif réseau de référence comprend un dispositif réseau dans une plage déterminée sur la base des informations d'emplacement, et l'identifiant du dispositif réseau de référence indique le dispositif réseau de référence.

11. Procédé selon la revendication 10, dans lequel le premier message comprend la signalisation de plan de commande provenant du premier nœud de réseau central, et la réception, par le dispositif terminal, du premier message envoyé par le premier dispositif réseau comprend :
la réception, par le dispositif terminal, de la signalisation de plan de commande qui provient du premier nœud de réseau central et qui est transférée par le premier dispositif réseau, dans lequel la signalisation de plan de commande provenant du premier nœud de réseau central comprend un identifiant et un niveau de qualité de confiance du dispositif réseau cible, et
le dispositif réseau cible comprend le premier dispositif réseau.

12. Procédé selon l'une quelconque des revendications 7 à 11, dans lequel la politique de transfert comprend au moins l'un des éléments suivants :
lorsque le premier niveau de qualité de confiance est inférieur ou égal au troisième niveau de qualité de confiance, l'envoi, par le dispositif terminal, du premier paquet de données au premier dispositif réseau ;
lorsque le premier niveau de qualité de confiance est supérieur au troisième niveau de qualité de confiance et que le service accepte une transmission dégradée, l'envoi, par le dispositif terminal, du premier paquet de données au premier dispositif réseau ;
lorsque le premier niveau de qualité de confiance est supérieur au troisième niveau de qualité de confiance, l'omission, par le dispositif terminal, de l'envoi du premier paquet de données au premier dispositif réseau ;
lorsque le premier niveau de qualité de confiance est supérieur au troisième niveau de qualité de confiance, la fragmentation, par le dispositif terminal, du premier paquet de données, et l'envoi, par le dispositif terminal à travers des chemins différents, de sous-paquets de données obtenus par la fragmentation à un nœud de réseau central dont le niveau de qualité de confiance est supérieur ou égal au premier niveau de qualité de confiance, de sorte que le nœud de réseau central combine et reconstitue les sous-paquets de données obtenus par la fragmentation en le premier paquet de données, et envoie le premier paquet de données à un saut suivant ; et
lorsque le premier niveau de qualité de confiance est supérieur au troisième niveau de qualité de confiance et que le troisième niveau de qualité de confiance est supérieur ou égal à un niveau de qualité de confiance le plus bas disponible du premier paquet de données, l'envoi, par le dispositif terminal, du premier paquet de données au premier dispositif réseau.

13. Procédé selon l'une quelconque des revendications 7 à 12, dans lequel le premier paquet de données est un sous-paquet de données obtenu par fragmentation d'un paquet de données du service par le dispositif terminal ; et
après la réception, par le dispositif terminal, d'un quatrième message qui provient du nœud de plan de commande et qui est transféré par le premier dispositif réseau, le procédé comprend en outre :
l'obtention, par le dispositif terminal, d'un cinquième niveau de qualité de confiance d'un troisième dispositif réseau, dans lequel le cinquième niveau de qualité de confiance est obtenu sur la base d'un cinquième message envoyé par le troisième dispositif réseau ; et
si le premier niveau de qualité de confiance est supérieur au troisième niveau de qualité de confiance et au cinquième niveau de qualité de confiance, la fragmentation, par le dispositif terminal, du paquet de données du service, pour obtenir le premier paquet de données et un second paquet de données, dans lequel le second paquet de données est un sous-paquet de données autre que le premier paquet de données qui est obtenu par fragmentation du paquet de données du service par le dispositif terminal, et le paquet de données du service comprend la politique de transfert ; et
le procédé comprend en outre :
l'envoi, par le dispositif terminal, du second paquet de données au troisième dispositif réseau sur la base du premier niveau de qualité de confiance, conformément à la politique de transfert, et sur la base du cinquième niveau de qualité de confiance.

14. Premier dispositif réseau (1400), comprenant un processeur (1401), une mémoire (1402), une interface de communication (1403), et un ou plusieurs programmes stockés dans la mémoire, dans lequel, lorsque les un ou plusieurs programmes sont exécutés par le processeur, le premier dispositif réseau est amené à réaliser le procédé selon l'une quelconque des revendications 1 à 6.

15. Système comprenant :
un dispositif terminal (1500), dans lequel le dispositif terminal comprend un processeur (1501), une mémoire (1502), une interface de communication (1503), et un ou plusieurs programmes stockés dans la mémoire, et dans lequel, lorsque les un ou plusieurs programmes sont exécutés par le processeur, le dispositif terminal est amené à réaliser les étapes réalisées par le dispositif terminal selon la revendication 7 ; et
dans lequel le système comprend en outre le premier dispositif réseau selon la revendication 14.

16. Programme informatique dans lequel, lorsque le programme informatique est exécuté par le processeur (1401) du premier dispositif réseau (1400) selon la revendication 14, le premier dispositif réseau est amené à réaliser le procédé selon l'une quelconque des revendications 1 à 6.

17. Support de stockage lisible par ordinateur sur lequel est stocké le programme informatique selon la revendication 16.
